(19) Europäisches Patentamt
European Patent Office
Office européen des brevets

(11) EP 4 570 868 B1

(12) EUROPEAN PATENT SPECIFICATION

(45) Date of publication and mention of the grant of the patent:
**17.06.2026 Bulletin 2026/25**

(21) Application number: **23216265.1**

(22) Date of filing: **13.12.2023**

(51) International Patent Classification (IPC):
***C09D 11/101*** *(2014.01)* ***C07F 9/53*** *(2006.01)*
***C07F 9/32*** *(2006.01)*

(52) Cooperative Patent Classification (CPC):
**C09D 11/101;** C07F 9/3252; C07F 9/5337

# (54) UV CURABLE INKJET INKS

UV-HÄRTBARE TINTENSTRAHLTINTEN

ENCRES POUR JET D'ENCRE DURCISSABLES PAR UV

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**18.06.2025 Bulletin 2025/25**

(73) Proprietor: **AGFA NV**
**2640 Mortsel (BE)**

(72) Inventors:
- **LOCCUFIER, Johan**
  **2640 Mortsel (BE)**
- **HUYSECOM, Luc**
  **2640 Mortsel (BE)**

(74) Representative: **Strijckers, Hans Louis P.**
**AGFA NV**
**Intellectual Property Department**
**Septestraat 27**
**2640 Mortsel (BE)**

(56) References cited:
**EP-A1- 3 656 824** **WO-A1-2022/106099**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 570 868 B1

## Description

### Technical Field

The present invention relates to UV curable inkjet inks containing photoinitiators including multiple acyl phosphine oxide moieties.

### Background Art

State of the art UV curable inkjet technology is based on LED curing, operating for the majority of the printing systems at 395 nm. The number of industrially available photoinitiators suitable for curing at such wavelength is rather limited.

A combination of thioxanthones and amine-based co-initiators gives high curing speed, but results in considerable yellowing of the cured layers, making it fit for use in many CMYK printing applications, but not for varnishes and white inks, and sometimes also not for cyan and magenta inks.

Acyl phosphine oxides have found to be very suitable for 395 nm LED curing without these photo-yellowing problems. However, the number of industrially available acyl phosphine oxides is limited and there are increasing concerns on their toxicology. The applicability of bis-acyl phosphine oxides is often limited by their solubility in UV curable formulations, leading to mono-acyl phosphine oxides as particularly preferred photoinitiators for 395 nm radiation curable inkjet inks, further narrowing the options.

On top of the toxicological concerns and limitations in formulation latitude, as good as all available acyl phosphine oxide initiators are prone to migration and generate volatile degradation products, leading to smell. Especially smell is the limiting factor for a lot of large volume applications such as indoor decoration. The application scope further widens if on top the migration problem can be solved.

Over the last decade, there has been a considerable research activity in search of alternatives for the industrially available acyl phosphine oxides, targeting at solving the above-mentioned problems.

Functionalization on the mesityl fragment of acyl phosphine oxide photoinitiators as disclosed in WO 2014/051026 (FUJIFILM) , WO 2014/129213 (FUJIFILM), WO 2019/243039 (AGFA) and WO 2022/106099 (AGFA) is a potential solution to solve the problem of volatile degradation products.

WO 2019/243039 (AGFA) discloses urea and oxalyl amide functionalized acyl phosphine oxides, where additional supramolecular interactions are used to further control volatility of the degradation products.

In WO 2022/106099 (AGFA) , additional tertiary amines are integrated into the structure to further optimize the surface cure of the printed images, avoiding migratability of skin irritating acrylates. However, the use of supramolecular interactions often limits the formulation latitude which had to be controlled by additional structural elements not having any further function for radiation curing. This leads to an increase in molecular weight per photoinitiating moiety, impacting both the viscosity of the formulation and the curing speed for a same weight ratio in the formulation. For maintaining the curing speed on an acceptable level, higher amounts of the photoinitiator have to be added further impacting the viscosity. The impact on viscosity limits the applicability of the disclosed photoinitiators in ink jet applications, where viscosity of the formulation is particularly critical.

Therefore, there is still a need for UV LED curable inkjet inks exhibiting high curability at 395 nm and less toxicological concerns, while delivering cured products with minimal smell and migration problems.

### Summary of invention

Now it has been found that the above-mentioned problems for UV curable inkjet inks can be largely solved by using a photoinitiator including multiple monoacyl phosphine oxide moieties wherein the monoacyl phosphine oxide moieties are linked to each other via their acyl group (and thus not via the phosphine oxide group) and that at least 2 monoacyl phosphine oxide moieties have a chemical structure differing in the phosphine oxide part.

A bis-acyl phosphine oxide is capable of generating two radical species upon UV-exposure, but its use is often limited by the solubility in UV curable inkjet inks. The acyl phosphine oxide photoinitiator used in UV curable inkjet inks of the invention are also capable of generating at least two radical species and exhibit good solubility. The crystallization of the photoinitiator is reduced by using monoacyl phosphine oxide moieties having a chemical structure differing in the phosphine oxide part. It is believed that using chemically different monoacyl phosphine oxide moieties impedes the stacking into a crystal.

Another advantage of using the specific photoinitiators is that they allow to prepare low odor UV curable inkjet inks for indoor applications. An acyl phosphine oxide photoinitiator generates upon UV exposure two radical species: a phosphine oxide radical and an acyl radical. While the phosphine oxide radical is almost completely incorporated into the polymerizing network, this is not the case for the acyl radical. Unreacted acyl radicals usually form aldehydes, such as

mesitaldehyde, causing a bad smell of the cured product. By linking the monoacyl phosphine oxide moieties to each other via their acyl group, the molecular weight of the acyl radical increases, thus reducing the volatile degradation products of the acyl phosphine oxide photoinitiators. Another aspect is that also the probability of incorporation into the polymerizing network increases as one photoinitiator generates multiple acyl radicals that are linked to each other. The latter is beneficial for solving the migration problem.

A surprising improvement in surface curability was also observed when monoacyl phosphine oxide moieties having a chemical structure differing in the phosphine oxide part were used in the photoinitiator compared to photoinitiators having identical monoacyl phosphine oxide moieties. Acyl phosphine oxide photoinitiators generally exhibit good curability for the internal part of a polymerizable layer, but not for the surface part of the polymerizable layer leading to an undesired tackiness. The UV curable inkjet inks exhibit a surface curability that is comparable or even better than when using the monoacyl phosphine oxide photoinitiators TPO and TPO-L that are generally used in the inkjet world.

These and other objects and advantages of the present invention will become apparent from the detailed description given below.

## Description of embodiments

### Definitions

The term "alkyl" means all variants possible for each number of carbon atoms in the alkyl group, i.e. for one carbon atom: methyl, for two carbon atoms: ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

The term "substituted" in e.g. substituted alkyl group means that the alkyl group may be substituted by other atoms than the atoms normally present in such a group, i.e. carbon and hydrogen. For example, a substituted alkyl group may include a halogen atom or a thiol group, while an unsubstituted alkyl group contains only carbon and hydrogen atoms.

Unless otherwise specified a substituted alkyl group is preferably substituted by a constituent selected from the group consisting of an aryl group, a heteroaryl group, an ester group, an amide group, an ether group, a thioether group, a ketone group, an aldehyde group, a sulfoxide group, a sulfone group, a sulfonate ester group, a sulphonamide group, -Cl, -Br, -I, - OH, -SH, -CN and $-NO_2$.

Unless otherwise specified a substituted or unsubstituted alkyl group is preferably a $C_1$ to $C_6$-alkyl group.

Unless otherwise specified a substituted or unsubstituted alkenyl group is preferably a $C_2$ to $C_6$-alkenyl group.

Unless otherwise specified a substituted or unsubstituted alkynyl group is preferably a $C_2$ to $C_6$-alkynyl group.

Unless otherwise specified a substituted or unsubstituted alkoxy-group is preferably a $C_1$ to $C_6$-alkyl group, wherein a methoxy group, an ethoxy group and a propoxy group are particularly preferred.

The term aryl group means a monocyclic- or polycyclic aromatic ring structure comprising only carbon atoms in the ring structure.

Unless otherwise specified an aryl group is preferably a phenyl or a naphthyl group that may include one, two, three or more $C_1$ to $C_6$-alkyl groups, which may be substituted alkyl groups.

Unless otherwise specified a substituted aryl group is an aryl group including one or more groups selected from an aldehyde group, -Cl, -Br, -I, -OH, -SH, -CN and $-NO_2$.

The term heteroaryl group means a monocyclic- or polycyclic aromatic ring comprising carbon atoms and one or more heteroatoms in the ring structure, preferably 1 to 4 heteroatoms, independently selected from nitrogen, oxygen, selenium and sulphur. Preferably, a heteroaryl group is a monocyclic ring, and more preferably a heteroaryl group is a five- or six-membered ring substituted by one, two or three oxygen atoms, nitrogen atoms, sulphur atoms, selenium atoms or combinations thereof.

Preferred examples of heteroaryl groups include, but are not limited to, pyridinyl, pyridazinyl, pyrimidyl, pyrazyl, quinolyl, triazinyl, pyrrolyl, pyrazolyl, imidazolyl, (1,2,3,)- and (1,2,4)-triazolyl, pyrazinyl, pyrimidinyl, tetrazolyl, furyl, thienyl, isoxazolyl, thiazolyl, isoxazolyl, and oxazolyl.

### UV Curable Inkjet Inks

UV curable inkjet inks in accordance with the invention contain a free radical polymerizable compound and a photoinitiator including 2 to 6, preferably 2 to 4, more preferably 2 or 3 and most preferably 2 monoacyl phosphine oxide moieties, wherein the monoacyl phosphine oxide moieties are linked to each other via their acyl group and wherein at least 2 monoacyl phosphine oxide moieties have a chemical structure differing in the phosphine oxide part.

The photoinitiator preferably has a structure according to Formula (1):

$$[A]_y\text{-L - }[B]_x \qquad \text{Formula (1),}$$

wherein

x and y independently represent an integer from 1 to 3;
L represents an x+y-valent linking group having no more than 25 carbon atoms;
A represents an acyl phosphine oxide moiety according to Formula (1-1):

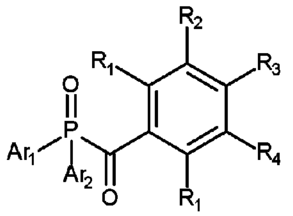
Formula (1-1),

wherein $Ar_1$ and $Ar_2$ independently represent a substituted or unsubstituted aryl or heteroaryl group; $R_1$ is selected from the group consisting of a substituted or unsubstituted alkyl group, a substituted or unsubstituted aryl group and a substituted or unsubstituted alkoxy-group; $R_2$, $R_3$ and $R_4$ are independently selected from the group consisting of the coupling position to L or a substituent selected from the group consisting of a hydrogen, a substituted or unsubstituted alkyl group, a substituted or unsubstituted alkenyl group, a substituted or unsubstituted alkynyl a group, a substituted or unsubstituted alkoxy group and a substituted or unsubstituted aryl or heteroaryl group;
B represents an acyl phosphine oxide moiety according to Formula (1-2):

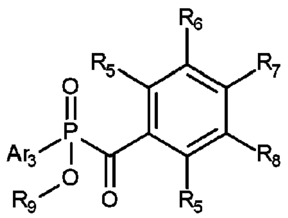
Formula (1-2),

wherein $Ar_3$ represent a substituted or unsubstituted aryl or heteroaryl group; $R_5$ is selected from the group consisting of a substituted or unsubstituted alkyl group, a substituted or unsubstituted aryl group and a substituted or unsubstituted alkoxy-group; $R_6$, $R_7$ and $R_8$ are independently selected from the group consisting of the coupling position to L or a substituent selected from the group consisting of a hydrogen, a substituted or unsubstituted alkyl group, a substituted or unsubstituted alkenyl group, a substituted or unsubstituted alkynyl a group, a substituted or unsubstituted alkoxy group and a substituted or unsubstituted aryl or heteroaryl group; $R_9$ represents a substituted or unsubstituted alkyl group, a substituted or unsubstituted alkenyl group, a substituted or unsubstituted alkynyl a group and a substituted or unsubstituted aryl or heteroaryl group.

In a preferred embodiment, x and y independently represent an integer from 1 to 2 and in an even more preferred embodiment x and y are both equal to 1. With x and y equal to 1, a further improved solubility of the photoinitiator in UV curable inkjet inks is observed.
In a preferred embodiment, the ratio of molecular weight between A and B on the one hand and L on the other hand meets the following equation (Eq-1):

$$(x * Mw(A) + y * Mw(B))/ Mw(L) \geq 1.5 \quad (Eq-1).$$

In a more preferred embodiment, this ratio is 2 or larger. In the most preferred embodiment this ratio is 2.5 or larger. When the photoinitiator complies with these equations, excellent formulation latitude is obtained since low impact on viscosity and good solubility in the radiation curable inkjet ink is observed.
In a preferred embodiment, the linking group L comprises no more than 15 carbon atoms. In the most preferred embodiment L comprises no more than 12 carbon atoms. With such linking groups, again excellent formulation latitude is obtained since low impact on viscosity and good solubility in the radiation curable inkjet ink is observed.
The molecular weight of the photoinitiator according to Formula (1) is preferably between 700 and 2,500 g/mole, more preferably between 750 and 2,000 g/mole, and most preferably between 800 and 1,500 g/mole. In these ranges, the

photoinitiator according to Formula (1) can be suitably used in conventional amounts in UV curable inkjet inks without impacting the viscosity of the ink too much.

In a preferred embodiment, L comprises at least one ether function or a tertiary amine group. Surprisingly a higher curing sensitivity was generally observed that when the linking group L contained at least one ether function or a tertiary amine group.

In a preferred embodiment, the linking group L may be composed of one or more fragments selected from the group consisting of $-CH_2-$ , -CHMe- , - $CMe_2-$ , $-O-CH_2-CH_2-$ , $-CH_2-O-CH_2-$ , $-O-CH_2-CH_2-O-$ , and $-C(=O)-CH_2-CH_2-C(=O)-$ ; wherein the fragments may occur multiple times in the linking group L.

In a preferred embodiment, A represents an acyl phosphine oxide moiety with $Ar_1$ and $Ar_2$ representing a phenyl group, $R_1$ and $R_3$ representing a methyl group, $R_2$ representing hydrogen, and $R_4$ representing the coupling position to L ; and/or B represents an acyl phosphine oxide moiety with $Ar_3$ representing a phenyl group, $R_5$ and $R_7$ representing a methyl group; $R_6$ representing hydrogen, $R_8$ representing the coupling position to L, and $R_9$ representing an ethyl group.

The above preferred embodiments may be combined with each other without any limitation.

In a further preferred embodiment of a UV curable inkjet ink, the photoinitiator according to Formula (1) with x and y representing the integer 1 is part of a mixture of photoinitiators used in the UV curable inkjet ink, wherein the mixture comprises the photoinitiators according to Formula (1-a), Formula (1-b), and Formula (1-c) with the groups A, B and L as defined as for the photoinitiator according to Formula (1), wherein Formula (1-a) is A-L-B, Formula (1-b) is A-L-A, and Formula (1-c) is B-L-B. The mixture preferably comprises between 20 and 80 mol% of the photoinitiator according to Formula (1-a), more preferably the mixture contains at least 30 mol% and most preferably at least 40 mol% of the photoinitiator according to Formula (1-a). In these ranges, an improved surface cure of inkjet printed images has been observed compared to A-L-A or B-L-B.

In another preferred embodiment of a UV curable inkjet ink according to the invention, the photoinitiator is a compound according to Formula (2):

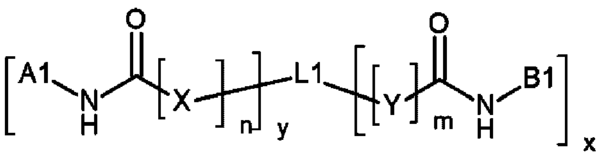

Formula (2),

wherein

- n and m independently represent 0 or 1;
- x and y independently represent an integer from 1 to 3;
- L1 represents an (x+y)-valent linking group having no more than 25 carbon atoms;
- X and Y independently represent O or NH;
- A1 represents an acyl phosphine oxide moiety according to Formula (2-1):

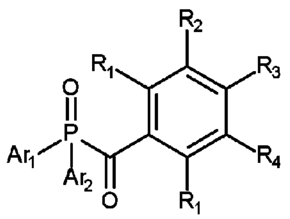

Formula (2-1),

wherein $Ar_1$ and $Ar_2$ independently represent a substituted or unsubstituted aryl or heteroaryl group; $R_1$ is selected from the group consisting of a substituted or unsubstituted alkyl group, a substituted or unsubstituted aryl group and a substituted or unsubstituted alkoxy-group; $R_2$, $R_3$ and $R_4$ are independently selected from the group consisting of the coupling position to N or a substituent selected from the group consisting of a hydrogen, a substituted or unsubstituted alkyl group, a substituted or unsubstituted alkenyl group, a substituted or unsubstituted alkynyl a group, a substituted or unsubstituted alkoxy group and a substituted or unsubstituted aryl or heteroaryl group;

B1 represents an acyl phosphine oxide moiety according to Formula (2-2):

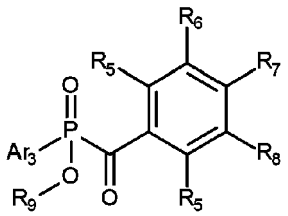

Formula (2-2),

wherein $Ar_3$ represent a substituted or unsubstituted aryl or heteroaryl group; $R_5$ is selected from the group consisting of a substituted or unsubstituted alkyl group, a substituted or unsubstituted aryl group and a substituted or unsubstituted alkoxy-group; $R_6$, $R_7$ and $R_8$ are independently selected from the group consisting of the coupling position to N or a substituent selected from the group consisting of a hydrogen, a substituted or unsubstituted alkyl group, a substituted or unsubstituted alkenyl group, a substituted or unsubstituted alkynyl a group, a substituted or unsubstituted alkoxy group and a substituted or unsubstituted aryl or heteroaryl group; $R_9$ represents a substituted or unsubstituted alkyl group, a substituted or unsubstituted alkenyl group, a substituted or unsubstituted alkynyl a group and a substituted or unsubstituted aryl or heteroaryl group.

In a preferred embodiment, n and m are 0 and x and y independently represent an integer from 1 to 2. In the most preferred embodiment, n and m are 0 and x and y are equal to 1. With x and y equal to 1, an improved solubility in the UV curable inkjet ink is observed.

In a preferred embodiment, the linking group L1 comprises no more than 15 carbon atoms. In the most preferred embodiment L1 comprises no more than 12 carbon atoms. With such linking groups, excellent formulation latitude is obtained since low impact on viscosity and good solubility in the radiation curable inkjet ink is observed.

In a preferred embodiment, L1 comprises at least one ether function or a tertiary amine group. Surprisingly a higher curing sensitivity was generally observed that when the linking group L contained at least one ether function or a tertiary amine group.

In a preferred embodiment, the linking group L1 may be composed of one or more fragments selected from the group consisting of $-CH_2-$ , -CHMe- , - $CMe_2-$ , $-O-CH_2-CH_2-$ , $-CH_2-O-CH_2-$ , $-O-CH_2-CH_2-O-$ , and $-C(=O)-CH_2-CH_2-C(=O)-$ ; wherein the fragments may occur multiple times in the linking group L1.

In a preferred embodiment, A represents an acyl phosphine oxide moiety with $Ar_1$ and $Ar_2$ representing a phenyl group, $R_1$ and $R_3$ representing a methyl group, $R_2$ representing hydrogen, and $R_4$ representing the coupling position to N; and/or B represents an acyl phosphine oxide moiety with $Ar_3$ representing a phenyl group, $R_5$ and $R_7$ representing a methyl group; $R_6$ representing hydrogen, $R_8$ representing the coupling position to L, and $R_9$ representing an ethyl group.

The above preferred embodiments may be combined with each other without any limitation in a UV curable inkjet ink.

In a further preferred embodiment, the photoinitiator according to Formula (2) with x and y representing the integer 1 is part of a mixture of photoinitiators used in the UV curable inkjet ink, wherein the mixture comprises the photoinitiators according to Formula (2-a), Formula (2-b), and Formula (2-c) with the groups A' being A-NH-C(=O)-$(X)_n$-, B' being B-NH-C(=O)-$(Y)_m$-, and L1 as defined as for the photoinitiator according to Formula (2), wherein Formula (2-a) is A'-L1-B', Formula (2-b) is A'-L1-A', and Formula (2-c) is B' -L1-B'. The mixture preferably comprises between 20 and 80 mol% of the photoinitiator according to Formula (2-a), more preferably the mixture contains at least 30 mol% and most preferably at least 40 mol% of the photoinitiator according to Formula (2-a). In these ranges, an improved surface cure of inkjet printed images has been observed compared to using only A'-L1-A' or B'-L1-B'.

Preferred examples of the photoinitiators used in the UV curable inkjet inks according to the invention are given below in Table 1 without being limited thereto.

**Table 1**

| | |
|---|---|
| 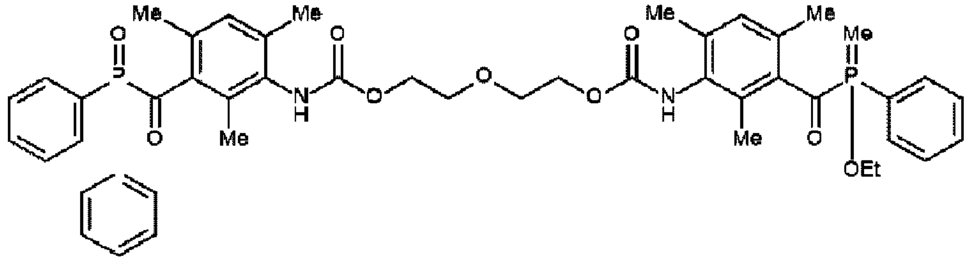 | ASYM-1 |

(continued)

| | |
|---|---|
| 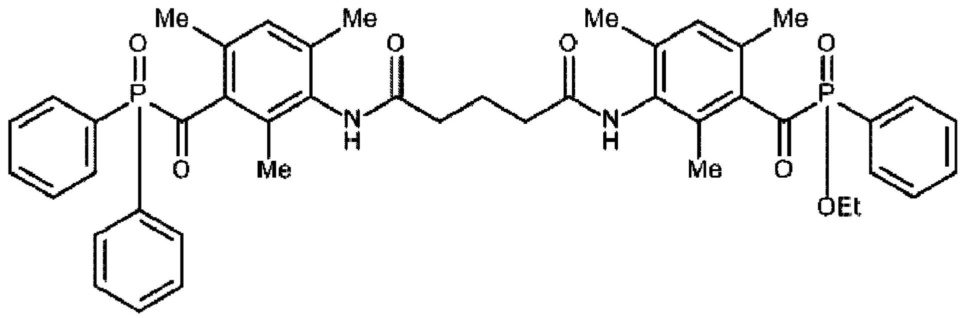 | ASYM-2 |
| 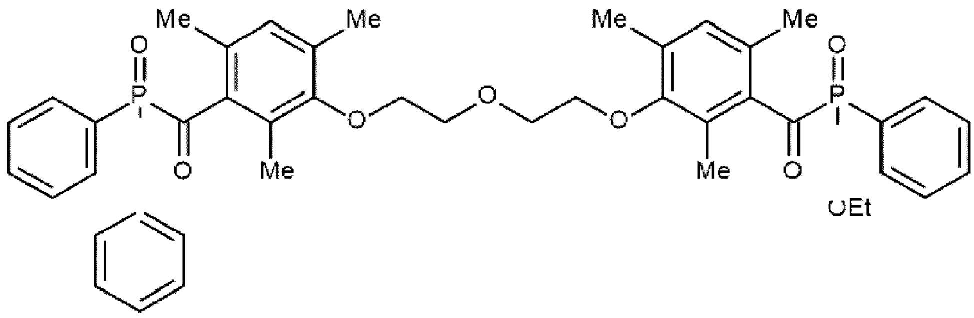 | ASYM-3 |
| 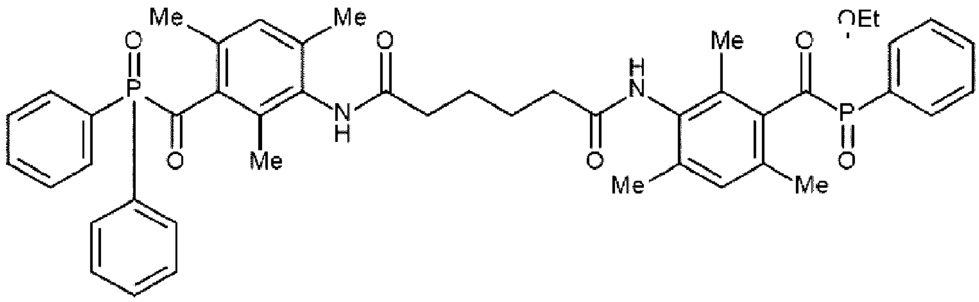 | ASYM-4 |
| 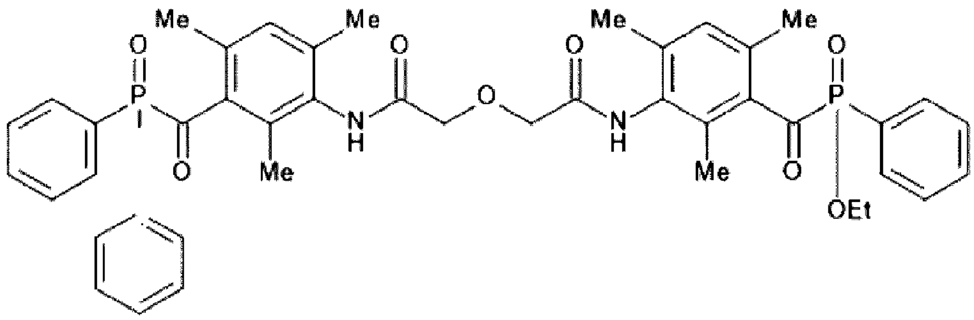 | ASYM-5 |
| 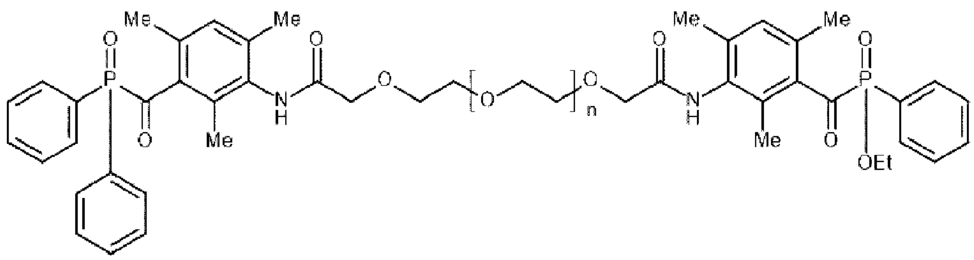<br>n=2 on average | ASYM-6 |

(continued)

| | |
|---|---|
| 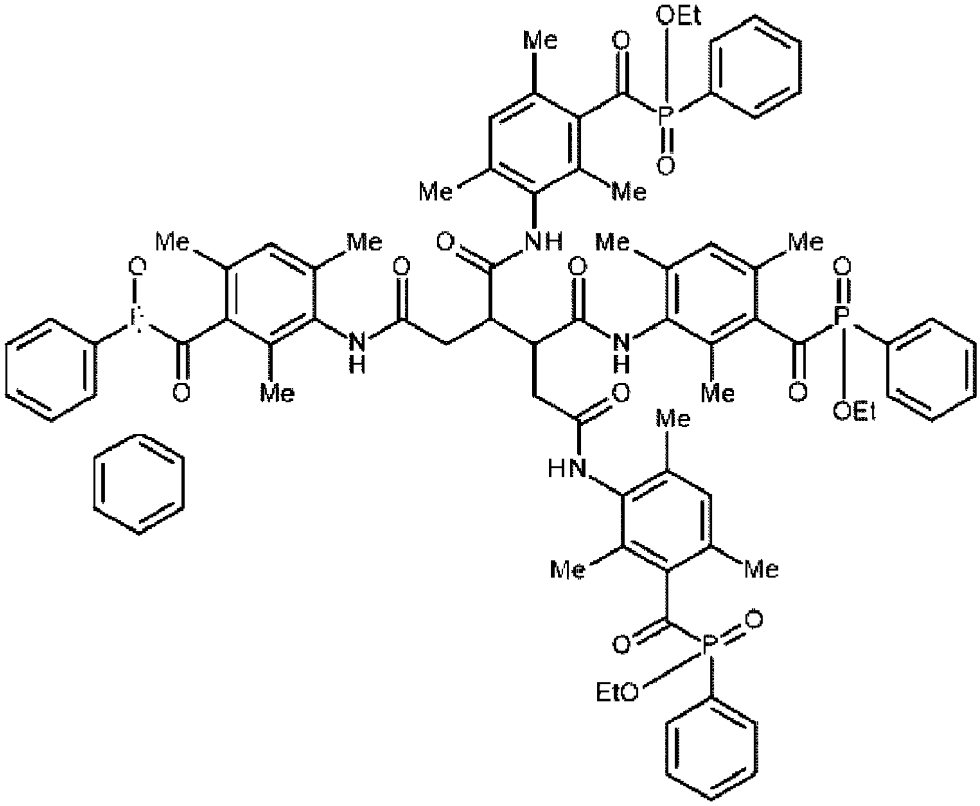 | ASYM-7 |
| 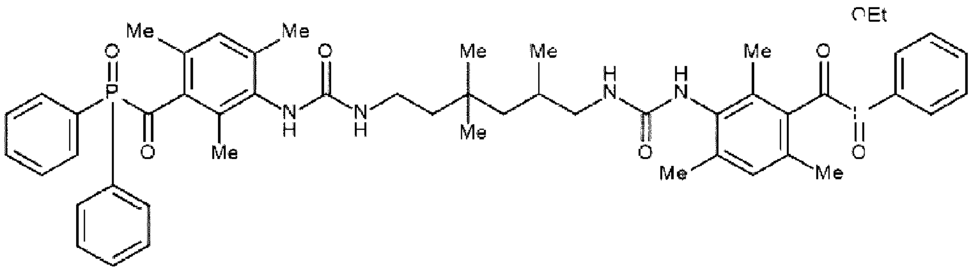 | ASYM-8 |
| 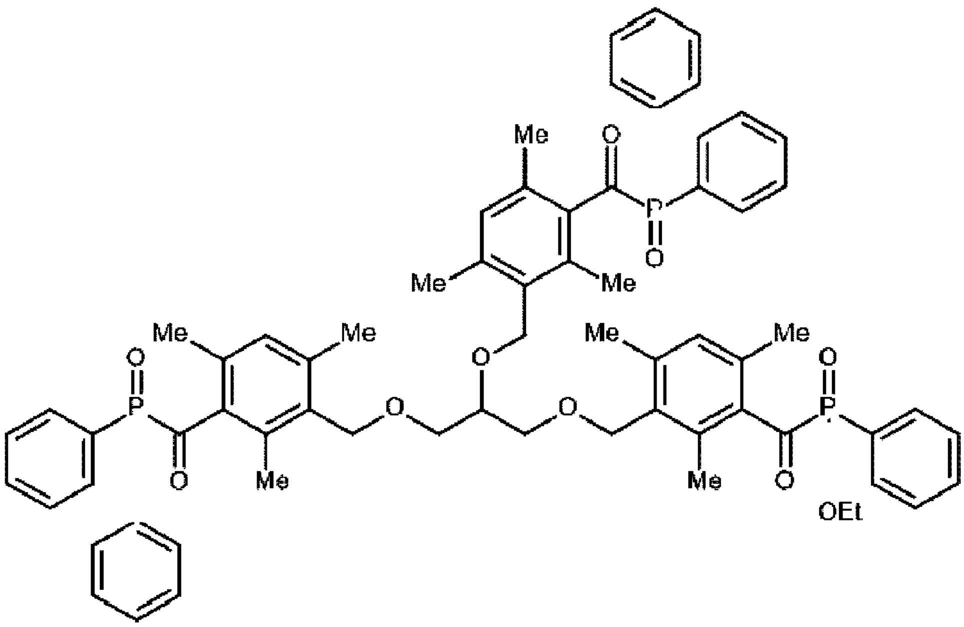 | ASYM-9 |

(continued)

| | |
|---|---|
| 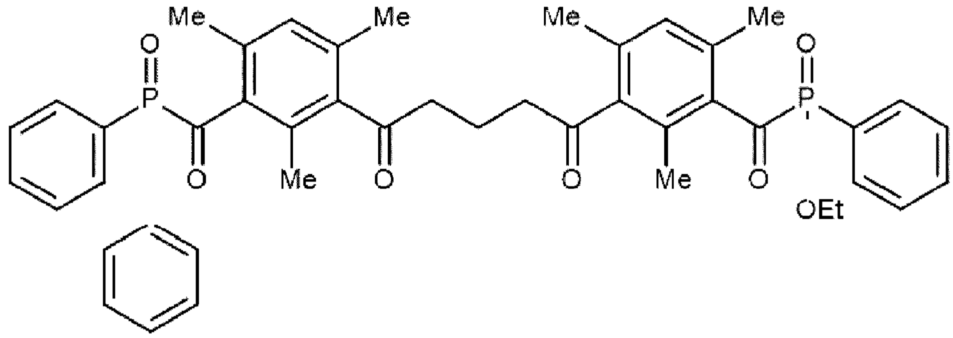 | ASYM-10 |
| 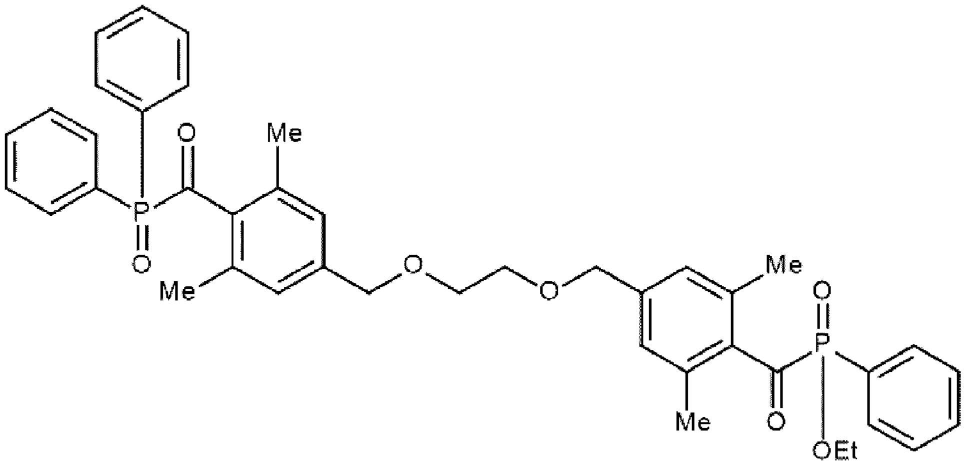 | ASYM-11 |
| 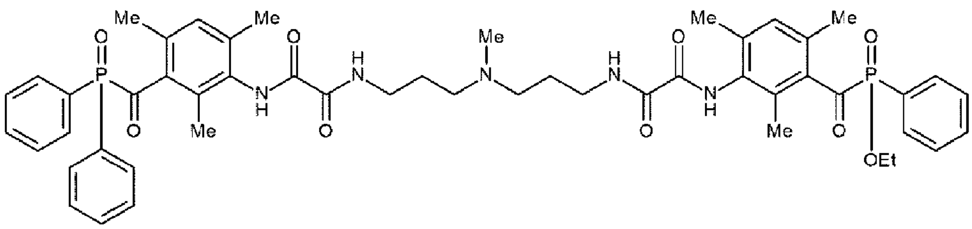 | ASYM-12 |
| 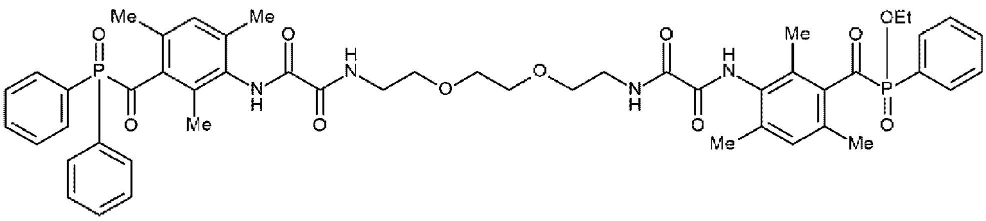 | ASYM-13 |

In another preferred embodiment the photoinitiator used in UV curable inkjet inks in accordance with the invention includes 2 to 6, preferably 2 to 4, more preferably 2 or 3 and most preferably 2 monoacyl phosphine oxide moieties, wherein the monoacyl phosphine oxide moieties are linked to each other via their acyl group by a linking group, wherein at least 2 monoacyl phosphine oxide moieties have a chemical structure differing in the phosphine oxide part, and wherein the linking group includes a free radical polymerizable group. The free radical polymerizable group results in a polymerizable photoinitiator.

The free radical polymerizable group is preferably selected from the group consisting of an acrylate, a methacrylate, an acrylamide, a methacrylamide, a styrene group, a maleate, a fumarate, an itaconate, a vinyl ether, a vinyl ester, an allyl ether and an allyl ester. In a preferred embodiment, the free radical polymerizable group is selected from the group consisting of an acrylate and a methacrylate, an acrylate being particularly preferred.

The advantage of the linking group including a polymerizable group is that it further increases the likelihood that the acyl group containing degradation products after UV curing are integrated into the polymerized network and do not cause migration problems or bad smell.

Preferred examples of the polymerizable photoinitiators according to the present invention are given below in Table 2 without being limited thereto.

**Table 2**

| | |
|---|---|
| 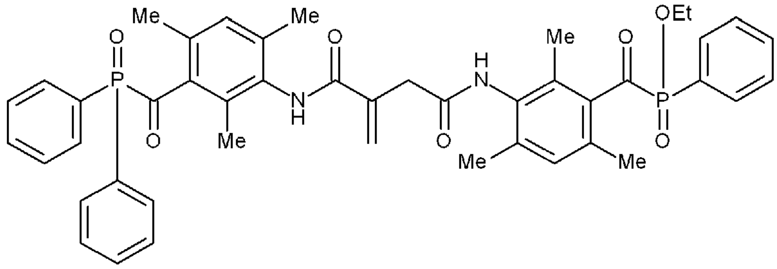 | PA-1 |
| 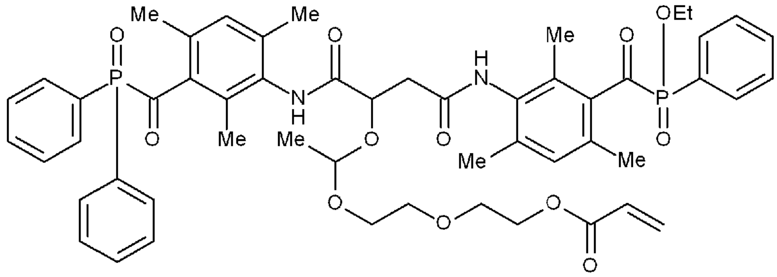 | PA-2 |
| 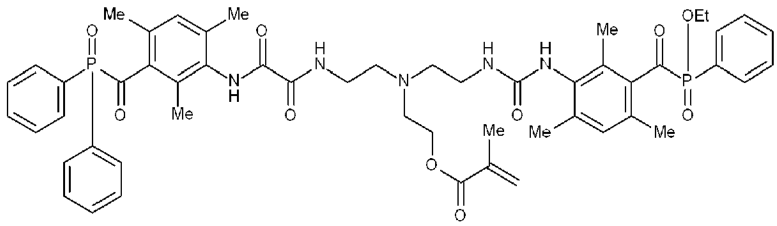 | PA-3 |
| 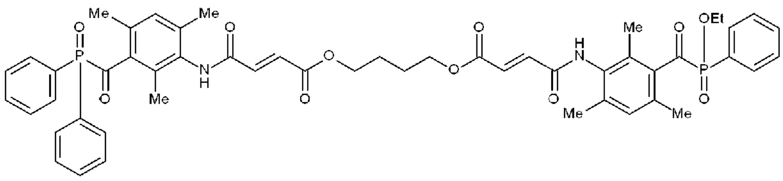 | PA-4 |

The above-described acyl phosphine oxide initiator is preferably present in an amount between 1 and 25 wt%, more preferably 2 and 18 wt%, most preferably between 3 and 15 wt%, with the wt% based on the total weight of the UV curable inkjet ink.

The above-described acyl phosphine oxide initiator can be added as a pure compound, but is preferably added as a photoinitiator mixture. The manufacturing of the above-described acyl phosphine oxide initiator A-L-B or A'-L1-B' results in a photoinitiator mixture as described above comprising A-L-B, A-L-A and B-L-B, respectively in a photoinitiator mixture as described above comprising A'-L1-B', A'-L1-A' or B'-L1-B'. The photoinitiator mixture can be used as such in the UV curable inkjet ink of the invention without any isolation of the acyl phosphine oxide initiator A-L-B or A'-L1-B' through, for instance, chromatographic techniques. The main advantage of using the photoinitiator mixture in the UV curable inkjet ink is an economical benefit as no expensive purification or isolation techniques are needed. The examples show that there is no disadvantage on curability or smell when a substantial amount of the acyl phosphine oxide initiator A-L-B or A'-L1-B', preferably when the molar ratio of A over B or A' over B' is between 3:1 to 1:3, preferably between 2:1 to 1:2; more preferably between 1.1:1 to 1:1.1 and most preferably in a molar ratio of 1.

A preferred manufacturing method for making such a photoinitiator mixture includes the steps of: a) mixing 2 monoacyl phosphine oxide compounds having a chemical structure differing in the phosphine oxide part and each having attached to the acyl part a primary amine group or a group according to Formula (M-1) in a molar ratio of 3:1 to 1:3, preferably in a molar ratio of 2:1 to 1:2; more preferably in a molar ratio of 1.1:1 to 1:1.1 and most preferably in a molar ratio of 1:1; and b) reacting the 2 monoacyl phosphine oxide compounds with a compound linking the 2 monoacyl phosphine oxide compounds via the primary amine group or the group according to Formula (M-1);

wherein the group according to Formula (M-1) is:

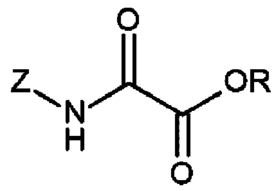

Formula (M-1),

wherein Z represents a carbon atom of an aromatic ring in the acyl part, and R represents a $C_1$ to $C_6$-alkyl group, preferably an ethyl group. Preferred monoacyl phosphine oxide compounds having attached to the acyl part a primary amine group are ethyl P-(3-amino-2,4,6-trimethylbenzoyl)-P-phenylphosphinate and 3-[(diphenylphosphinyl)carbonyl]-2,4,6-trimethylbenzenamine.

The UV curable inkjet ink may be a colourless UV curable inkjet ink, but preferably it contains a colorant. Colourless UV curable inkjet inks may be used, for example, as a primer to improve adhesion to substrate, or as a varnish to improve the glossiness of an image.

The UV curable inkjet ink may include other ingredients as desired, such as surfactants, dispersants, dispersion synergists, stabilizers, UV absorbers and the like.

For having a good ejecting ability, the viscosity of the UV curable inkjet ink at the jetting temperature is preferably smaller than 30.0 mPa.s, more preferably smaller than 20.0 mPa.s, most preferably between 5.0 and 16.0 mPa.s at a shear rate of 1000 $s^{-1}$ and at a jetting temperature between 30 and 70°C, preferably at a temperature of 45°C.

The surface tension of the UV curable inkjet ink is preferably in the range of 20 mN/m to 35 mN/m at 25°C, more preferably in the range of about 22 mN/m to about 30 mN/m at 25°C. In these ranges, good ink spreading is obtained on a wide range of substrates.

A single UV curable inkjet ink can be used, but preferably a UV curable inkjet ink set containing a plurality of colored UV curable inkjet inks in accordance with the invention is used.

For printing multi-colour images, the UV curable inkjet ink is preferably part of a UV curable inkjet ink set containing at least three but most preferably at least four UV curable inkjet inks in accordance with the invention. The inkjet ink set is preferably a UV curable CMYK or CRYK inkjet ink set, preferably further including a UV curable white inkjet ink for enhancing colour vibrancy. This inkjet ink set may also be extended with extra inks such as violet, green, red, blue, and/or orange to further enlarge the colour gamut of the image.

The UV curable inkjet ink set may also be extended by the combination of full density inkjet inks with light density inkjet inks. The combination of dark and light colour inks and/or black and grey inks improves the image quality by a lowered graininess.

The UV curable inkjet ink set may also include one or more colourless UV curable inkjet inks for use as primer and/or varnish.

In a particularly preferred embodiment of a UV curable inkjet ink set, the ink set in accordance with the invention includes:

- a cyan UV curable inkjet ink containing a beta-copper phthalocyanine pigment;
- a red UV curable inkjet ink containing a pigment selected from the group consisting of C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272 and mixed crystals thereof;
- a yellow UV curable inkjet ink containing a pigment selected from C.I. Pigment Yellow 74 C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 and mixed crystals thereof; and
- a black UV curable inkjet ink containing a carbon black pigment;

preferably complemented by a white inkjet ink and/or a colourless inkjet ink. It was found that such an ink set was especially useful for reproducing wood patterns with minimal ink consumption in addition to improved low odor and surface cure properties. Low odor is essential when manufacturing indoor decorative articles for rooms and vehicles, such as furniture, wallpaper, doors, natural leather articles, textile fabrics and decorative panels such as flooring laminate panels.

When more vibrant colours are desired, the red UV curable inkjet ink is replaced by a magenta UV curable inkjet

ink containing a pigment selected from the group consisting of C.I. Pigment Violet 19 and mixed crystals thereof.

Free Radical Polymerizable Compounds

There is no limitation on the type of free radical polymerizable compounds used in the UV curable inkjet inks of the invention. The free radical polymerizable chemistry may be a (meth)acrylate based polymerizable chemistry, but may also be a thiol-ene and/or thiol-yne polymerizable chemistry. As water and organic solvents may be present, it may also be a polymerizable polymeric particle, such as a polymerizable latex.

In a preferred embodiment of the UV curable inkjet inks in accordance with the invention, the UV curable inkjet ink includes one or more free radical polymerizable monomers and/or oligomers.

Any monomer or oligomer capable of free radical polymerization may be used as free radical polymerizable compound. The polymerizable compounds may be any monomer and/or oligomer found in the Polymer Handbook Vol 1 + 2, 4th edition, edited by J. BRANDRUP et al., Wiley-Interscience, 1999. A combination of monomers and oligomers may also be used. The monomers and oligomers may possess different degrees of functionality, and a mixture including combinations of mono-, di-, tri-and higher functionality monomers and oligomers may be used.

A monofunctional polymerizable compound is generally used for enhancing the flexibility of a cured layer, whereas a polyfunctional polymerizable compound is used for enhancing scratch resistance of the cured layer.

A monofunctional polymerizable compound contains a single free radical polymerizable group selected from the group consisting of an acrylate, a methacrylate, an acrylamide, a methacrylamide, a styrene group, a maleate, a fumarate, an itaconate, a vinyl ether, a vinyl ester, an allyl ether and an allyl ester.

A polyfunctional polymerizable compound contains two, three or more free radical polymerizable groups selected from the group consisting of an acrylate, a methacrylate, an acrylamide, a methacrylamide, a styrene group, a maleate, a fumarate, an itaconate, a vinyl ether, a vinyl ester, an allyl ether and an allyl ester.

In a preferred embodiment, the monofunctional polymerizable compounds are selected from acrylic acid, methacrylic acid, maleic acid (or there salts), maleic anhydride, alkyl(meth)acrylates (linear, branched and cycloalkyl) such as methyl(meth)acrylate, n-butyl(meth)acrylate, tert-butyl(meth)acrylate, cyclohexyl(meth)acrylate, and 2-ethylhexyl(meth)acrylate; aryl(meth)acrylates such as benzyl(meth)acrylate, and phenyl(meth)acrylate;

hydroxyalkyl(meth)acrylates such as hydroxyethyl(meth)acrylate, and
hydroxypropyl(meth)acrylate; (meth)acrylates with other types of functionalities (e.g. oxiranes, amino, fluoro, polyethylene oxide, phosphate substituted) such as glycidyl (meth)acrylate,
dimethylaminoethyl(meth)acrylate, trifluoroethyl acrylate, methoxypolyethyleneglycol (meth)acrylate, and tripropyleneglycol (meth)acrylate phosphate; allyl derivatives such as allyl glycidyl ether;
styrenics such as styrene, 4-methylstyrene, 4-hydroxystyrene, 4-acetostyrene, and styrenesulfonic acid; (meth) acrylonitrile;
(meth)acrylamides (including N-mono and N,N-disubstituted) such as N-benzyl (meth)acrylamide; maleimides such as N-phenyl maleimide; vinyl derivatives such as vinylcaprolactam, vinylpyrrolidone, vinylimidazole, vinylnapthalene, and vinyl halides; vinylethers such as vinylmethyl ether;
vinylesters of carboxylic acids such as vinylacetate, vinylbutyrate, and vinyl benzoate.

In a more preferred embodiment, the monofunctional polymerizable compounds are selected from monoacrylates and vinyllactams, such as N-vinylcaprolactam. Particularly preferred monofunctional polymerizable compounds are selected from the group consisting of isoamyl acrylate, stearyl acrylate, lauryl acrylate, octyl acrylate, decyl acrylate, isoamyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, vinyl ether acrylate, 2-acryloyloxyethylsuccinic acid, 2-acryloyxyethylphthalic acid, 2-acryloxyethyl-2-hydroxyethyl-phthalic acid, lactone modified flexible acrylate, t-butylcyclohexyl acrylate, caprolactone acrylate, cyclic trimethylolpropane formal acrylate, cyclic trimethylolpropane formal acrylate, ethoxylated nonyl phenol acrylate, isodecyl acrylate, isooctyl acrylate, octyldecyl acrylate, alkoxylated phenol acrylate, tridecyl acrylate and acryloylmorpholine

In a preferred embodiment, the monofunctional polymerizable compound includes a N-vinyllactam, such as N-vinylcaprolactam. Another particularly preferred monomer is vinyl methyl oxazolidinone, available as VMOX from BASF. The monomers N-vinylcaprolactam and vinyl methyl oxazolidinone are preferred because they provide good ink curability and adhesion of a cured film to a recording medium.

Preferred polyfunctional acrylates include triethylene glycol diacrylate, tetraethylene glycol diacrylate, polyethylene glycol diacrylate, dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethyloltricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerythritol tetraacrylate, pentaerythritolethoxy tetraacrylate, dipentaerythritol hexaacrylate, ditrimethylolpropane tetraacrylate, glycerolpropoxy triacrylate, and caprolactam modified dipentaerythritol hexaacrylate

Other suitable difunctional acrylates include alkoxylated cyclohexanone dimethanol diacrylate, alkoxylated hexanediol diacrylate, dioxane glycol diacrylate, cyclohexane dimethanol diacrylate, diethylene glycol diacrylate and neopentyl glycol diacrylate.

Other polyfunctional acrylates include propoxylated glycerine triacrylate and propoxylated trimethylolpropane triacrylate, di-trimethylolpropane tetraacrylate, dipentaerythritol pentaacrylate, ethoxylated pentaerythritol tetraacrylate, methoxylated glycol acrylates and acrylate esters

Preferred polyfunctional acrylates include dipropylene glycol diacrylate, tripropylene glycol diacrylate, 1,6-hexanediol diacrylate, cyclohexanone dimethanol diacrylate, polyethyleneglycol 200 diacrylate, 3-methyl 1,5-pentanediol diacrylate, pentaerythritol tetraacrylate, trimethylolpropane triacrylate and dipentaerythritol pentaacrylate.

The polyfunctional polymerizable compound may have two different polymerizable groups, such as a vinylether group and an acrylate group. Preferred vinylether acrylates are those disclosed in US 6310115 (AGFA). A particularly preferred compound is 2- (2'-vinyloxyethoxy)ethyl acrylate (VEEA). Other suitable vinylether acrylates are those disclosed in columns 3 and 4 of US 67679890 B (NIPPON SHOKUBAI).

The use of polyfunctional polymerizable compound may have two different polymerizable groups, such as a vinylether group and an acrylate group, allows to manufacture a low migration UV curable inkjet ink for inkjet printing food packaging and toys. A preferred UV curable inkjet ink for inkjet printing of food packaging materials comprises the above-described photoinitiator or photoinitiator mixture and a polymerizable composition comprising of: a) 25 - 100 wt% of one or more polymerizable compounds A having at least one acrylate group and at least one second polymerizable group selected from the group consisting of a vinylether group, an allylether group and an allylester group; b) 0 - 55 wt% of one or more polymerizable compounds B selected from the group consisting of monofunctional acrylates and difunctional acrylates; and c) 0 - 55 wt% of one or more polymerizable compounds C selected from the group consisting of trifunctional acrylates, tetrafunctional acrylates, pentafunctional acrylates and hexafunctional acrylates, with the proviso that if the weight percentage of compounds B > 24 wt%, then the weight percentage of compounds C > 1 wt%;
and wherein all weight percentages of A, B and C are based upon the total weight of the polymerizable composition of the UV curable inkjet ink.

Instead of monofunctional or polyfunctional acrylates, also their methacrylate analogues may be used. For certain applications preferably no acrylates are employed. For example, when the substrate is a textile that is worn directly on the human skin as using acrylates may give rise to skin sensitization.

Another preferred alternative free radical curing chemistry is the so-called thiol-ene and thiol-yne chemistry. In such a chemistry, a combination of at least one polyfunctional thiol compound and at least one polyfunctional polymerizable compound is used. The polyfunctional polymerizable compound is preferably a polyfunctional monomer or oligomer having a plurality of polymerizable groups selected from a group consisting of a vinyl group, an acrylamide group, a methacrylamide group, a vinyl carbonate group, a vinyl ether group, a vinyl ester group, a vinyl carbamate group, an allyl ether groups, an allyl ester group and an alkyne group. Particularly preferred are polymerizable compounds including allyl ether groups, vinyl carbonate groups and alkyne groups.

Synthesis of such monomers is disclosed in the relevant literature, for example in HURD, Charles D.. Vinylation and the Formation of Acylals. Journal Am. Chem.Soc. 1956, vol.78, no.1, p.104_106. ; LOBELL, M., et al. Synthesis of hydroxycarboxylic acid vinyl esters. MP Synthesis. 1994, vol.4, p.375-377. ; LEE, T. Y., et al. Synthesis, Initiation, and Polymerization of Photoinitiating Monomer. Macromolecules. 2005, vol.38, no.18, p.7529-7531. ; ATTA, A.M., et al. New vinyl ester resins based on rosin for coating applications. React. Funct. Polym.. 2006, vol.66, p.1596-1608. ; WO 01/00634 A (WRIGHT CHEM CORP) ; and ROHR, Markus, et al. Solvent-free ruthenium-catalysed vinylcarbamate synthesis from phenylacetylene and diethylamine in 'supercritical' carbon dioxide. Green Chemistry. 2001, vol.3, p.123-125.

Preferred polymerizable oligomers and polymers are urethanes, polyesters, polyethers, polycarbonates, polycarbamates, polyureas and straight-chain oligomers having the following polymerizable groups: acrylate, methacrylate, vinyl, acrylamide, methacrylamide, vinyl carbonate, vinyl ether, vinylester- vinyl carbamate groups, as well as their corresponding alkene and alkyne compounds.

Particularly preferred monomers are selected from the group consisting of di- or oligofunctional allylethers, di- or oligofunctional allyl esters, di- or oligofunctional vinyl ethers, di- or oligofunctional vinyl esters and di- or oligofunctional norbornene derivatives. Typical allyl ethers can be selected from pentaerythritol tetraallyl ether, glycerol triallyl ether, 1,6-hexane diol diallyl ether, cyclohexane dimethanol diallyl ether, trimethylolpropane triallyl ether, dipentaerythritol hexaallyl ether and ethoxylated and propoxylated derivatives thereof. Typical vinylethers can be selected from pentaerythritol tetravinyl ether, glycerol trivinyl ether, 1,6-hexane diol divinyl ether, cyclohexane dimethanol divinyl ether, trimethylolpropane trivinyl ether, dipentaerythritol hexavinyl ether and ethoxylated and propoxylated derivatives thereof. Typical allyl esters can be selected from adipic acid diallyl ester, terephtalic acid diallyl ester, trimellitic acid triallyl ester, pyromellitic acid tetraallyl ester, citric acid triallyl ester and glutaric acid diallyl ester. Typical vinyl esters can be selected from adipic acid divinyl ester, terephtalic acid divinyl ester, trimellitic acid trivinyl ester, pyromellitic acid tetravinyl ester, citric acid trivinyl ester and glutaric acid divinyl ester.

Other Photoinitiators and Co-initiators

The UV curable inkjet ink may include other photoinitiators, which may be a Norrish type I initiator and/or a Norrish type II initiator. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or a co-initiator.

Suitable Norrish type I and II photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

The acyl phosphine oxide photoinitiator in the UV curable inkjet ink may be combined with a photoinitiator selected from the group consisting of a thioxanthone compound, an $\alpha$-hydroxyalkylphenone compound and a carbazole compound. Such combinations may improve curing speed further.

In order to increase the photosensitivity further, the UV curable inkjet ink may additionally contain one or more co-initiators, also called polymerization synergists, for which usually amine synergists are used.

Suitable examples of amine synergists can be categorized in three groups:

1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

A UV curable inkjet ink in accordance with the invention preferably comprises a total amount of photoinitiator in an amount of 1 to 25 wt%, more preferably 2 to 20 wt%, based on the total weight of the UV curable inkjet ink.

The UV curable inkjet ink may contain other additives, such as surfactants, dispersants, dispersion synergists, stabilizers, UV absorbers, organic solvents, water and the like.

Colorants

The UV curable inkjet ink may contain a colorant. The colorants may be dyes, pigments or a combination thereof. Organic and/or inorganic pigments may be used. The colorant is preferably a pigment or a polymeric dye, most preferably an organic colour pigment. Organic colour pigments generally allow to obtain a much broader colour gamut. However, for the colours white and black, preferably inorganic pigments such as titanium dioxide respectively carbon black are used.

The pigments may be black, white, cyan, magenta, yellow, red, orange, violet, blue, green, brown, mixtures thereof, and the like. This colour pigment may be chosen from those disclosed by HERBST, Willy, et al. Industrial Organic Pigments, Production, Properties, Applications. 3rd edition. Wiley - VCH , 2004. ISBN 3527305769.

A preferred pigment for a cyan inkjet ink is a beta-copper phthalocyanine pigment, with C.I. Pigment Blue 15:3 or 15:4 being particularly preferred.

For a red inkjet ink, preferably a pigment is selected from the group consisting of C.I. Pigment Red 57/1, C.I. Pigment Red 122, C.I. Pigment Red 170, C.I. Pigment Red 175, C.I. Pigment Red 176, C.I. Pigment Red 187, C.I. Pigment Red 188, C.I. Pigment Red 207, C.I. Pigment Red 242, C.I. Pigment Red 254, C.I. Pigment Red 272 and mixed crystals thereof;

The pigment in a yellow UV curable inkjet ink is preferably selected from C.I. Pigment Yellow 74, C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 185, C.I. Pigment Yellow 194, C.I. Pigment Yellow 213, C.I. Pigment Yellow 214 and mixed crystals thereof.

The pigment in a magenta UV curable inkjet ink is preferably C.I. Pigment Violet 19 or a mixed crystal thereof.

Particular preferred violet pigments are C.I. Pigment Violet 23, 32, and 37.

Particular preferred orange pigments are C.I. Pigment Orange 5, 13, 16, 34, 40, 43, 59, 66, 67, 69, 71 and 73.

Particular preferred green pigments are C.I. Pigment Green 7 and 36.

Particular preferred brown pigments are C.I. Pigment Brown 6 and 7.

In a black UV curable inkjet ink, the pigment is preferably a carbon black pigment. Suitable black pigments include carbon blacks such as Pigment Black 7 (e.g. Carbon Black MA8® from MITSUBISHI CHEMICAL), Regal® 400R, Mogul® L, Elftex® 320 from CABOT Co., or Carbon Black FW18, Special Black 250, Special Black 350, Special Black 550, Printex® 25, Printex® 35, Printex® 55, Printex® 90, Printex® 150T from DEGUSSA. In a preferred embodiment, the carbon black pigment used is a pigment having less than 0.15% of toluene-extractable fraction using the method as described in section III, paragraph 5 of the Resolution AP(89) 1 dated 13 September 1989 published by the Council of Europe.

It is also possible to include mixtures of pigments in the inkjet ink. For example, in some inkjet ink application a neutral black inkjet ink is preferred and can be obtained, for instance, by mixing a black pigment and a cyan pigment into the ink. Also pigments may be combined to enlarge the colour gamut of an ink set. The inkjet ink set may also include one or more spot colours. Silver and gold are often desired colours for making a product more attractive by giving it an exclusive appearance.

Suitable pigments include mixed crystals of the above particular preferred pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia™ Magenta L 4540 from SUN CHEMICAL

Pigment particles in inkjet ink should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 μm, more preferably between 0.070 and 0.300 μm and particularly preferably between 0.080 and 0.200 μm. Most preferably, the numeric average pigment particle size is no larger than 0.150 μm. An average particle size smaller than 0.050 μm is less desirable for decreased lightfastness, but mainly also because very small pigment particles or individual pigment molecules thereof may still be extracted in food packaging applications.

The numeric average pigment particle size of pigment particles is best determined with a Brookhaven Instruments Particle Sizer BI90plus based upon the principle of dynamic light scattering. The ink is then diluted, for example, with ethyl acetate to a pigment concentration of 0.002 wt%. The measurement settings of the BI90plus are: 5 runs at 23°C, angle of 90°, wavelength of 635 nm and graphics = correction function.

In the case of a white inkjet ink, preferably a pigment with a refractive index greater than 1.60, preferably greater than 2.00, more preferably greater than 2.50 and most preferably greater than 2.60 is used. The white pigments may be employed singly or in combination.

Preferably titanium dioxide is used for the pigment with a refractive index greater than 1.60. Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention. It is preferred to make the most possible use of characteristics and to make selections according to the use thereof. The use of the anatase type having a low density and a small particle size can achieve superior dispersion stability, ink storage stability and ejectability. At least two different crystalline forms may be used in combination. The combined use of the anatase type and the rutile type which exhibits a high colouring power can reduce the total amount of titanium oxide, leading to improved storage stability and ejection performance of ink.

For surface treatment of the titanium oxide, an aqueous treatment or a gas phase treatment may be applied, and an alumina-silica treating agent is usually employed. Alumina treated- or alumina-silica treated-titanium oxide are employable, preferably in combination with an organic surface treatment.

The numeric average particle diameter of the titanium oxide or other white pigments is preferably from 50 to 500 nm, more preferably from 150 to 400 nm, and most preferably from 200 to 300 nm for an optimal compromise between hiding power and dispersion stability. Sufficient hiding power cannot be obtained when the average diameter is less than 50 nm, and the storage ability and the jet-out suitability of the ink tend to be degraded when the average diameter exceeds 500 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern™ nano-S available from Goffin-Meyvis. A sample may be prepared by addition of one drop of ink to a cuvette containing 1.5 mL ethyl acetate and mixing it until a homogenous sample is obtained. The measured particle size is the average value of 3 consecutive measurements consisting of 6 runs of 20 seconds.

Generally, pigments are stabilized in the dispersion medium by dispersing agents, such as polymeric dispersants or surfactants. However, the surface of the pigments can be modified to obtain so-called "self-dispersible" or "self-dispersing" pigments, i.e. pigments that are dispersible in the dispersion medium without dispersants.

The pigment is preferably used in a concentrated pigment dispersion used for preparing inkjet inks in an amount of 10 to 40 wt%, more preferably an amount of 15 to 30 wt% based on the total weight of the pigment dispersion.

In a coloured inkjet ink the pigment is preferably present in an amount of 0.1 to 13.0 wt%. A dark colour inkjet ink preferably contains 1.5 to 13.0 wt%, more preferably 1.8 to 6.0 wt% of colour pigment based on the total weight of the inkjet ink, while a light colour inkjet ink preferably contains 0.1 to 1.3 wt%, more preferably 0.3 to 1.2 wt% of colour pigment based on the total weight of the inkjet ink.

A white inkjet ink preferably contains more than 13.0 wt%, more preferably 15.0 to 25.0 wt% of a white pigment based on the total weight of the inkjet ink.

<u>Dispersants</u>

The UV curable inkjet ink preferably contains a dispersant for further improving pigment dispersion properties. For obtaining high printing reliability, the dispersant is preferably a polymeric dispersant. Such dispersant improves the reliability of the inkjet printing process due to a generally smaller sedimentation speed, especially when they contain secondary or tertiary amine groups.

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:

- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:

- DISPERBYK™ dispersants available from BYK CHEMIE GMBH;
- SOLSPERSE™ dispersants available from LUBRIZOL;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from BASF;
- DISPONER™ dispersants from DEUCHEM.

Particularly preferred polymeric dispersants include Solsperse™ dispersants from LUBRIZOL, Efka™ dispersants from BASF, Disperbyk™ dispersants from BYK CHEMIE GMBH, and Ajisper™ dispersants from AJINOMOTO FINE-TECHNO Co. Particularly preferred dispersants are Solsperse™ 32000, 35000 and 39000 dispersants from LUBRIZOL and Disperbyk™ 162 from BYK CHEMIE GMBH.

The dispersants may be used alone or in combination of two or more kinds thereof.

The polymeric dispersant is preferably used in an amount of 10 to 200 wt%, more preferably 20 to 100 wt%, most preferably 50 to 90 wt% based on the weight of the pigment.

<u>Dispersion Synergists</u>

The UV curable inkjet ink may include a dispersion synergist to further improve the dispersion stability by a polymeric dispersant and thus also the printing reliability as less pigment can sediment in the nozzle of a print head upon

stand-by of an inkjet device.

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant/wt% dispersion synergist is selected between 2:1 to 100:1, preferably between 2:1 and 20:1.

Suitable dispersion synergists that are commercially available include Solsperse™ 5000 and Solsperse™ 22000 from LUBRIZOL.

Suitable dispersion synergists for a diketopyrrolo-pyrrole pigment, a quinacridone pigment or a mixed crystal thereof include those disclosed in EP 1790698 A (AGFA GRAPHICS) , EP 1790696 A (AGFA GRAPHICS) , WO 2007/060255 (AGFA GRAPHICS) and EP 1790695 A (AGFA GRAPHICS) .

In dispersing C.I. Pigment Blue 15:3, the use of a sulfonated Cu-phthalocyanine dispersion synergist, e.g. Solsperse™ 5000 from LUBRIZOL is preferred.

Stabilizers

The UV curable inkjet ink may also contain a polymerization inhibitor. Due to the fact that an ink contains the polymerization inhibitor, a polymerization reaction before curing, such as during storage or transport, can be prevented. It also improves the printing reliability, since the UV LED UV curable inkjet ink in a print head of an inkjet device is usually kept at a higher temperature like 45 to 55°C.

Suitable polymerization inhibitors include phenol type antioxidants, hindered amine light stabilizers, phosphor type antioxidants, benzoquinone, hydroquinone and derivatives, such as hydroquinone monomethyl ether commonly used in (meth)acrylate monomers.

Examples of the phenolic polymerization inhibitor include, but are not limited to the following substances, p-methoxy phenol, cresol, t-butyl catechol, di-t-butyl-p-cresol, hydroquinone monomethylether, $\alpha$-naphthol, 3,5-di-t-butyl-4-hydroxytoluene, 2,6-di-t-butyl-4-methylphenol, 2,2'-methylene-bis(4-methyl-6-t-butylphenol), 2,2'-methylene-bis(4-ethyl-6-butylphenol), and 4,4'-thio-bis(3-methyl-6-t-butylphenol) and pyrogallol.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

A preferred polymerization inhibitor is Irgastab™ UV10 from BASF. Other examples of polymerization inhibitor include TEMPO, TEMPOL, and Al cupferron.

The polymerization inhibitors may be used alone or in combination of two or more kinds thereof.

In a preferred embodiment, the polymerization inhibitor is a mixture of different types of polymerization inhibitors. Preferred polymerization inhibitors are mixtures of an oxyl free radical-based polymerization inhibitor, a phenol-based polymerization inhibitor, and an amine-based polymerization inhibitor. Suitable examples are given in EP 2851402 A (FUJIFILM) .

The polymerization inhibitor is preferably present in an amount of 0.1 to 5 wt% based on the total weight of the free radical curable inkjet ink. Below 0.1 wt%, the undesired polymerization is insufficiently inhibited and above 5 wt% the curing speed is heavily reduced.

Surfactants

The UV curable inkjet ink may contain a surfactant. The surfactant can be anionic, cationic, non-ionic, or zwitter-ionic. The surfactant is preferably present in an amount of 0.1 to 3 wt% based on the total weight of the free radical curable inkjet ink. At higher concentrations than 3 wt%, the adhesion may deteriorate rapidly, while usually insufficient spreading of the ink is observed at concentration lower than 0.1 wt%.

The total quantity of surfactant is preferably less than 3 wt% based on the total weight of the ink and more preferably less than 1.5 wt% based on the total weight of the UV curable inkjet ink to prevent foaming of the ink in its container. Such foaming has a negative impact on the printing reliability.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie and

Tegoglide™ 410 from EVONIK.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl™ 350 , a silicone diacrylate from Cytec; the polyether modified acrylated polydimethylsiloxane BYK™ UV3500, BYK™ UV3510 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, Tego™ Rad 2700, and Tego™ RC711 all manufactured by EVONIK. Another preferred silicone is Silwet™ L7500 from OSI SPECIALITIES BENELUX NV; Silaplane™ FM7711, Silaplane™ FM7721, Silaplane™ FM7731, Silaplane™ FM0711, Silaplane™ FM0721, Silaplane™ FM0725, Silaplane™ TM0701, Silaplane™ TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

Particularly preferred surfactants for the free radical inkjet ink are Silmer® surfactants from SILTECH CORPORATION, such as Silmer® ACR Di-1508.

## Preparation of UV Curable Inkjet Inks

The preparation of UV curable inkjet inks is well-known to the skilled person.

The average particle size and distribution of a colour pigment is an important feature for inkjet inks. The inkjet ink may be prepared by precipitating or milling the pigment in the dispersion medium in the presence of the dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy or using a microfluidizer.

Different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium oxide beads.

In the process of mixing, milling and dispersion, each process is performed with cooling to prevent build-up of heat and as much as possible under light conditions in which actinic radiation has been substantially excluded.

The inkjet ink may contain more than one pigment, and may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary depending upon the specific materials and the intended applications. The contents of the milling mixture comprise the mill grind and the milling media. The mill grind comprises pigment, polymeric dispersant and a liquid carrier. For inkjet inks, the pigment is usually present in the mill grind at 5 to 50 wt%, excluding the milling media. The weight ratio of pigment over polymeric dispersant is preferably 20:1 to 1:2, more preferably 2:1 to 1:1.

The optimal milling time can vary and depends upon the pigment, mechanical means and residence conditions selected, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, such as for a bead mill. The milled pigment concentrate is preferably separated from the milling media by filtration.

In general, it is desirable to make the Inkjet inks in the form of a concentrated pigment dispersion, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for a particular application.

## Cured Products

Another aspect of the invention is a cured product formed by UV LED curing the UV curable inkjet ink in accordance with the invention. The cured product exhibits an improvement in the amount of migrateables and a reduction in bad smell compared to UV inkjet inks including the traditionally used acyl phosphine oxides TPO and TPO-L.

Inkjet Printing Methods

An inkjet printing method in accordance with the invention preferably comprising the steps of:

a) jetting an image with a UV curable inkjet ink on a substrate; and
b) curing the jetted image by UV light emitting diodes

The UV curing is preferably performed by UV LEDs having an emission wavelength larger than 360 nm, preferably larger than 370 nm and most preferably between 390 and 400 nm.

The UV curable inkjet ink is jetted by one more print heads ejecting small droplets in a controlled manner through nozzles onto a substrate moving relative to the print head(s). A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink. When the voltage is again removed, the ceramic expands to its original shape, ejecting a drop of ink from the print head. Piezoelectric print heads have proven to be the most reliable print heads in industrial printing

A preferred piezoelectric print head is a so-called push mode type piezoelectric print head, which has a rather large piezo-element capable of ejecting also high viscous inkjet ink droplets. Such a print head is available from RICOH as the GEN5s print head.

A preferred piezoelectric print head is a so-called through-flow piezoelectric drop-on-demand print head. Such a print head is available from TOSHIBA TEC as the CF1ou print head. Through-flow print heads are preferred because they enhance the reliability of inkjet printing due to the ink circulation within the print head.

The inkjet print head preferably scans back and forth in a transversal direction across the moving ink-receiver surface. The inkjet print head may not print on the way back, but bi-directional printing is preferred for obtaining a high areal throughput. For maximizing high areal throughput, another printing method may be used that is known as a "single pass printing process", which can be performed by using page wide inkjet print heads or multiple staggered inkjet print heads that cover the entire width of the ink-receiver surface. In a single pass printing process the inkjet print heads usually remain stationary and the ink-receiver surface is transported under the inkjet print heads.

However, the inkjet printing of the UV curable inkjet inks is performed in a multi-pass printing mode. Multi-pass printing is a technique used to reduce banding in ink-jet printing. Dots of ink, when still in liquid form, tend to run together due to surface tension. This is referred to as coalescence. To print a high quality image, it is important to print individual round dots. But to achieve full saturated colours, the dots must overlap to completely cover the substrate. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the print head. In a preferred embodiment, the number of passes used is to 2 to 6 passes, more preferably no more than 4 passes.

An advantage of using a multi-pass printing mode is that the UV curable inkjet inks are cured in consecutive passes, rather than in a single pass which would require a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for wide format substrates.

For facilitating curing, the inkjet printer may include one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

EXAMPLES

Methods

1. TLC-MS

The molecular mass was determined using TLC-MS, according to the following procedure. A TLC was run under circumstances given in the synthetic examples. The TLC was analyzed using a CAMAG™ TLC-MS interface coupled to an AmaZon™ SL mass spectrometer (supplied by BRUKER DALTONICS) via an Agilent™ 1100 HPLC pump. First a blank spectrum was taken by eluting a spot on the TLC plate where no compounds are present with a 0.01 molar solution of ammonium acetate in methanol. A second spectrum of the compound to be analyzed was taken by eluting the spot of the compound under consideration with a 0.01 molar solution of ammonium acetate in methanol. The first spectrum was

subtracted from the second spectrum, giving the spectrum of the compound to be analyzed.

2. Curability

The UV curable inkjet inks were coated on a PET175 substrate using a bar coater and a 20 μm wired bar. The samples were cured on a Aktiprint™ mini duo LED curing station at full power and a linear curing speed of 10m/min. The number of passes to get full cure, including surface cure was taken as measure for curing speed, with a maximum of 10 passes. For good curability, preferably no more than 3 passes are required.

The surface cure was checked by wiping the surface of the cured samples five times with a Q-tip according to Table 3.

**Table 3**

| Score Surface cure | Observation |
|---|---|
| **0** | no visual damage |
| **1** | a change in surface gloss |
| **2** | clear surface damage |
| **3** | the coating damaged |
| **4** | almost full removal of the coating |
| **5** | coating was completely removed upon wiping |

3. Smell

The smell was evaluated by two persons directly after UV LED curing in the curability test and comparing it with the sample containing TPO (2,4,6-trimethylbenzoyldiphenyl phosphine oxide, CASRN75980-60-8).

The evaluation was performed by giving a score according to the following criteria in Table 4.

**Table 4**

| Score Smell | Criterion |
|---|---|
| **Not Improved** | No improved smell is discernible compared to the sample containing TPO |
| **Improved** | An improved smell is discernible compared to the sample containing TPO |

4. Average Particle Size

The average particle size of the pigment particles was determined by photon correlation spectroscopy at a wavelength of 633 nm with a 4mW HeNe laser on a diluted sample of the pigment dispersion. The particle size analyzer used was a Malvern™ nano-S available from Goffin-Meyvis. The sample was prepared by addition of one drop of the dispersion to a cuvet containing 1.5 mL ethyl acetate and mixed until a homogenous sample was obtained. The measured particle size is the average value of 3 consecutive measurements consisting of 6 runs of 20 seconds.

Materials

All materials used in the following examples were readily available from standard sources such the Sigma-Aldrich (MERCK) and Acros Organics (THERMOFISHER SCIENTIFIC) unless otherwise specified. Any water used was demineralized water.

**Amino-TPO-L** is Ethyl *P*-(3-amino-2,4,6-trimethylbenzoyl)-*P*-phenylphosphinate (CASRN2143083-29-6) was prepared according to the method described in WO 2017/191043 (AGFA GRAPHICS) .

**Amino-TPO** is 3-[(diphenylphosphinyl)carbonyl]-2,4,6-trimethylbenzenamine (CASRN2771298-79-2) was prepared according to the method described in WO 2022/106100 (AGFA) .

**TPO-oxam** (CASRN2771298-80-5) is a TPO derivative having the following structure and has been prepared according to paragraph [0082] of WO 2022/106099 (AGFA) :

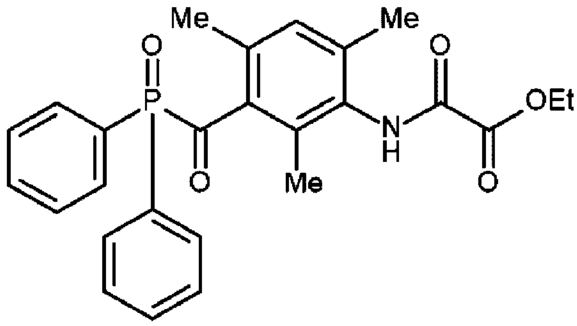

.

**TPO-L-oxam** (CASRN2404565-44-0) is a TPO-L derivative having the following structure and has been prepared according to paragraph [0220] of WO 2019/243039 (AGFA) :

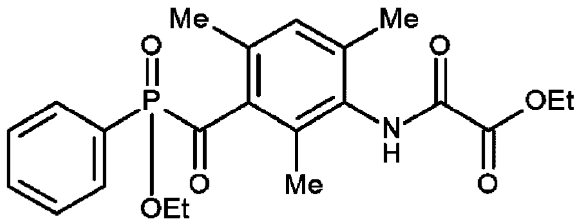

.

Diethyleneglycol bis(chloroformate) was supplied by ABCR GmbH.

Adipoylchloride, 3,3,5-trimethyl-hexamethylene-1,6-diisocyante, bis(3-aminopropyl)methyl amine were supplied by TCI Europe.

3,6-dioxa-1,8-octane diamine was supplied by Aldrich.

Glutaroyl dichloride and diglycoloyl dichloride were supplied by TCI Europe.

**TPO** (CASRN75980-60-8) was supplied by IGM as Omnirad™ TPO

**TPO-L** (CASRN84434-11-7) was supplied by IGM as Omnirad™ TPO-L.

**Silwet™ L7500** is a silicone based wetting agent supplied by Momentive Performance Materials GmbH.

**Genomer™ 2253** is an acrylated amine oligomer supplied by Rahn.

**VEEA** is 2-(2-vinyloxyethoxy)ethyl acrylate, a difunctional monomer available from NIPPON SHOKUBAI, Japan.

**DPGDA** is dipropylene glycol diacrylate available as Sartomer™ SR508 from ARKEMA.

**PET175** is a 175 pm thick unsubbed polyethylene terephthalate sheet available as Astera™ type UR175.334 from AGFA-GEVAERT NV.

**Comparative photoinitiator COMPINI-1** was prepared as follows:

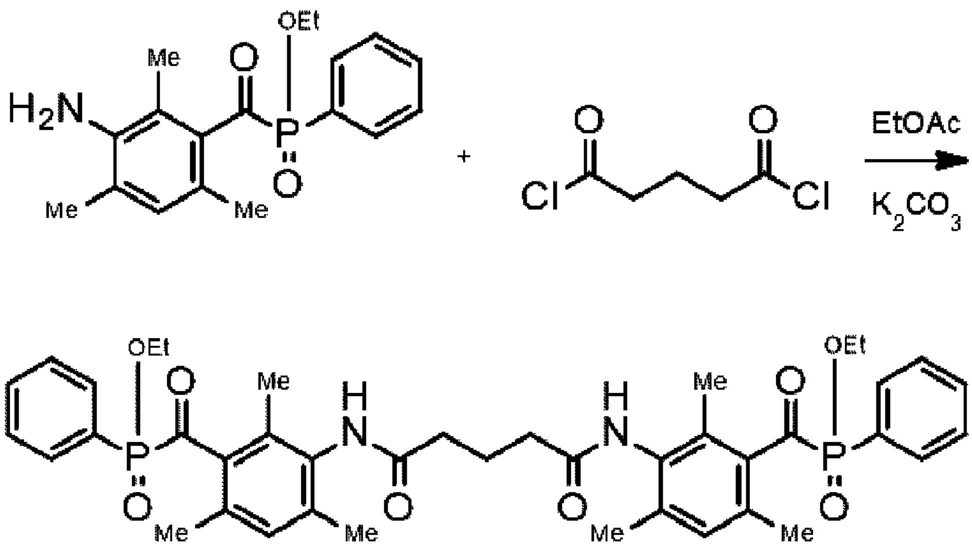


6.63 g (20 mmol) amino-TPO-L was dissolved in 40 ml ethyl acetate. A solution of 3.3 g (24 mmol) potassium

carbonate in 50 ml water was added to the ethyl acetate solution of amino-TPO-L upon which ethyl P-(3-amino-2,4,6-trimethylbenzoyl)-P-phenylphosphinate completely dissolved. The reaction mixture was cooled to 5°C and 1.74 g (10.3 mmol) glutaryl dichloride was added dropwise over five minutes while vigorously stirring the mixture. The temperature was maintained below 10°C during the addition. The cooling was removed and the reaction was allowed to continue for two hours at room temperature. The ethyl acetate phase was isolated, extracted with 50 ml of a 0.5 M sodium chloride solution in water and dried over $MgSO_4$ upon which COMPINI-1 started to crystallize from the medium. The $MgSO_4$ was removed by adding 400 ml water. The undissolved COMPINI-1 was isolated and treated with 200 ml isopropyl acetate for one hour. Upon treating the residue with isopropyl acetate, COMPINI-1 gradually crystallized from the medium and was isolated by filtration as a white crystalline compound. 4 g (y : 53 %) of COMPINI-1 was isolated (m.p. : 132°C, TLC analysis on a TLC Silica gel 60 RP-18 $F_{254}$S plate supplied by MERCK, eluent MeOH/0.5 M NaCl : 70/30, $R_f$ : 0.21). The structure of COMPINI-1 was further confirmed using TLC-MS.

**Comparative photoinitiator COMPINI-2** was prepared as follows:

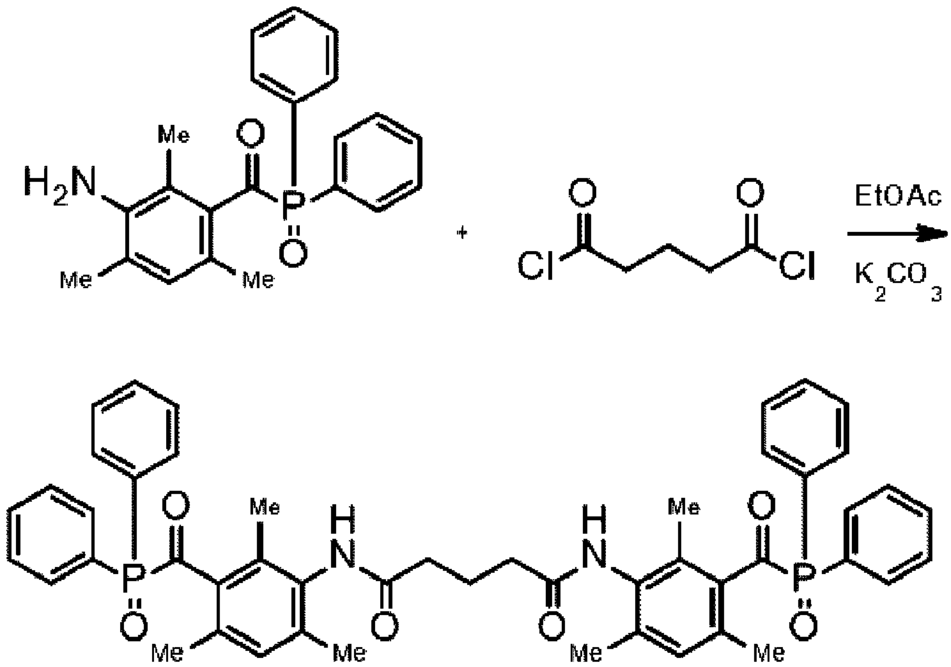


7.27 g (20 mmol) amino-TPO was dissolved in 40 ml ethyl acetate. A solution of 3.3 g (24 mmol) potassium carbonate in 50 ml water was added to the ethyl acetate solution of amino-TPO upon which amino-TPO completely dissolved in the ethyl acetate. The reaction mixture was cooled to 10°C and 1.74 g (10.3 mmol) glutaryl dichloride was added dropwise over five minutes while vigorously stirring the mixture. The temperature was maintained below 12°C during the addition. The cooling was removed and the reaction was allowed to continue for one hour at room temperature. COMPINI-3 crystallized from the medium and was isolated by filtration. The crystallized COMPINI-3 was washed with ethyl acetate and dried. 5.9 g (y : 67 %) of COMPINI-2 was isolated (m.p. : 158°C, TLC analysis on a TLC Silica gel 60 $F_{254}$ plate supplied by MERCK , eluent : methylene chloride/methanol 95/5, $R_f$ : 0.14).

**Comparative photoinitiator COMPINI-3** was prepared as follows:

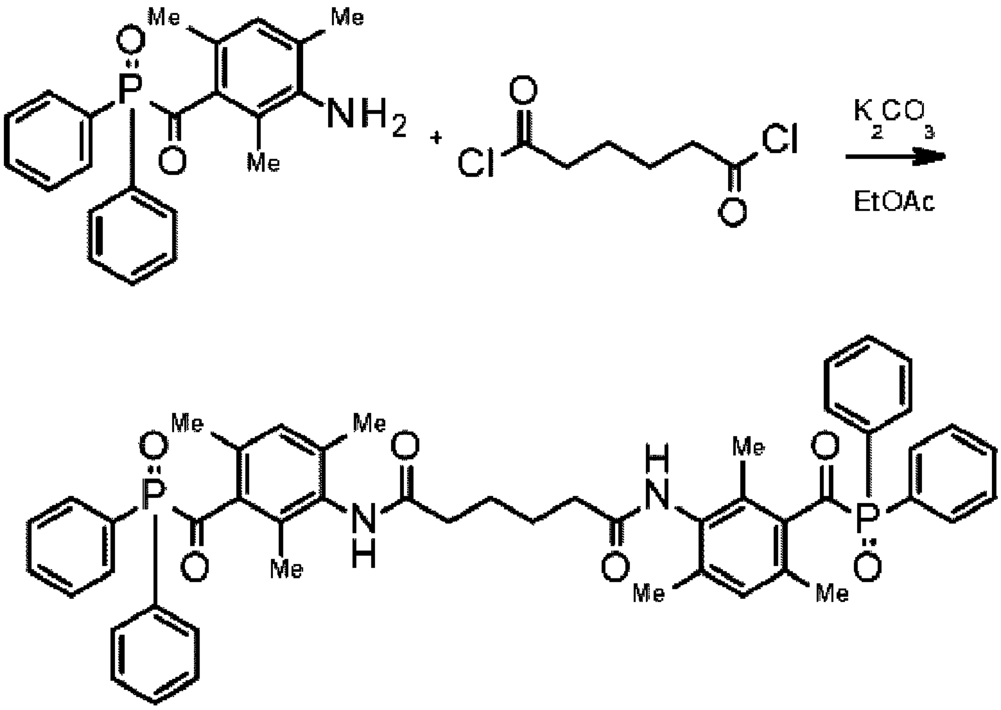


7.27 g (20 mmol) amino-TPO was added to 40 ml ethyl acetate. A solution of 2.9 g (21 mmol) potassium carbonate in 20 ml water was added and the reaction mixture was stirred. 1.92 g (10.2 mmol) adipoylchloride was added over 3 minutes upon which the temperature rose to 29°C. The reaction was allowed to continue for 16 hours at room temperature. COMPINI-3 was isolated by filtration, washed with 50 ml ethyl acetate and dried. 8.4 g (y : 100 %) of COMPINI-3 was isolated (TLC analysis on a Uniplate™ Analtech HPTL-RP18F plate supplied by MILES SCIENTIFIC : eluent MeOH/0.5 M NaCl 70/30, $R_f$ : 0.1).

**Comparative photoinitiator COMPINI-4** was prepared as follows:

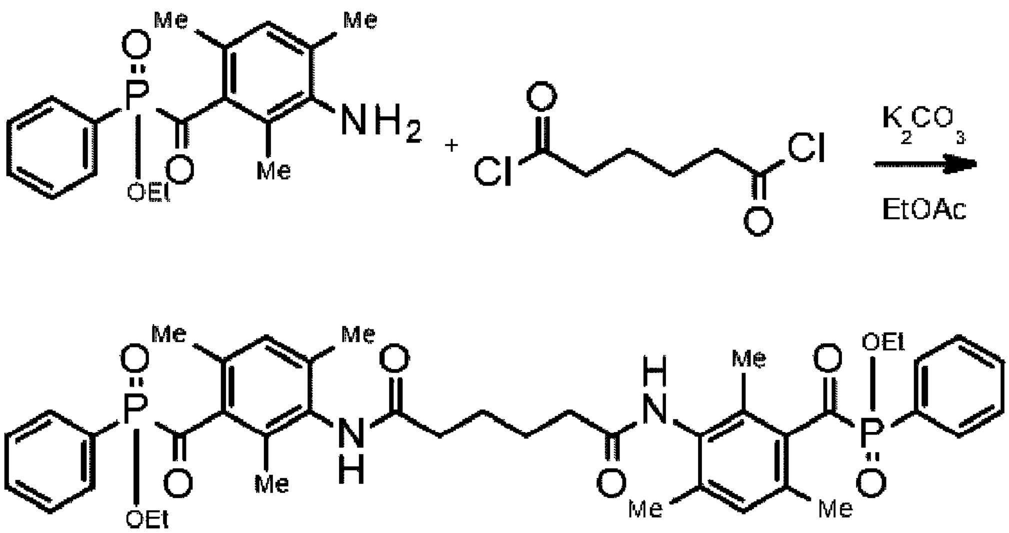


6.63 g (20 mmol) amino-TPO-L was added to 40 ml ethyl acetate. A solution of 2.9 g (21 mmol) potassium carbonate in 20 ml water was added and the reaction mixture was stirred. 1.92 g (10.2 mmol) adipoylchloride was added over 3 minutes upon which the temperature rose to 32°C. The reaction was allowed to continue for 2 hours. An additional 0.5 g (2.7 mmol) adipoylchloride was added and the reaction was allowed to continue for 30 minutes. The organic fraction was isolated, washed with 40 ml of a 0.5 M sodium chloride solution and evaporated under reduced pressure. 7.4 g (y : 96 %) of COMPINI-4 was isolated (TLC analysis on a Uniplate™ Analtech HPTL-RP18F plate supplied by MILES SCIENTIFIC : eluent MeOH/0.5 M NaCl 70/30, $R_f$ : 0.25)

**PB15:4** is an abbreviation used for Sunfast™ Blue 15:4, a C.I. Pigment Blue 15:4 pigment from SUN CHEMICAL

CORPORATION.

**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed. The polymeric dispersant is a polyester-polyurethane dispersant on the basis of caprolactone and toluene diisocyanate having an amine value of 13 mg KOH/g, a Mn of about 4,425 and an Mw of about 6,270.

**INHIB** is a mixture forming a polymerization inhibitor having a composition according to Table 5:

**Table 5**

| Component | wt% |
|---|---|
| DPGDA | 82.4 |
| p-methoxyphenol | 4.0 |
| BHT | 10.0 |
| Cupferron™ AL | 3.6 |

**BHT** is an abbreviation for 2,6-di-tert.butyl-4-methylphenol (CASRN128-30-0) from ALDRICH CHEMICAL Co.

**Cupferron™ AL** is aluminium N-nitrosophenylhydroxylamine from WAKO CHEMICALS LTD.

**Example 1**

This example illustrates the synthesis of photoinitiators in accordance with the invention.

Synthesis of INIMIX-1 comprising ASYM-2

3.31 g (10 mmol) amino-TPO-L and 3.63 g (10 mmol) amino-TPO were added to 40 ml ethyl acetate. A solution of 3.3 g (24 mmol) potassium carbonate in 40 ml water was added upon which the acyl phosphine oxides completely dissolved. A solution of 1.74 g (10.3 mmol) glutaroyl dichloride in 5 ml ethyl acetate was added over five minutes, while vigorously stirring. The temperature was maintained below 25°C. The reaction was allowed to continue for one hour at room temperature. The reaction mixture was analyzed using TLC (TLC Silicagel 60 $F_{254}$ supplied by MERCK, eluent : ethyl acetate, $R_f$ (amino-TPO) : 0.25, $R_f$(amino-TPO L) : 0.43). An additional 0.17 g (1 mmol) glutaroyl dichloride was added and the reaction mixture was allowed to continue for 16 hours at room temperature. The organic fraction was isolated, extracted with 40 ml of a 0.5 M NaCl solution in water, dried over $MgSO_4$ and evaporated under reduced pressure. The residual amino-TPO and amino-TPO-L were removed by preparative column chromatography on a Graceresolve™ 80 g SiOH 40 μm 60Å column, using a gradient elution from methylene chloride to methylene chloride/methanol 95/5. 4 g (y : 51%) of INIMIX-1 was isolated (TLC analysis on Uniplate™ Analtech HPTLC-RP18F plate supplied by MILES SCIENTIFIC : eluent MeOH/0.5 M NaCl 70/30, $R_f$ symmetrical-TPO-L : 0.27, $R_f$ ASYM-2 : 0.19, $R_f$ symmetrical-TPO : 0.13). The structure of ASYM-2 was confirmed using TLC-MS.

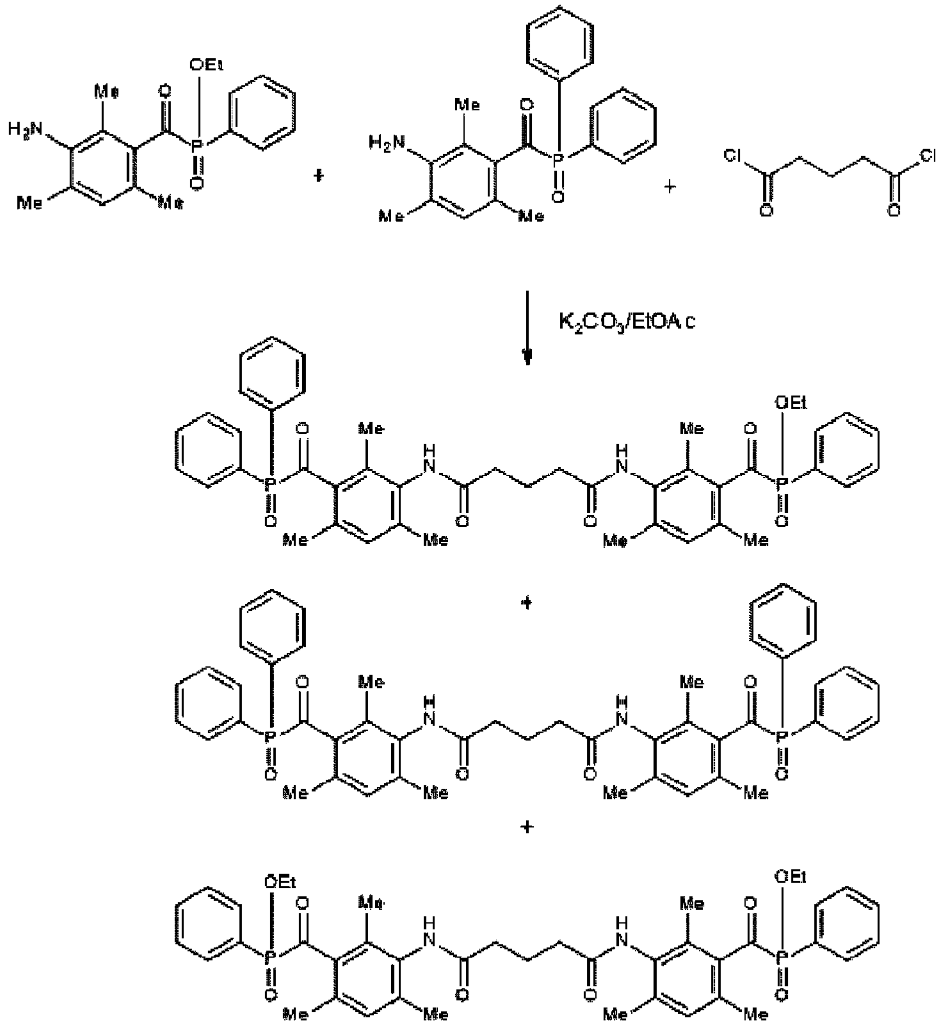


Synthesis of INIMIX-2, INIMIX-3 and INIMIX-4 comprising ASYM-5

**Table 6**

| Sample | x g amino-TPO | y g amino-TPO-L | yield |
|---|---|---|---|
| INIMIX-2 | 3.63 g (10 mmol) | 3.31 g (10 mmol) | 7.6 g (96 %) |
| INIMIX-3 | 5.45 g (15 mmol) | 1.66 g (5 mmol) | 6.5 g (82 %) |
| INIMIX-4 | 1.82 g (5 mmol) | 4.97 g (15 mmol) | 7.5 g (95 %) |

x g amino-TPO L and y g amino-TPO (Table 6) were added to 40 ml ethyl acetate. A solution of 3.3 g (24 mmol) potassium carbonate in 40 ml water was added upon which the acyl phosphine oxides completely dissolved. A solution of 1.76 g (10.4) diglycoloyl dichloride in 5 ml ethyl acetate was added over five minutes, while vigorously stirring. The temperature was maintained below 25°C. The reaction was allowed to continue for one hour at room temperature. TLC analysis proved full conversion (TLC Silicagel 60 $F_{254}$ supplied by MERCK, eluent : ethyl acetate, $R_f$ (amino-TPO) : 0.25, $R_f$ (amino-TPO L) : 0.43). The ethyl acetate phase was isolated, extracted with 40 ml of a 0.5 M NaCl solution in water, dried over $MgSO_4$ and evaporated under reduced pressure. The isolated INIMIX-2 to INIMIX-4 were analyzed using TLC analysis (TLC analysis on Uniplate™ Analtech HPTLC-RP18F plate supplied by MILES SCIENTIFIC : eluent MeOH/0.5 M NaCl 70/30, $R_f$ symmetrical TPO-L : 0.28, $R_f$ ASYM-5 : 0.20, $R_f$ symmetrical-TPO : 0.13). The structure of ASYM-5 was confirmed using TLC-MS.

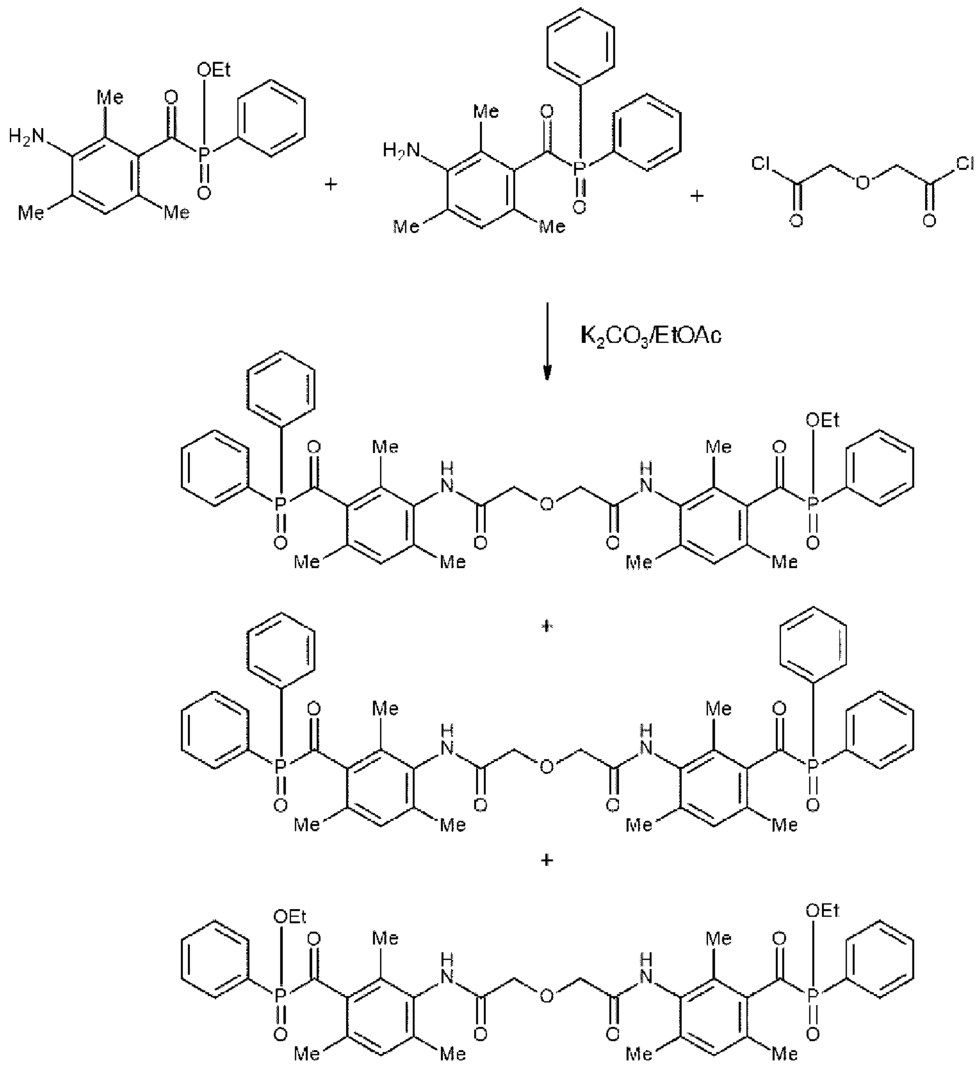


Synthesis of INIMIX-5 comprising ASYM-1

3.31 g (10 mmol) amino-TPO-L and 3.63 g (10 mmol) amino-TPO were dissolved in 46 g ethyl acetate. A solution of 3.04 g (12.5 mmol) potassium carbonate in 20 ml water was added and the reaction mixture was stirred. A solution of 2.67 g (11 mmol) diethyleneglycol bis(chloroformate) in 5 ml ethylacetate was added over 30 minutes upon which the temperature rose from 22 to 25°C. The reaction was allowed to continue for one hour. An additional 0.23 g (1 mmol) diethyleneglycol bis(chloroformate) was added and the reaction was allowed to continue for an additional hour. The organic fraction was isolated, washed with 40 ml of a 0.5 M sodium chloride solution and evaporated under reduced pressure. 8.7 g (y : 100 %) of INIMIX-5 was isolated (TLC analysis on a Uniplate™ Analtech HPTL-RP18F plate supplied by MILES SCIENTIFIC : eluent MeOH/0.5 M NaCl 70/30, $R_f$ symmetrical-TPO : 0.08, $R_f$ ASYM-1 : 0.11, $R_f$ symmetrical TPO-L : 0.28).

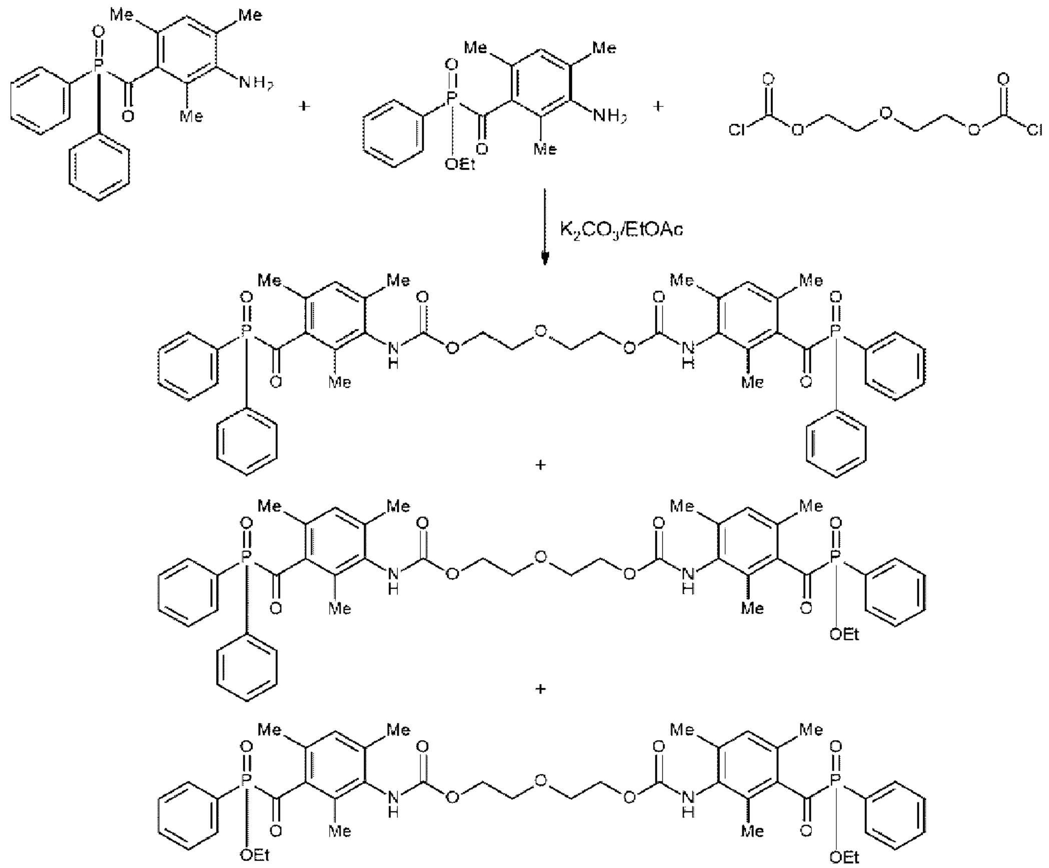


<u>Synthesis of INIMIX-6 comprising ASYM-4</u>

3.31 g (10 mmol) amino-TPO-L and 3.63 g (10 mmol) amino-TPO were dissolved in 46 g ethyl acetate. A solution of 3.04 g (12.5 mmol) potassium carbonate in 20 ml water was added and the reaction mixture was stirred. A solution of 2.2 g (11.5 mmol) adipoylchloride in 5 ml ethyl acetate was added over 10 minutes, while maintaining the temperature below 25°C. The reaction was allowed to continue for 16 hours at room temperature. The organic fraction was isolated, washed with 40 ml of a 0.5 M sodium chloride solution and evaporated under reduced pressure. 7.8 g (y : 97 %) INIMIX-6 was isolated (TLC analysis on a Uniplate™ Analtech HPTL-RP18F plate supplied by MILES SCIENTIFIC : eluent MeOH/0.5 M NaCl 70/30, $R_f$ symmetrical-TPO : 0.09, $R_f$ ASYM-4 : 0.15, $R_f$ symmetrical TPO-L : 0.23).

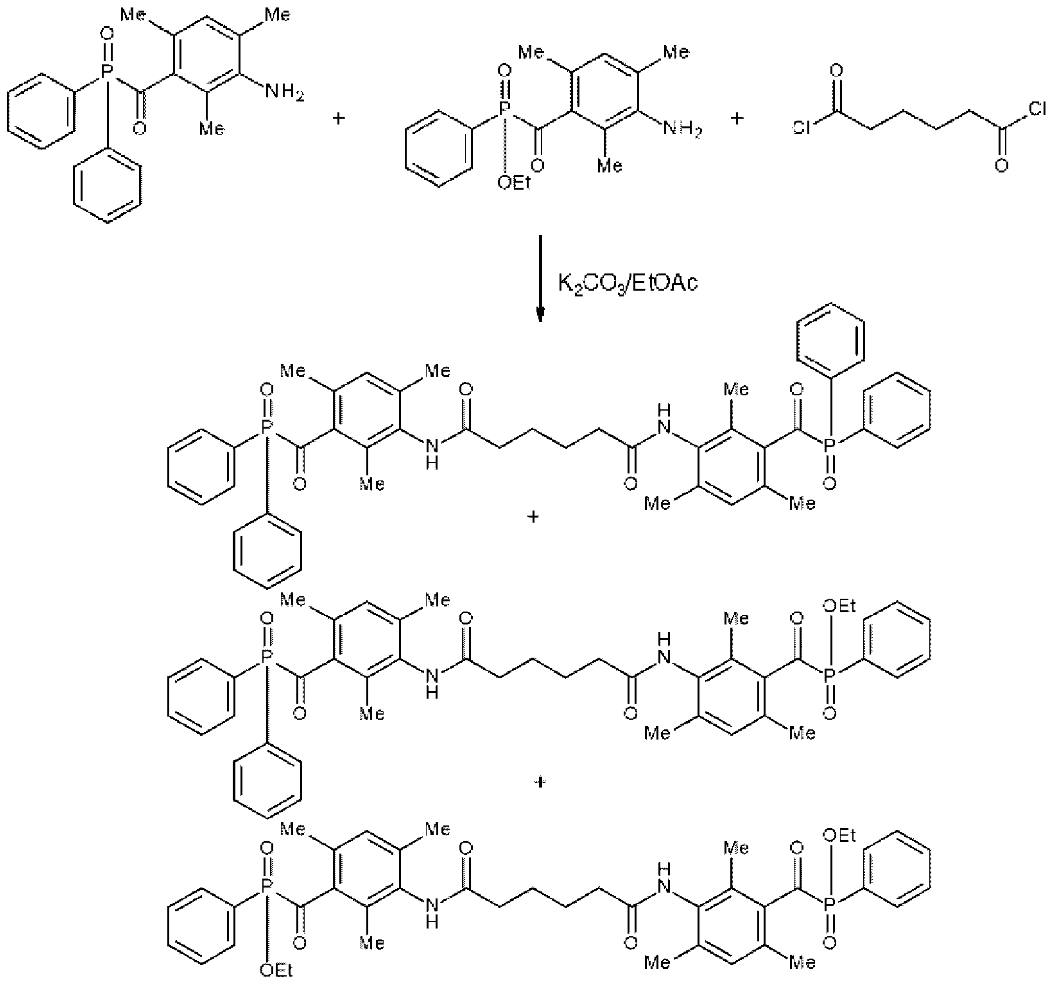


Synthesis of INIMIX-7 comprising ASYM-8

3.63 g (10 mmol) amino-TPO and 3.31 g (10 mmol) amino-TPO-L were dissolved in 30 ml acetonitrile. 2.21 g (10 mmol) 3,3,5-trimethylhexamethylene-1,6-diisocyante was added and the reaction mixture was heated to 63°C for 20 hours. The reaction mixture was allowed to cool down to room temperature and INIMIX-7 phase separated from the mixture. The INMIX-7 phase was washed with 30 ml acetonitrile, 40 ml ethyl acetate, 60 ml methyl tert.butyl ether and dried. The organic fractions, used for washing were pooled and evaporated under reduced pressure. Both fraction still contained a considerable amount of contaminants and were pooled. INIMIX-7 was purified by preparative column chromatography on a Büchi™ NP-Flash column, using a gradient elution from ethyl acetate to ethyl acetate/ methanol 75/25. 4.6 g (y : 50%) of INIMIX-7 was isolated (TLC analysis on a Uniplate™ Analtech HPTL-RP18F plate supplied by MILES SCIENTIFIC : eluent MeOH/0.5 M NaCl 80/20, $R_f$ symmetrical TPO : 0.12; $R_f$ ASYM-8 : 0.18; $R_f$ symmetrical TPO-L : 0.25).

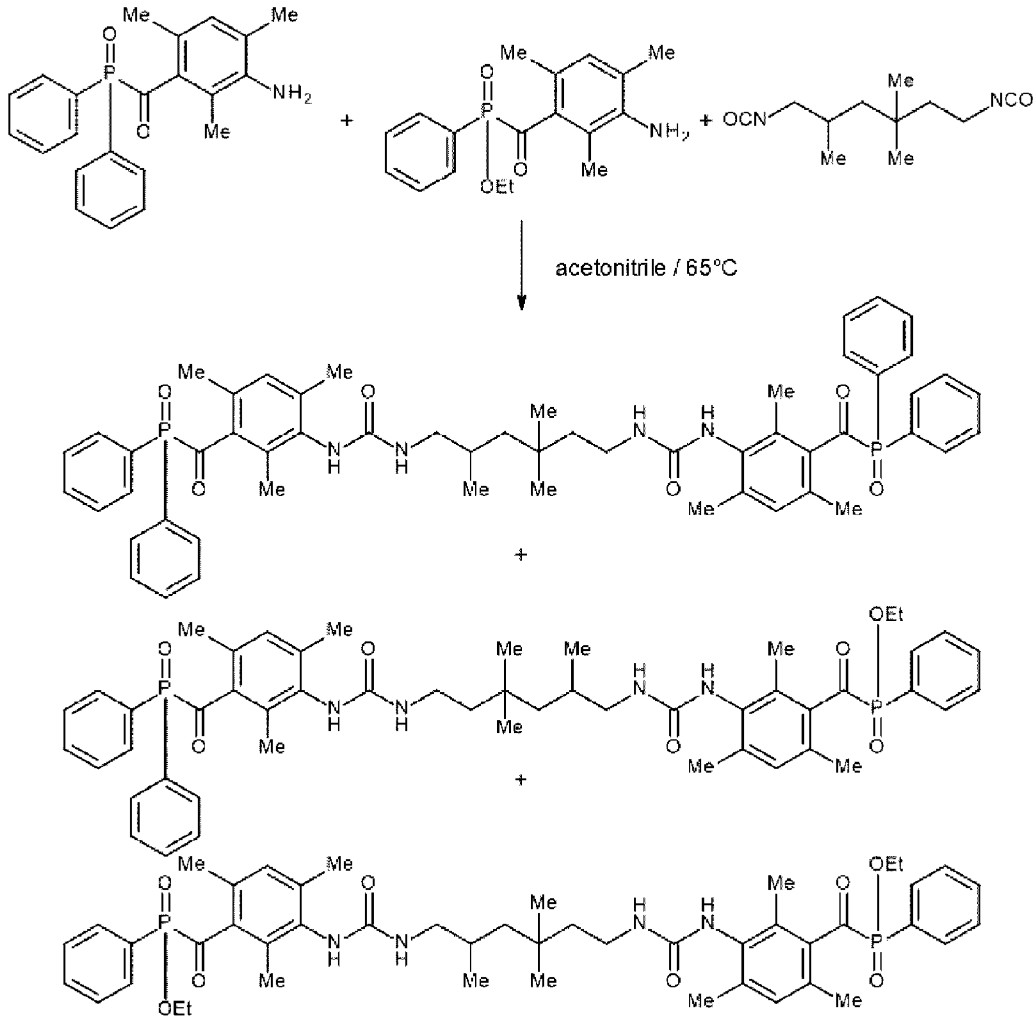


Synthesis of INIMIX-8 comprising ASYM-12

4.31 g (10 mmol) TPO-L-oxam and 4.63 g (10 mmol) TPO-oxam were added to 90 ml acetonitrile. A solution of 1.53 g (10 mmol) bis(3-aminopropyl)methyl amine in 5 ml acetonitrile was added and the mixture was heated to 80°C. The reaction was allowed to continue for 20 hours at 80°C. Upon cooling down to room temperature, a precipitate was formed. The precipitate was removed by filtration and the solvent was evaporated under reduced pressure. 8.4 g of the crude INIMIX-8 was isolated. INIMIX-8 was purified by preparative column chromatography on a Büchi™ NP-Flash column, using a gradient elution from ethyl acetate to ethyl acetate/ methanol 75/25. 3.5 g (y : 37 %) of INIMIX-8 was isolated (TLC analysis on a Uniplate™ Analtech HPTL-RP18F plate supplied by MILES SCIENTIFIC : eluent MeOH/1 M NaCl 80/20, $R_f$ symmetrical TPO : 0.26; $R_f$ ASYM-12 : 0.33; $R_f$ symmetrical TPO-L : 0.41).

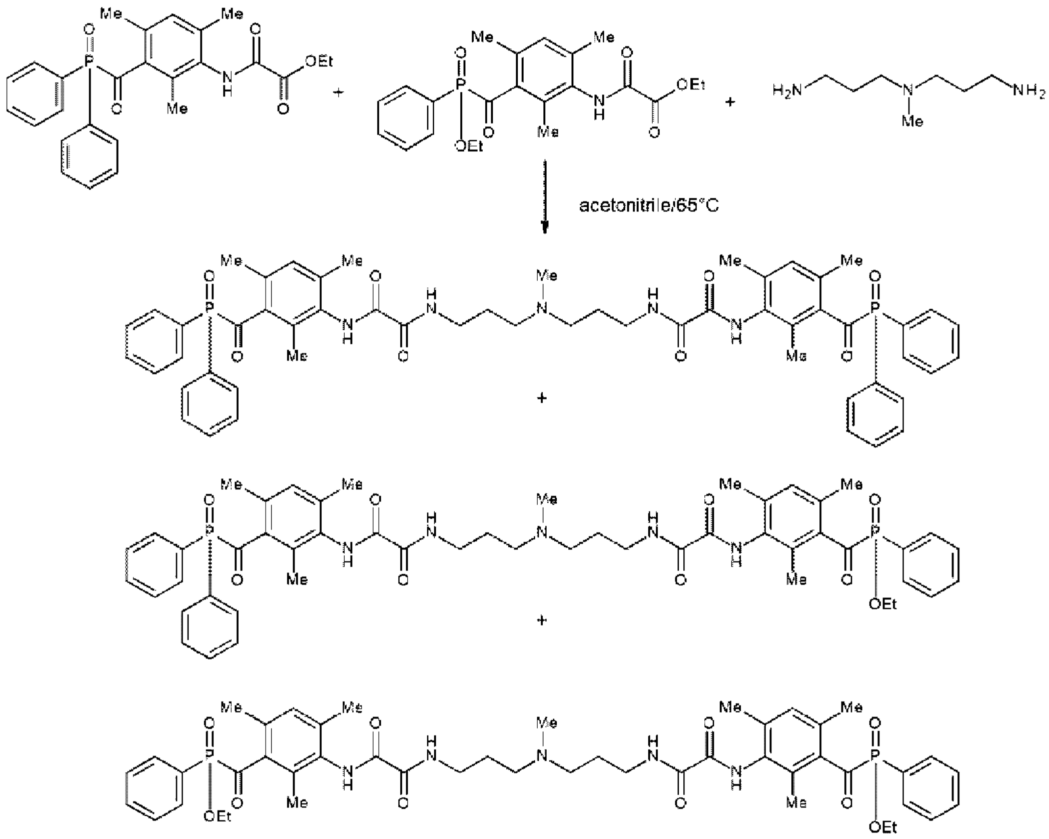


Synthesis of INIMIX-9 comprising ASYM-13

4.31 g (10 mmol) TPO-L-oxam and 4.63 g (10 mmol) TPO-oxam were added to 90 ml acetonitrile. A solution of 1.56 g (10 mmol) 3,6-dioxa-1,8-octane diamine in 5 ml acetonitrile was added and the mixture was heated to 75°C. The reaction was allowed to continue for 20 hours at 80°C. The reaction mixture was concentrated to 20 ml and the mixture was refluxed for an additional 20 hours. The solvent was removed under reduced pressure and INIMIX-9 was purified by preparative column chromatography on a Büchi™ NP-Flash column, using a gradient elution from ethyl acetate to ethyl acetate/ methanol 75/25. 2.6 g (y : 27%) of INIMIX-9 was isolated (TLC analysis on a Uniplate™ Analtech HPTL-RP18F plate supplied by MILES SCIENTIFIC : eluent MeOH/1 M NaCl 80/20, $R_f$ symmetrical TPO : 0.25; $R_f$ ASYM-13 : 0.31; $R_f$ symmetrical TPO-L : 0.39).

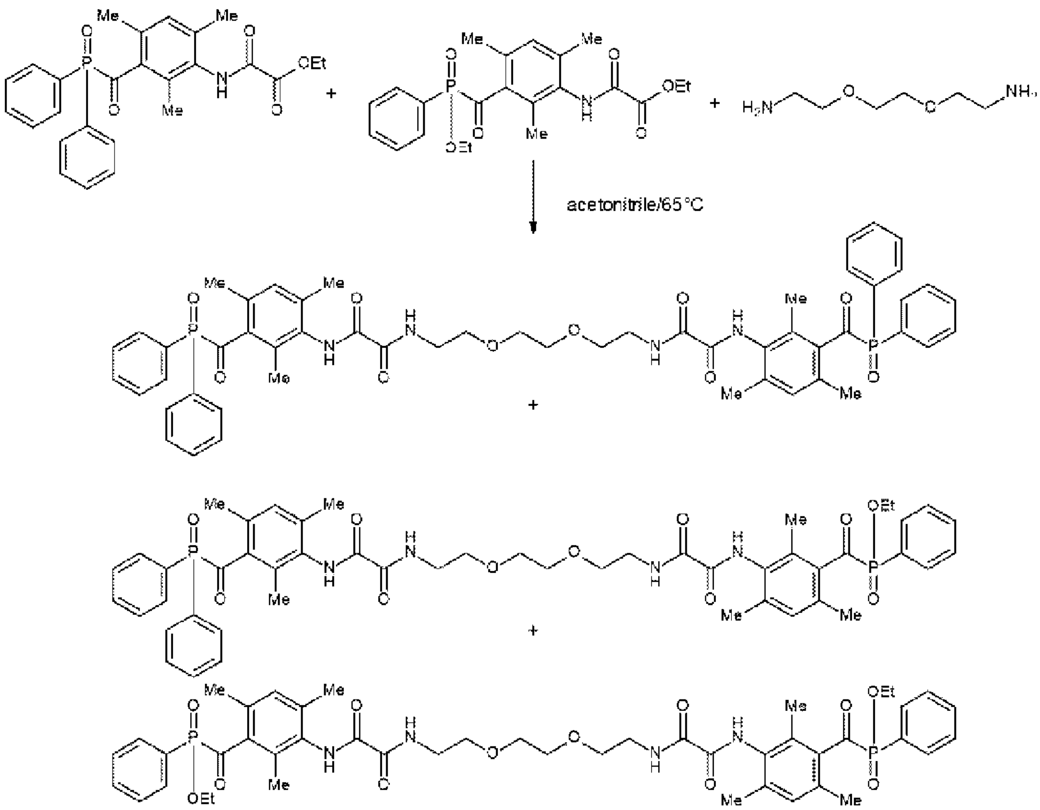


**Example 2**

This example illustrates that the photoinitiators according to the present invention have an optimal balance between formulation latitude and curing sensitivity with a curing sensitivity close to the common industrial acyl phosphine oxide initiators TPO and TPO-L.

Preparation of the LED curable inkjet inks

The comparative examples C-1 to C-4 and the inventive examples I-1 to I-9 were prepared by mixing the components according to Table 7 and Table 8. The weight% (wt%) were based on the total weight of the LED curable inkjet inks. The wt% of the photoinitiators is chosen such that the molar amount of acyl phosphine oxide moieties is the same in all UV curable inkjet inks.

**Table 7**

| wt% of | C-1 | C-2 | C-3 | C-4 | I-1 | I-2 |
|---|---|---|---|---|---|---|
| **TPO** | 8.5 | - | - | - | - | - |
| **TPO-L** | - | 7.8 | - | - | - | - |
| **COMPINI-1** | - | - | 9.2 | - | - | - |
| **COMPINI-2** | - | - | - | 9.9 | - | - |
| **INIMIX-1** | - | - | - | - | 9.5 | - |
| **INIMIX-2** | - | - | - | - | - | 9.6 |
| **Genomer™ 2253** | 8.9 | 8.9 | 8.9 | 8.9 | 8.9 | 8.9 |
| **Silwet™ L7500** | 1.0 | 1.0 | 1.0 | 1.0 | 1.0 | 1.0 |
| **VEEA** | 81.6 | 82.3 | 80.9 | 80.2 | 80.6 | 80.5 |

Table 8

| wt% of | I-3 | I-4 | I-5 | I-6 | I-7 | I-8 | I-9 |
|---|---|---|---|---|---|---|---|
| **INIMIX-3** | 9.7 | - | - | - | - | - | - |
| **INIMIX-4** | - | 9.4 | - | - | - | - | - |
| **INIMIX-5** | - | - | 10.4 | - | - | - | - |
| **INIMIX-6** | - | - | - | 9.8 | - | - | - |
| **INIMIX-7** | - | - | - | - | 10.6 | - | - |
| **INIMIX-8** | - | - | - | - | - | 11.6 | - |
| **INIMIX-9** | - | - | - | - | - | - | 11.6 |
| **Genomer™ 2253** | 8.9 | 8.9 | 8.9 | 8.9 | 8.9 | 8.9 | 8.9 |
| **Silwet™ L7500** | 1.0 | 1.0 | 1.0 | 1.0 | 1.0 | 1.0 | 1.0 |
| **VEEA** | 80.4 | 80.7 | 79.7 | 80.3 | 79.5 | 78.5 | 78.5 |

Results and Evaluation

The curability and the smell of the UV curable inkjet inks C-1 to C-4 and I-1 to I-9 were determined. The results are shown in Table 9.

Table 9

| Cured product | Photoinitiator | Number of passes | Surface cure | Smell of cured product |
|---|---|---|---|---|
| **C-1** | TPO | 1 | 0 | Reference |
| **C-2** | TPO-L | 3 | 0 | Not improved |
| **C-3** | COMPINI-1 | 10 | 5 | I m proved |
| **C-4** | COMPINI-2 | 10 | 5 | I m proved |
| **I-1** | ASYM-2 | 2 | 0 | I m proved |
| **I-2** | ASYM-5 | 1 | 0 | I m proved |
| **I-3** | ASYM-5 | 1 | 0 | I m proved |
| **I-4** | ASYM-5 | 1 | 0 | I m proved |
| **I-5** | ASYM-1 | 1 | 0 | I m proved |
| **I-6** | ASYM-4 | 2 | 0 | I m proved |
| **I-7** | ASYM-8 | 3 | 0 | I m proved |
| **I-8** | ASYM-12 | 1 | 0 | I m proved |
| **I-9** | ASYM-13 | 1 | 0 | I m proved |

By comparing the cured products C-1 to C-4 and I-1, it can be seen that only the UV curable inkjet ink I-1 exhibited good curability and an improved smell of the cured product. The UV curable inkjet inks C-1 and C-2 containing the commonly used TPO respectively TPO-L exhibited also good curability, but the cured product had a bad smell. The photoinitiators COMPINI-1 and COMPINI-2 can be called "symmetrical" acyl phosphine oxides as they both contain two identical acyl phosphine oxide moieties, more particularly two TPO-L moieties respectively TPO moieties. The photoinitiator ASYM-2 of the UV curable inkjet ink I-1 can be called an " asymmetrical" acyl phosphine oxide as it contains one TPO-L moiety and one TPO moiety. Surprisingly only the asymmetrical acyl phosphine oxide ASYM-2 provides food curability although the linking group of COMPINI-1, COMPINI-2 and ASYM-2 is identical.

The curability can be further improved by including an ether function in the linking group as shown by photoinitiator ASYM-5 in the UV curable inkjet inks I-2 to I-4 compared to ASYM-2 in the UV curable inkjet ink I-1. The amount of photoinitiator ASYM-5 in the UV curable inkjet inks I-2 to I-4 does not appear to affect the curability as long as it is present.

The improvement on curability by including one or more ether groups in the linking group is confirmed by the UV

curable inkjet inks I-5 and I-9 compared to the UV curable inkjet inks I-6 and I-7 where the linking group lacks an ether function.

The UV curable inkjet ink I-8 illustrates that the inclusion of a tertiary amine group in the linking group also improves the curability.

No photo-yellowing problems were observed for the inkjet inks C-1 to C-4 and I-1 to I-9.

**Example 3**

This example illustrates that the advantages of the photoinitiators according to the present invention are also obtained for a different monomer in the UV curable inkjet ink.

Preparation of the LED curable inkjet inks

The comparative examples C-5 and C-6 and the inventive example I-10 were prepared by mixing the components according to Table 10. The weight% (wt%) were based on the total weight of the LED curable inkjet inks. The wt% of the photoinitiators is chosen such that the molar amount of acyl phosphine oxide moieties is the same in all UV curable inkjet inks.

**Table 10**

| wt% of | C-5 | C-6 | I-10 |
|---|---|---|---|
| COMPINI-3 | 10.2 | - | - |
| COMPINI-4 | - | 9.4 | - |
| INIMIX-6 | - | - | 9.8 |
| DPGDA | 79.9 | 80.7 | 80.3 |
| Genomer™ 2253 | 8.9 | 8.9 | 8.9 |
| Silwet™ L7500 | 1.0 | 1.0 | 1.0 |

Results an Evaluation

The curability and the smell of the UV curable inkjet inks C-5, C-6 and I-10 were determined. The results are shown in Table 11.

**Table 11**

| Cured product | Number of passes |
|---|---|
| **C-5** | >10 |
| **C-6** | 10 |
| **I-10** | 1 |

It should me immediately clear from Table 11 that the asymmetrical acyl phosphine oxide in the UV curable inkjet ink I-10 provides excellent curability compared the UV curable inkjet inks C-5 and C-6 containing analogous symmetrical acyl phosphine oxides.

**Example 4**

This example illustrates the inkjet printing of a UV curable inkjet ink including a photoinitiator according to the invention.

Preparation of the concentrated cyan dispersion DISP-C

A concentrated cyan pigment dispersion was prepared by mixing for 30 minutes the components according to Table 12 using a DISPERLUX™ disperser from DISPERLUX S.A.R.L., Luxembourg. The vessel was then connected to a Bachofen DYNOMILL™ ECM Poly mill having an internal volume of 8.2 L filled for 42% with 0.4 mm yttrium stabilized

zirconia beads. The mixture was circulated over the mill at a flow rate of about 8 L per minute to have a residence time of 38 min. After milling the dispersion was separated from the beads using a 1 μm filter. The average particle size of the pigment particles in the concentrated cyan pigment dispersion DISP-C was found to be 89 nm.

**Table 12**

| component | wt% |
|---|---|
| PB15:4 | 25 |
| DB162 | 10 |
| INHIB | 1 |
| DPGDA | 64 |

Preparation of the cyan ink jet inks

The comparative ink jet ink COMP-1 and the inventive ink jet inks INV-1 to INV-3 were prepared using the concentrated cyan pigment dispersion DISP-C and mixing it with the components as shown in Table 13. The weight percentages (wt%) are based on the total weight of the ink jet ink.

**Table 13**

| wt% of | COMP-1 | INV-1 | INV-2 | INV-3 |
|---|---|---|---|---|
| TPO-L | 10 | - | - | - |
| INIMIX-4 | - | 10 | - | - |
| INIMIX-5 | - | - | 10 | - |
| INIMIX-6 | - | - | - | 10 |
| DISP-C | 15 | 15 | 15 | 15 |
| Genomer™ 2253 | 9 | 9 | 9 | 9 |
| VEEA | 65 | 65 | 65 | 65 |
| Silwet™ L7500 | 1 | 1 | 1 | 1 |

Evaluation of the cyan ink jet inks

The comparative ink COMP-1 and the inventive inks INV-1 to INV-3 were jetted on a Synaps™ OM135/AP from AGFA using a Dimatix™ 10 pl printhead. A jetting frequency of 5KHz was used in combination with a jetting voltage of 31 V. The jetting temperature was adjusted for each inkjet ink until all nozzles jetted and is given below in Table 14.

**Table 14**

| Ink jet ink | Jetting temperature (°C) |
|---|---|
| COMP-1 | 35 |
| INV-1 | 42 |
| INV-2 | 42 |
| INV-3 | 41 |

The printed samples were cured using a Fusion DRSE-120 conveyer, equipped with a UV LED module Unijet™ i24511 from USHIO, which transported the samples under the UV-lamp on a conveyer belt at a speed of 20 m/min. The full power of the UV LED was used. The curing degree was evaluated after one pass by wiping 10 times with a Q-tip and evaluating the surface damage. The surface damage was scored according to Table 15:

**Table 15**

| Score Surface cure | Observation |
|---|---|
| **0** | no visual damage |
| **1** | a change in surface gloss without leaving a trace of ink on the Q-tip |
| **2** | clear surface damage with clear ink contamination on the Q-tip |
| **3** | the full ink layer damaged |
| **4** | almost full removal of the ink layer |
| **5** | ink layer was completely removed upon wiping |

The surface damage evaluation of the comparative ink COMP-1 and the inventive inks INV-1 to INV-3 is summarized in Table 16.

**Table 16**

| Ink jet ink | Surface damage |
|---|---|
| **COMP-1** | 1 |
| **INV-1** | 1 |
| **INV-2** | 1 |
| **INV-3** | 1 |

From this evaluation, it becomes clear that the UV curable inks according to the present invention are readily jettable using standard piezo printheads, without loss in curing sensitivity compared to a UV curable inkjet ink containing the standard acyl phosphine oxide photoinitiator. Also no photo-yellowing problems were observed.

## Claims

**1.** A UV curable inkjet ink containing a free radical polymerizable compound and a photoinitiator including 2 to 6 monoacyl phosphine oxide moieties **characterized in that** the monoacyl phosphine oxide moieties are linked to each other via their acyl group and that at least 2 monoacyl phosphine oxide moieties have a chemical structure differing in the phosphine oxide part.

**2.** The UV curable inkjet ink as claimed in claim 1, wherein the photoinitiator includes 2 or 3 monoacyl phosphine oxide moieties.

**3.** The UV curable inkjet ink as claimed in claim 1 or 2, wherein the linking group between the monoacyl phosphine oxide moieties includes a free radical polymerizable group.

**4.** The UV curable inkjet ink as claimed in any one of claims 1 to 3, wherein the photoinitiator has a structure according to Formula (1):

$$[A]_y - L - [B]_x \qquad \text{Formula (1),}$$

wherein

x and y independently represent an integer from 1 to 3;
L represents an (x+y)-valent linking group having no more than 25 carbon atoms;
A represents a acyl phosphine oxide according to Formula (1-1):

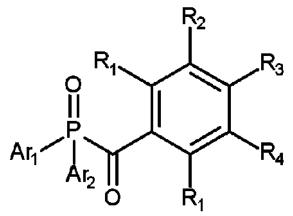

Formula (1-1),

wherein

$Ar_1$ and $Ar_2$ independently represent a substituted or unsubstituted aryl or heteroaryl group;
$R_1$ is selected from the group consisting of a substituted or unsubstituted alkyl group, a substituted or unsubstituted aryl group and a substituted or unsubstituted alkoxy-group; and
$R_2$, $R_3$ and $R_4$ are independently selected from the group consisting of the coupling position to L or a substituent selected from the group consisting of a hydrogen, a substituted or unsubstituted alkyl group, a substituted or unsubstituted alkenyl group, a substituted or unsubstituted alkynyl a group, a substituted or unsubstituted alkoxy group and a substituted or unsubstituted aryl or heteroaryl group;
B represents a acyl phosphine oxide moiety according to Formula (1-2):

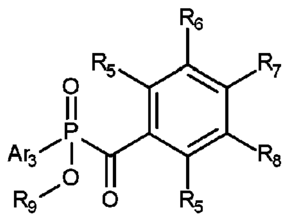

Formula (1-2),

wherein $Ar_3$ represent a substituted or unsubstituted aryl or heteroaryl group; $R_5$ is selected from the group consisting of a substituted or unsubstituted alkyl group, a substituted or unsubstituted aryl group and a substituted or unsubstituted alkoxy-group;
$R_6$, $R_7$ and $R_8$ are independently selected from the group consisting of the coupling position to L or a substituent selected from the group consisting of a hydrogen, a substituted or unsubstituted alkyl group, a substituted or unsubstituted alkenyl group, a substituted or unsubstituted alkynyl a group, a substituted or unsubstituted alkoxy group and a substituted or unsubstituted aryl or heteroaryl group; and
$R_9$ represents a substituted or unsubstituted alkyl group, a substituted or unsubstituted alkenyl group, a substituted or unsubstituted alkynyl a group and a substituted or unsubstituted aryl or heteroaryl group.

**5.** The UV curable inkjet ink as claimed claim 4, wherein the ratio of molecular weight between A and B on the one hand and L on the other hand meets the following equation: $(x * Mw(A) + y * Mw(B))/ Mw(L) \geq 1.5$.

**6.** The UV curable inkjet ink as claimed in any one of claims 1 to 3, wherein the photoinitiator has a structure according to Formula (2):

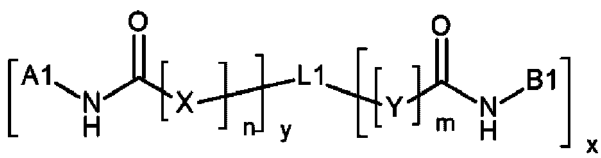

Formula (2),

wherein

n and m independently represent 0 or 1;
x and y independently represent an integer from 1 to 3;
L1 represents an (x+y)-valent linking group having no more than 25 carbon atoms;
X and Y independently represent O or NH;

A1 represents an acyl phosphine oxide moiety according to Formula (2-1):

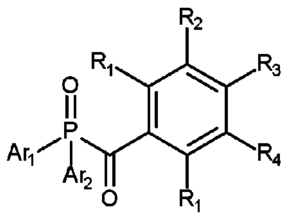

Formula (2-1),

wherein $Ar_1$ and $Ar_2$ independently represent a substituted or unsubstituted aryl or heteroaryl group; $R_1$ is selected from the group consisting of a substituted or unsubstituted alkyl group, a substituted or unsubstituted aryl group and a substituted or unsubstituted alkoxy-group; $R_2$, $R_3$ and $R_4$ are independently selected from the group consisting of the coupling position to N or a substituent selected from the group consisting of a hydrogen, a substituted or unsubstituted alkyl group, a substituted or unsubstituted alkenyl group, a substituted or unsubstituted alkynyl a group, a substituted or unsubstituted alkoxy group and a substituted or unsubstituted aryl or heteroaryl group;
B1 represents an acyl phosphine oxide moiety according to Formula (2-2):

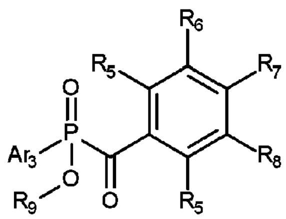

Formula (2-2),

wherein $Ar_3$ represent a substituted or unsubstituted aryl or heteroaryl group;
$R_5$ is selected from the group consisting of a substituted or unsubstituted alkyl group, a substituted or unsubstituted aryl group and a substituted or unsubstituted alkoxy-group; $R_6$, $R_7$ and $R_8$ are independently selected from the group consisting of the coupling position to N or a substituent selected from the group consisting of a hydrogen, a substituted or unsubstituted alkyl group, a substituted or unsubstituted alkenyl group, a substituted or unsubstituted alkynyl a group, a substituted or unsubstituted alkoxy group and a substituted or unsubstituted aryl or heteroaryl group; $R_9$ represents a substituted or unsubstituted alkyl group, a substituted or unsubstituted alkenyl group, a substituted or unsubstituted alkynyl a group and a substituted or unsubstituted aryl or heteroaryl group.

**7.** The UV curable inkjet ink as claimed in any one of claims 4 to 6, wherein the linking group L or L1 comprises at least one ether function or a tertiary amine group.

**8.** The UV curable inkjet ink as claimed in claim 1, wherein the photoinitiator is selected from the group consisting of:

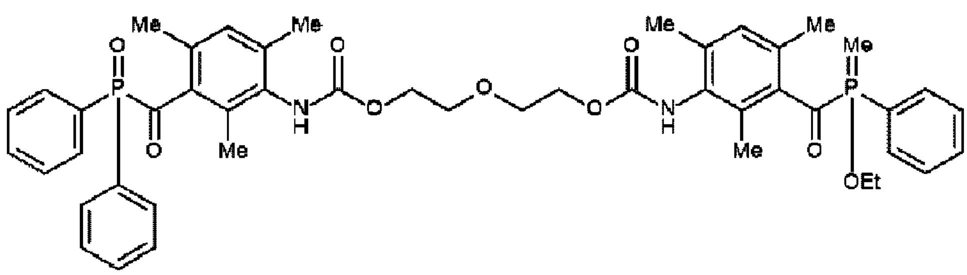

,

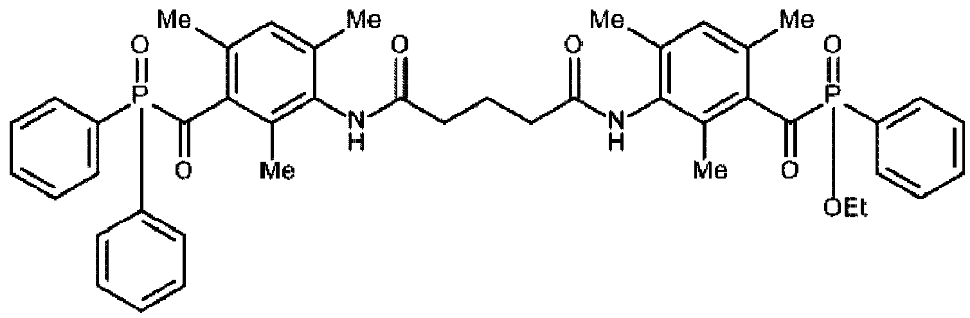

,

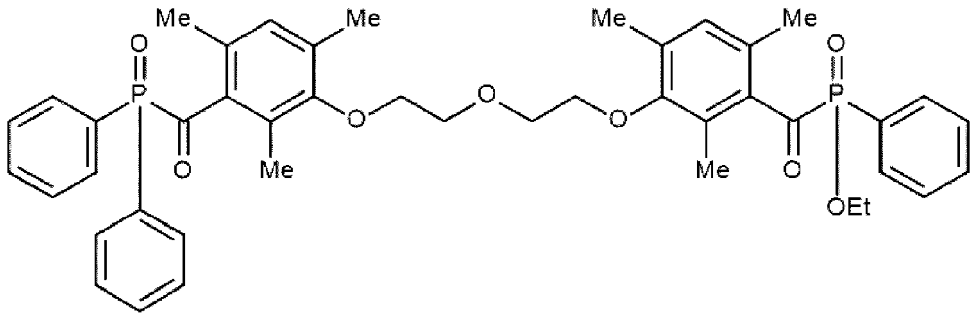

,

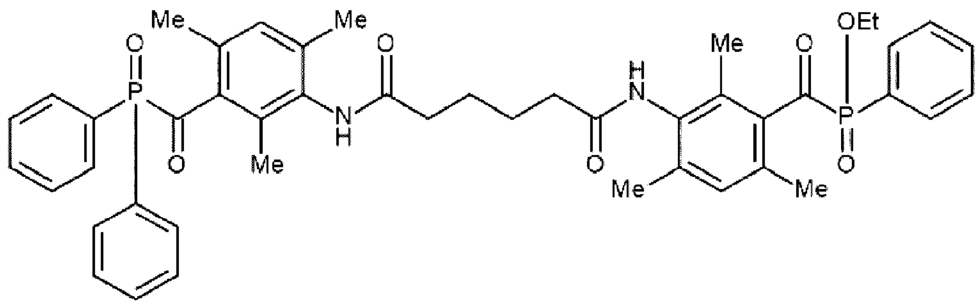

,

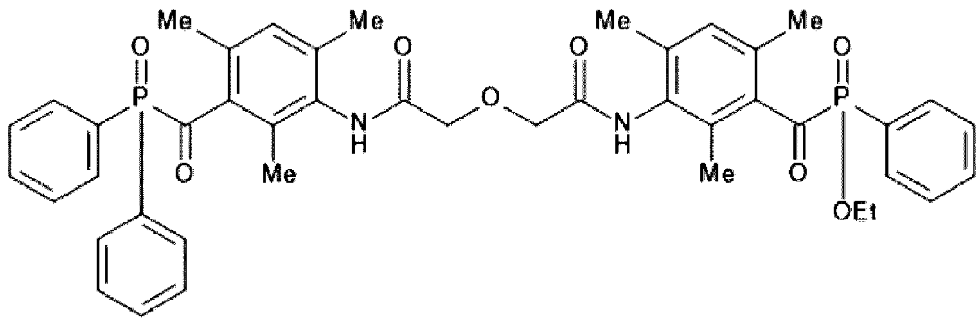

,

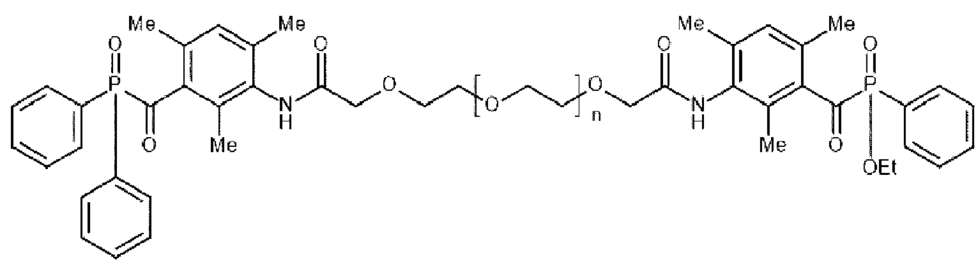

n=2 on average,

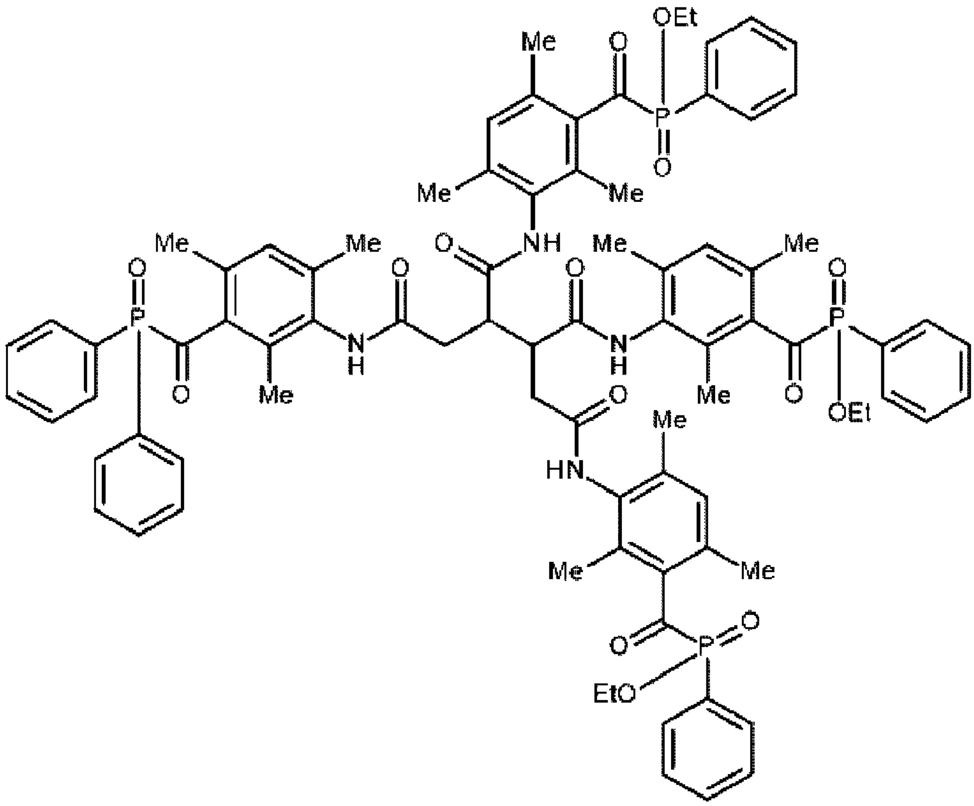

,

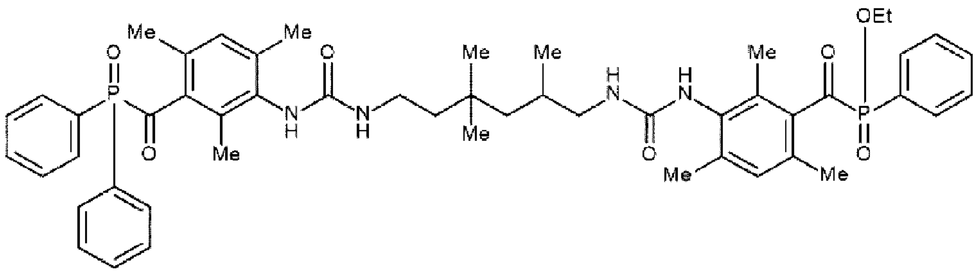

,

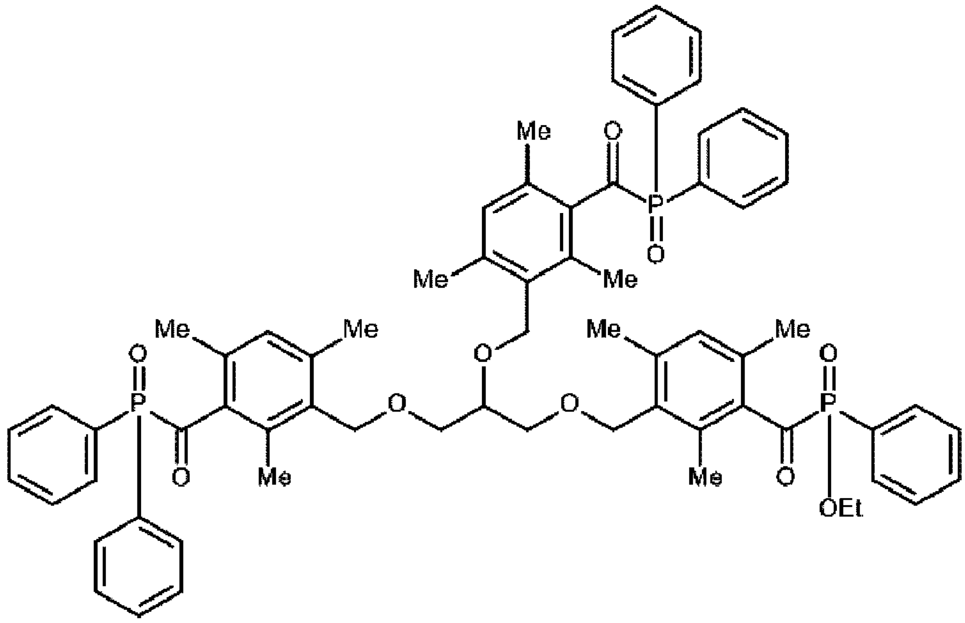

,

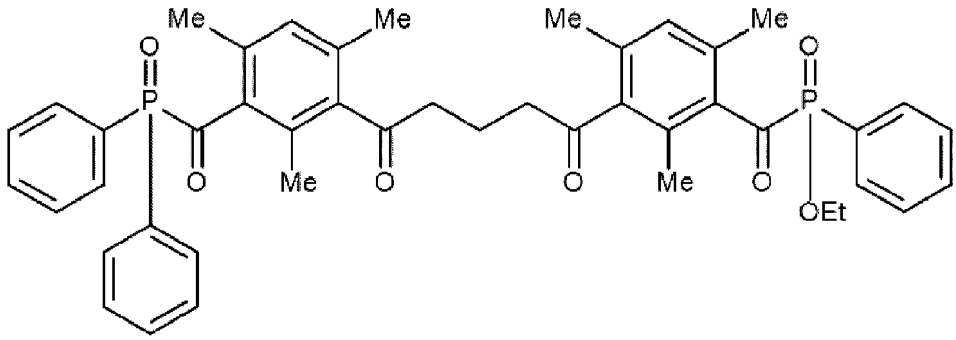

,

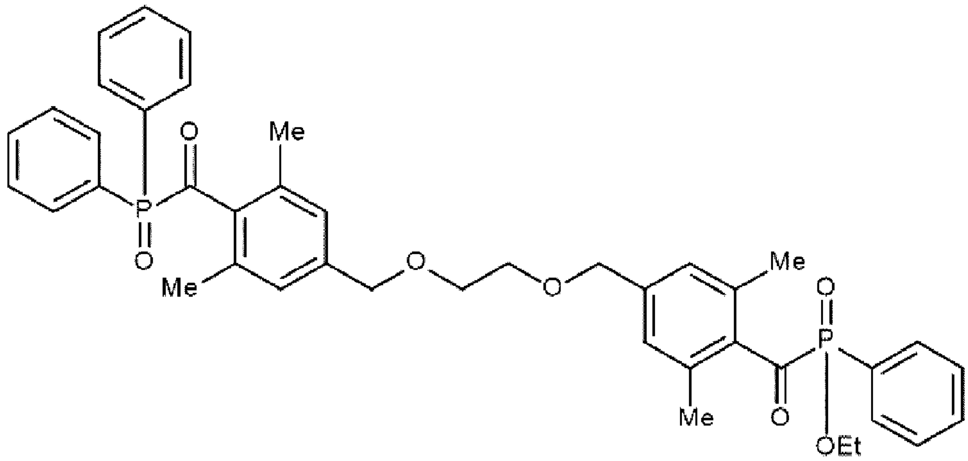

,

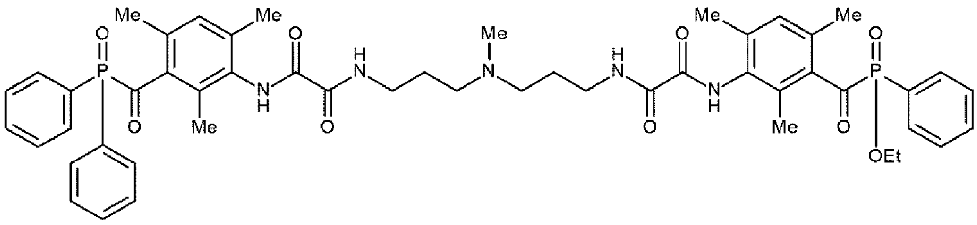

,

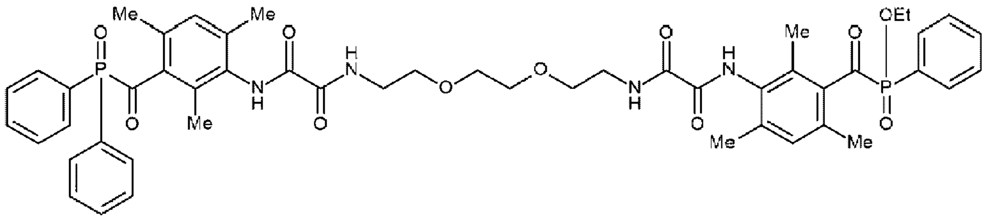

,

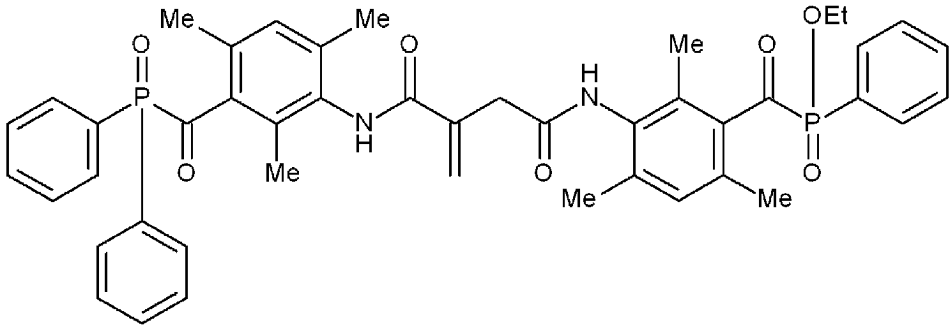

,

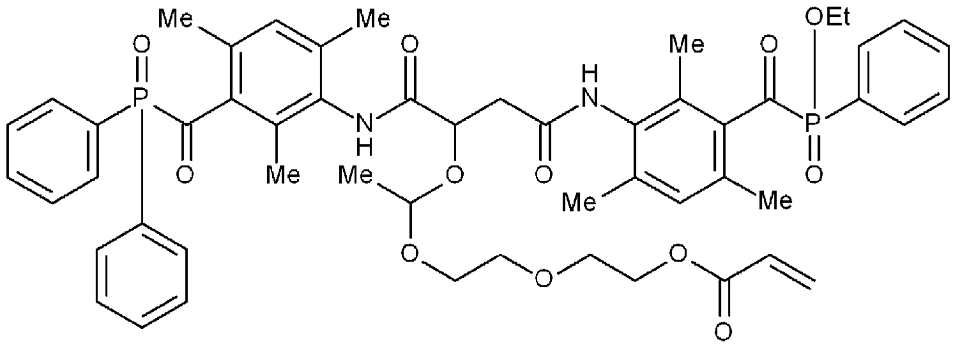

,

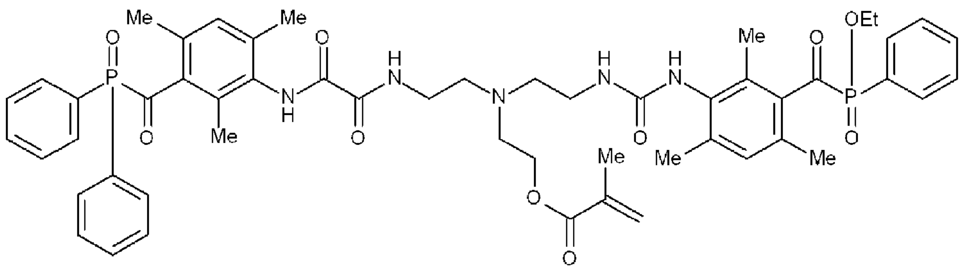

,

and

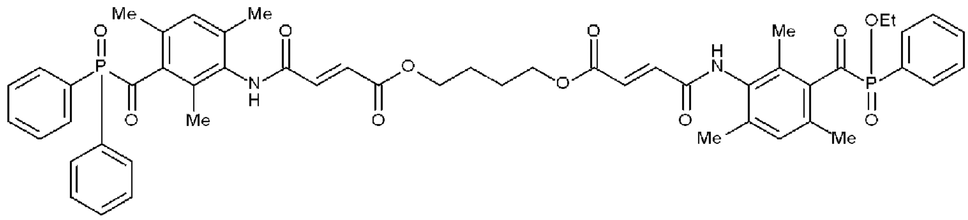

.

**9.** The UV curable inkjet ink as claimed in claim 4 or 6, wherein the photoinitiator according to Formula (1) with x and y representing the integer 1 is part of the mixture comprising the photoinitiators according to Formula (1-a), Formula (1-b), and Formula (1-c) with the groups A, B and L as defined as for the photoinitiator according to Formula (1), wherein Formula (1-a) is A-L-B, Formula (1-b) is A-L-A, and Formula (1-c) is B-L-B; and wherein the mixture comprises between 20 and 80 mol% of the photoinitiator according to Formula (1-a);

or wherein the photoinitiator according to Formula (2) with x and y representing the integer 1 is part of a mixture of photoinitiators comprising the photoinitiators according to Formula (2a), Formula (2-b), and Formula (2-c) with the groups A' being A-NH-C(=O)-$(X)_n$-, B' being B-NH-C(=O)-$(Y)_m$-, and L1 as defined as for the photoinitiator according to Formula (2), wherein Formula (2-a) is A'-L1-B', Formula (2-b) is A'-L1-A', and Formula (2-c) is B'-L1-B'; and wherein the mixture comprises between 20 and 80 mol% of the photoinitiator according to Formula (2-a).

**10.** The UV curable inkjet ink as claimed in any one of claims 1 to 9,

wherein the polymerizable composition of the UV curable inkjet ink comprises:

a) 25 - 100 wt% of one or more polymerizable compounds A having at least one acrylate group and at least one second polymerizable group selected from the group consisting of a vinylether group, an allylether group and an allylester group;
b) 0 - 55 wt% of one or more polymerizable compounds B selected from the group consisting of monofunctional acrylates and difunctional acrylates; and
c) 0 - 55 wt% of one or more polymerizable compounds C selected from the group consisting of trifunctional acrylates, tetrafunctional acrylates, pentafunctional acrylates and hexafunctional acrylates, with the proviso that if the weight percentage of compounds B > 24 wt%, then the weight percentage of compounds C > 1 wt%; and

wherein all weight percentages of A, B and C are based upon the total weight of the polymerizable composition of the UV curable inkjet ink.

**11.** The UV curable inkjet ink according to any one of claims 1 to 10, further comprising a pigment.

**12.** A UV curable inkjet ink set including one or more UV curable inkjet ink according to any one of claims 1 to 10.

**13.** The UV curable inkjet ink set according to claim 12 which includes:

- a cyan UV curable inkjet ink containing a beta-copper phthalocyanine pigment;
- a red or magenta UV curable inkjet ink containing a pigment selected from the group consisting of C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272, C.I. Pigment Violet 19, and mixed crystals thereof;
- a yellow UV curable inkjet ink containing a pigment selected from C.I. Pigment Yellow 74 C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 and mixed crystals thereof; and
- a black UV curable inkjet ink containing a carbon black pigment; optionally complemented by a white UV curable inkjet ink and/or a colourless UV curable inkjet ink.

**14.** A cured product, wherein the cured product is formed by UV LED curing one or more UV curable inkjet inks according to any one of claims 1 to 13.

**15.** An inkjet printing method comprising the steps of:

a) jetting an image with a UV curable inkjet ink according to any one of claims 1 to 13 on a substrate; and
b) curing the jetted image by UV light emitting diodes having an emission wavelength of 360 nm or larger

## Patentansprüche

**1.** Eine UV-härtbare Tintenstrahltinte, enthaltend eine durch freie Radikale polymerisierbare Verbindung und einen Fotoinitiator, der 2 bis 6 Monoacylphosphinoxid-Reste enthält, **dadurch gekennzeichnet, dass** die Monoacylphosphinoxid-Reste über ihre Acylgruppe miteinander verbunden sind und mindestens 2 Monoacylphosphinoxid-Reste eine unterschiedliche chemische Struktur im Phosphinoxidteil aufweisen.

**2.** Die UV-härtbare Tintenstrahltinte nach Anspruch 1, wobei der Fotoinitiator 2 oder 3 Monoacylphosphinoxid-Reste enthält.

**3.** Die UV-härtbare Tintenstrahltinte nach Anspruch 1 oder 2, wobei die Verbindungsgruppe zwischen den Monoacylphosphinoxid-Resten eine durch freie Radikale polymerisierbare Gruppe umfasst.

**4.** Die UV-härtbare Tintenstrahltinte nach einem der Ansprüche 1 bis 3, wobei der Fotoinitiator eine Struktur gemäß Formel (1) hat:

$$[A]_y\text{-}L - [B]_x \qquad \text{Formel (1),}$$

in der

x und y unabhängig voneinander eine ganze Zahl von 1 bis 3 bedeuten,
L eine (x+y)-valente Verbindungsgruppe mit nicht mehr als 25 Kohlenstoffatomen bedeutet,
A ein Acylphosphinoxid gemäß Formel (1-1) bedeutet:

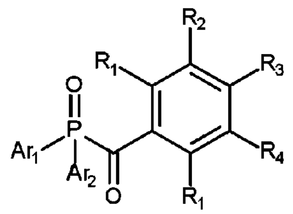

Formel (1-1),

in der

$Ar_1$ und $Ar_2$ unabhängig voneinander eine substituierte oder nicht-substituierte Arylgruppe oder Heteroarylgruppe bedeuten,
$R_1$ aus der Gruppe bestehend aus einer substituierten oder nicht-substituierten Alkylgruppe, einer substituierten oder nicht-substituierten Arylgruppe und einer substituierten oder nicht-substituierten Alkoxygruppe ausgewählt wird, und
$R_2$, $R_3$ und $R_4$ unabhängig voneinander aus der Gruppe bestehend aus der Bindungsstelle an L oder einem Substituenten, ausgewählt aus der Gruppe bestehend aus Wasserstoff, einer substituierten oder nicht-substituierten Alkylgruppe, einer substituierten oder nicht-substituierten Alkenylgruppe, einer substituierten oder nicht-substituierten Alkynylgruppe, einer substituierten oder nicht-substituierten Alkoxygruppe und einer substituierten oder nicht-substituierten Arylgruppe oder Heteroarylgruppe, ausgewählt werden,
B einen Acylphosphinoxidrest gemäß Formel (1-2) bedeutet:

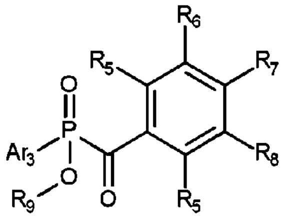

Formel (1-2),

in der

$Ar_3$ eine substituierte oder nicht-substituierte Arylgruppe oder Heteroarylgruppe bedeutet,
$R_5$ aus der Gruppe bestehend aus einer substituierten oder nicht-substituierten Alkylgruppe, einer substituierten oder nicht-substituierten Arylgruppe und einer substituierten oder nicht-substituierten Alkoxygruppe ausgewählt wird,
$R_6$, $R_7$ und $R_8$ unabhängig voneinander aus der Gruppe bestehend aus der Bindungsstelle an L oder einem Substituenten, ausgewählt aus der Gruppe bestehend aus Wasserstoff, einer substituierten oder nicht-substituierten Alkylgruppe, einer substituierten oder nicht-substituierten Alkenylgruppe, einer substituierten oder
nicht-substituierten Alkynylgruppe, einer substituierten oder nicht-substituierten Alkoxygruppe und einer substituierten oder nicht-substituierten Arylgruppe oder Heteroarylgruppe, ausgewählt werden, und
$R_9$ eine substituierte oder nicht-substituierte Alkylgruppe, eine substituierte oder nicht-substituierte Alkenylgruppe, eine substituierte oder nicht-substituierte Alkynylgruppe und eine substituierte oder nicht-substituierte Arylgruppe oder Heteroarylgruppe bedeutet.

**5.** Die UV-härtbare Tintenstrahltinte nach Anspruch 4, wobei das Molekulargewichtsverhältnis zwischen einerseits A und B und anderseits L folgende Gleichung erfüllt: $(x * Mw(A) + y * Mw(B))/ Mw(L) \geq 1,5$.

**6.** Die UV-härtbare Tintenstrahltinte nach einem der Ansprüche 1 bis 3, wobei der Fotoinitiator eine Struktur gemäß Formel (2) hat:

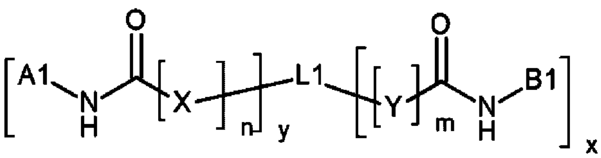

Formel (2),

in der

n und m unabhängig voneinander 0 oder 1 bedeuten,
x und y unabhängig voneinander eine ganze Zahl von 1 bis 3 bedeuten,
L1 eine (x+y)-valente Verbindungsgruppe mit nicht mehr als 25 Kohlenstoffatomen bedeutet,
X und Y unabhängig voneinander O oder NH bedeuten,
A1 einen Acylphosphinoxidrest gemäß Formel (2-1) bedeutet:

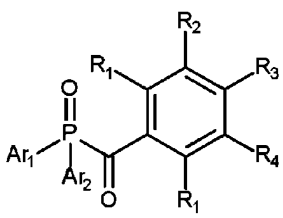

Formel (2-1),

in der $Ar_1$ und $Ar_2$ unabhängig voneinander eine substituierte oder nicht-substituierte Arylgruppe oder Heteroarylgruppe bedeuten, $R_1$ aus der Gruppe bestehend aus einer substituierten oder nicht-substituierten Alkylgruppe, einer substituierten oder nicht-substituierten Arylgruppe und einer substituierten oder nicht-substituierten Alkoxygruppe ausgewählt wird, $R_2$, $R_3$ und $R_4$ unabhängig voneinander aus der Gruppe bestehend aus der Bindungsstelle an N oder einem Substituenten, ausgewählt aus der Gruppe bestehend aus Wasserstoff, einer substituierten oder nicht-substituierten Alkylgruppe, einer substituierten oder nicht-substituierten Alkenylgruppe, einer substituierten oder nicht-substituierten Alkynylgruppe, einer substituierten oder nicht-substituierten Alkoxygruppe und einer substituierten oder nicht-substituierten Arylgruppe oder Heteroarylgruppe, ausgewählt werden,

B1 einen Acylphosphinoxidrest gemäß Formel (2-2) bedeutet:

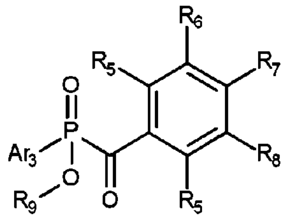

Formel (2-2),

in der $Ar_3$ eine substituierte oder nicht-substituierte Arylgruppe oder Heteroarylgruppe bedeutet, $R_5$ aus der Gruppe bestehend aus einer substituierten oder nicht-substituierten Alkylgruppe, einer substituierten oder nicht-substituierten Arylgruppe und einer substituierten oder nicht-substituierten Alkoxygruppe ausgewählt wird, $R_6$, $R_7$ und $R_8$ unabhängig voneinander aus der Gruppe bestehend aus der Bindungsstelle an N oder einem Substituenten, ausgewählt aus der Gruppe bestehend aus Wasserstoff, einer substituierten oder nicht-substituierten Alkylgruppe, einer substituierten oder nicht-substituierten Alkenylgruppe, einer substituierten oder nicht-substituierten Alkynylgruppe, einer substituierten oder nicht-substituierten Alkoxygruppe und einer substituierten oder nicht-substituierten Arylgruppe oder Heteroarylgruppe, ausgewählt werden, $R_9$ eine substituierte oder nicht-substituierte Alkylgruppe, eine substituierte oder nicht-substituierte Alkenylgruppe, eine substituierte oder nicht-substituierte Alkynylgruppe und eine substituierte oder nicht-substituierte Arylgruppe oder Heteroarylgruppe bedeutet.

**7.** Die UV-härtbare Tintenstrahltinte nach einem der Ansprüche 4 a 6, wobei die Verbindungsgruppe L oder L1 mindestens eine Etherfunktion oder eine tertiäre Aminogruppe umfasst.

**8.** Die UV-härtbare Tintenstrahltinte nach Anspruch 1, wobei der Fotoinitiator ausgewählt wird aus der Gruppe bestehend aus:

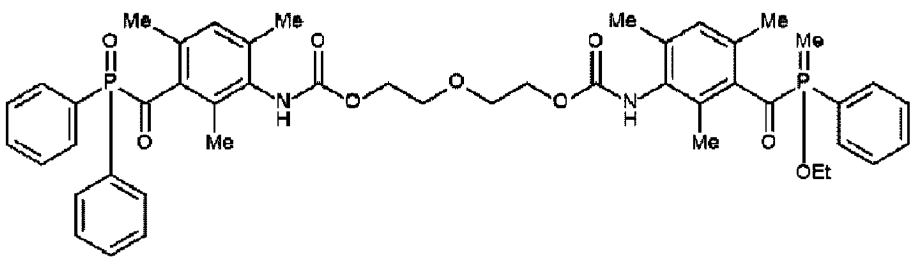

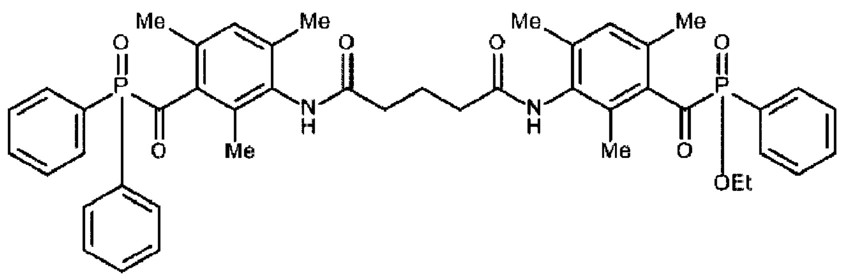

,

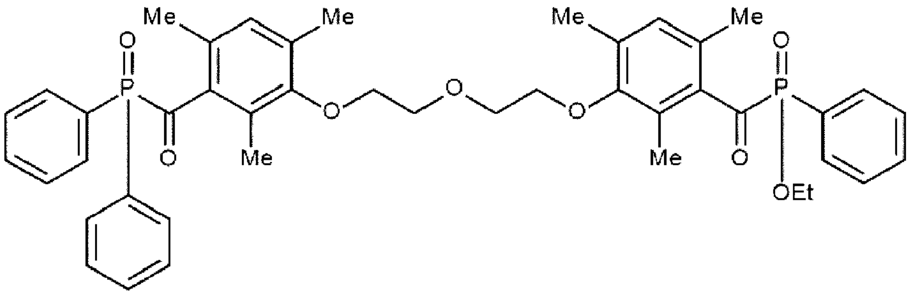

,

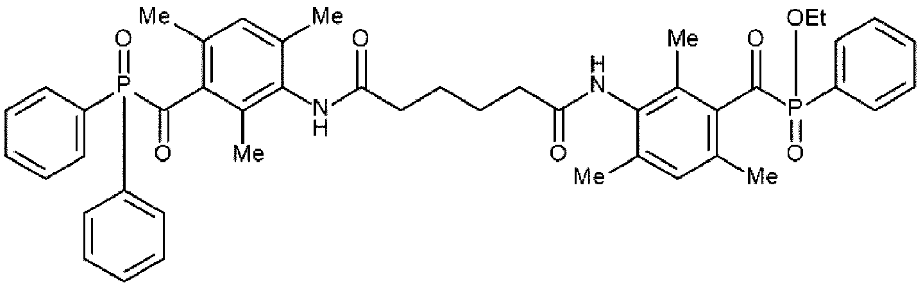

,

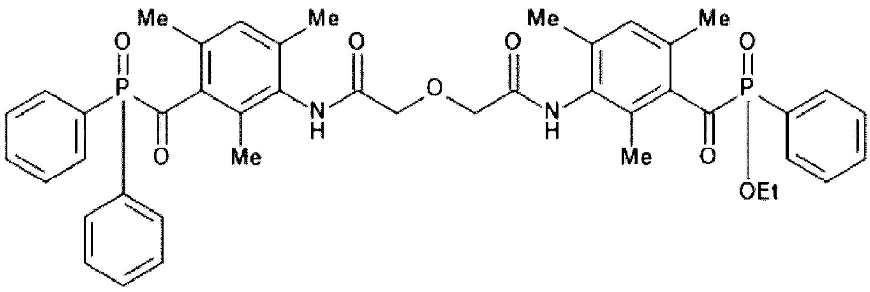

,

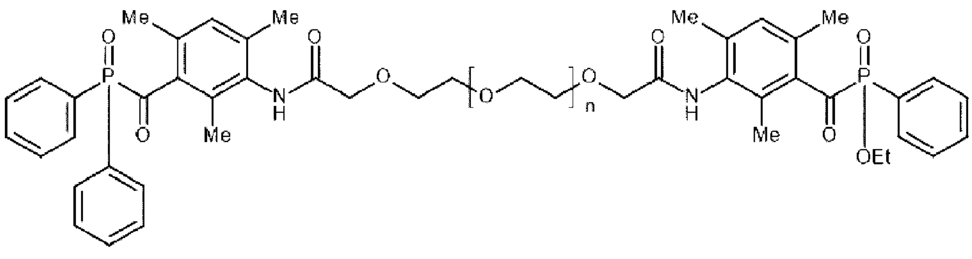

n = 2 durchschnittlich,

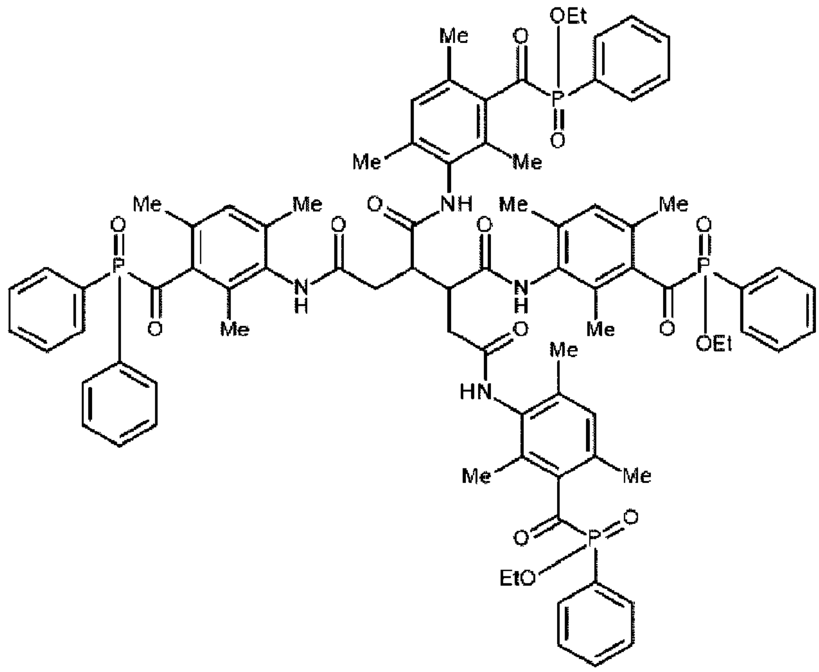

,

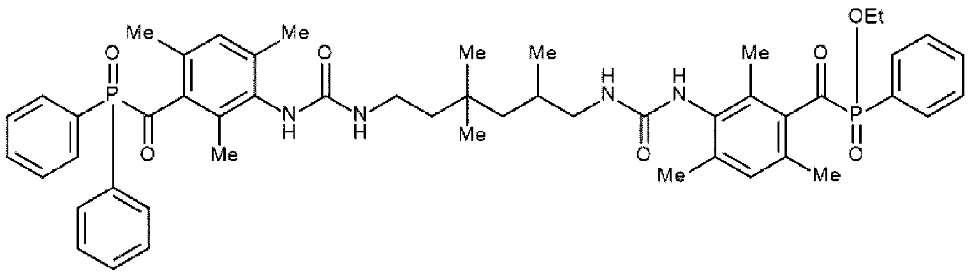

,

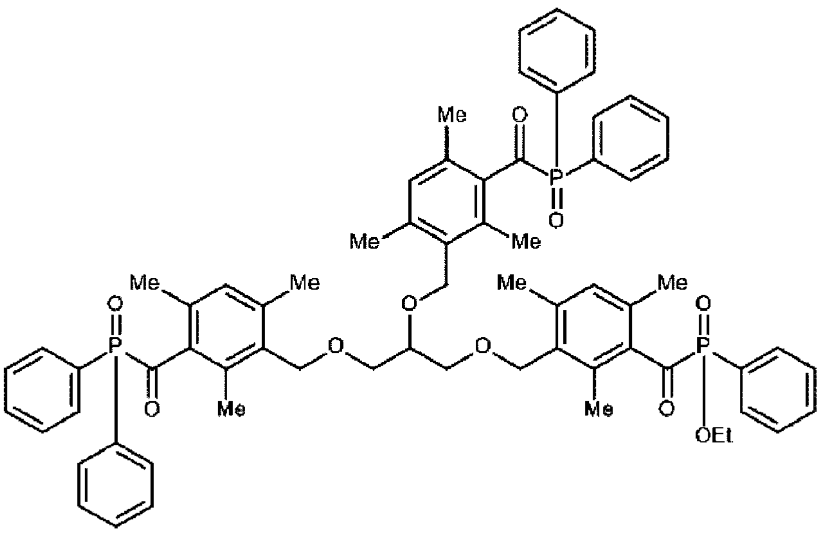

,

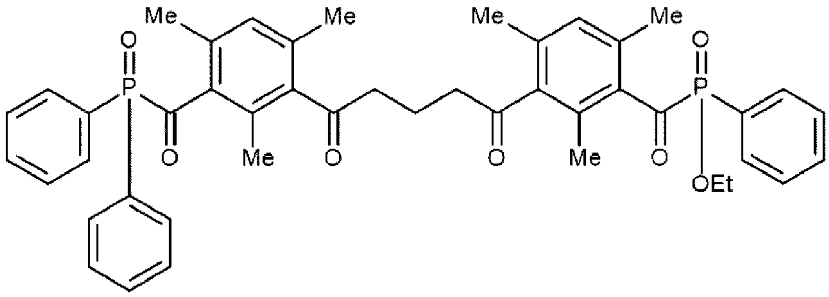

,

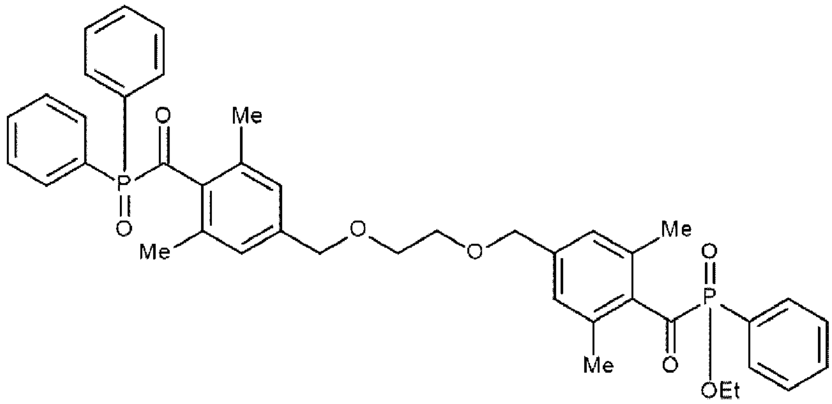

,

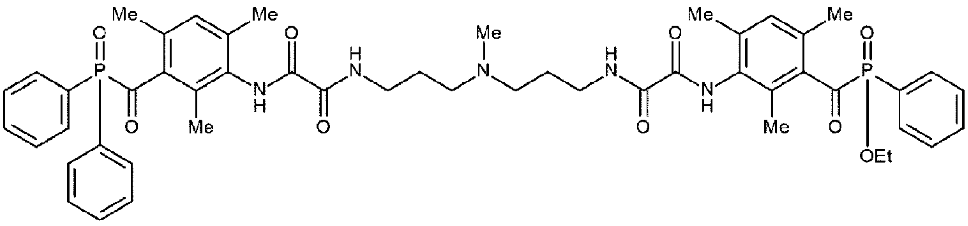

,

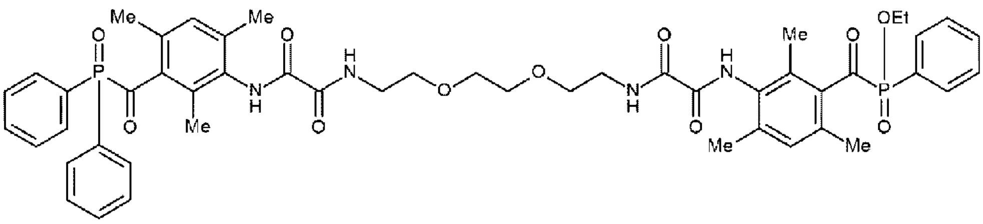

,

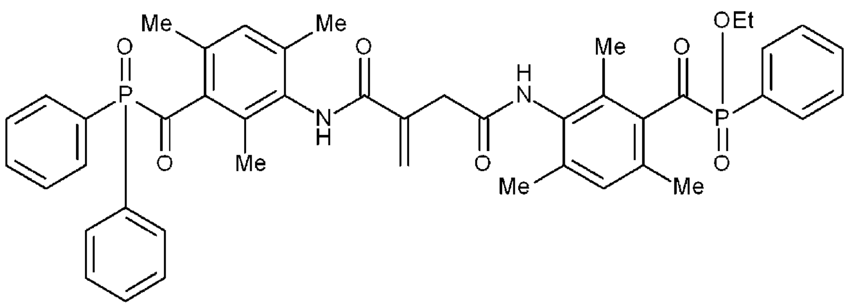

,

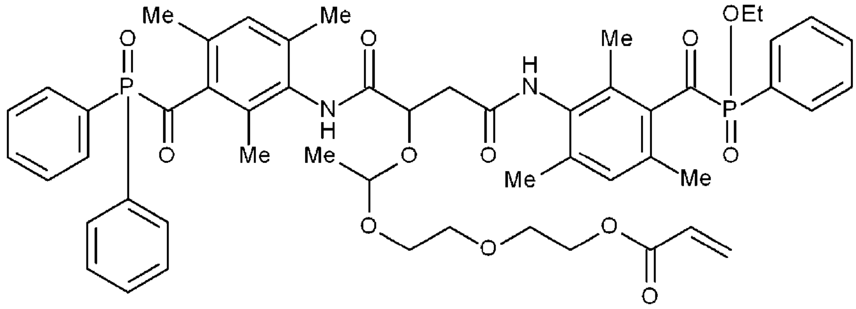

,

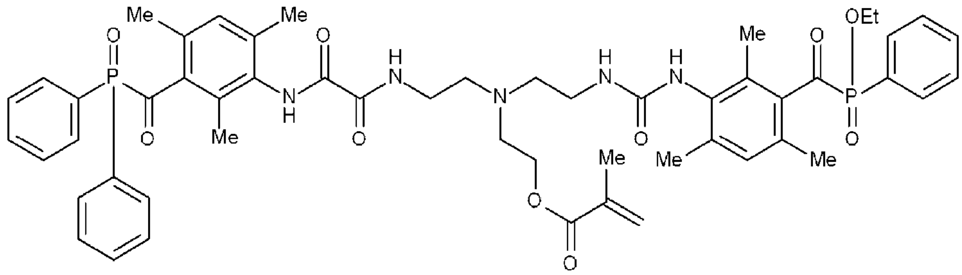

,

und

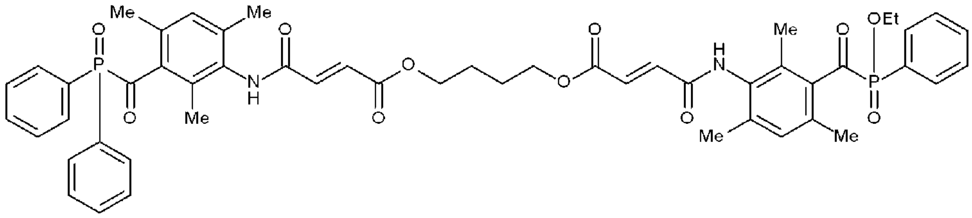

.

**9.** Die UV-härtbare Tintenstrahltinte nach Anspruch 4 oder 6, wobei der Fotoinitiator gemäß Formel (1), in der x und y die ganze Zahl 1 bedeuten, Teil des Gemisches ist, das die Fotoinitiatoren gemäß Formel (1-a), Formel (1-b) und Formel (1-c) enthält, in denen die Gruppen A, B und L wie für den Fotoinitiator gemäß Formel (1) definiert sind, wobei Formel (1-a) A-L-B bedeutet, Formel (1-b) A-L-A bedeutet und Formel (1-c) B-L- bedeutet, und wobei das Gemisch zwischen 20 mol-% und 80 mol-% des Fotoinitiators gemäß Formel (1-a) enthält,
oder wobei der Fotoinitiator gemäß Formel (2), in der x und y die ganze Zahl 1 bedeuten, Teil eines Gemisches von Fotoinitiatoren ist, das die Fotoinitiatoren gemäß Formel (2-a), Formel (2-b) und Formel (2-c) enthält, wobei die Gruppen A' A-NH-C(=O)-$(X)_n$-bedeuten, die Gruppen B' B-NH-C(=O)-$(Y)_m$- bedeuten und L1 wie für den Fotoinitiator gemäß Formel (2) definiert ist, wobei Formel (2-a) A'-L1-B' bedeutet, Formel (2-b) A'-L1-A' bedeutet und Formel (2-c) B'-L1-B' bedeutet, und wobei das Gemisch zwischen 20 mol-% und 80 mol-% des Fotoinitiators gemäß Formel (2-a) enthält.

**10.** Die UV-härtbare Tintenstrahltinte nach einem der Ansprüche 1 bis 9, wobei die polymerisierbare Zusammensetzung der UV-härtbaren Tintenstrahltinte Folgendes enthält:

a) zwischen 25 Gew.-% und 100 Gew.-% einer oder mehrerer polymerisierbarer Verbindungen A, die mindestens eine Acrylatgruppe und mindestens eine zweite polymerisierbare Gruppe, ausgewählt aus der Gruppe bestehend aus einer Vinylethergruppe, einer Allylethergruppe und einer Allylestergruppe, enthalten,
b) zwischen 0% Gew.-% und 55 Gew.-% einer oder mehrerer polymerisierbarer Verbindungen B, ausgewählt aus der Gruppe bestehend aus monofunktionellen Acrylaten und difunktionellen Acrylaten, und
c) zwischen 0% Gew.-% und 55 Gew.-% einer oder mehrerer polymerisierbarer Verbindungen C, ausgewählt aus der Gruppe bestehend aus trifunktionellen Acrylaten, tetrafunktionellen Acrylaten, pentafunktionellen Acrylaten und hexafunktionellen Acrylaten, mit der Maßgabe, dass bei einem Gewichtsprozentsatz der Verbindungen B von mehr als 24 Gew.-% der Gewichtsprozentsatz der Verbindungen C mehr als 1 Gew.-% beträgt, und

wobei alle Gewichtsprozentsätze der Verbindungen A, B und C bezogen auf das Gesamtgewicht der polymerisierbaren Zusammensetzung der UV-härtbaren Tintenstrahltinte angegeben sind.

**11.** Die UV-härtbare Tintenstrahltinte nach einem der Ansprüche 1 bis 10, die außerdem ein Pigment enthält.

**12.** Ein Satz UV-härtbarer Tintenstrahltinten, der eine oder mehrere UV-härtbare Tintenstrahltinten nach einem der Ansprüche 1 bis 10 enthält.

**13.** Der Satz UV-härtbarer Tintenstrahltinten nach Anspruch 12, enthaltend:

- eine UV-härtbare Cyan-Tintenstrahltinte, die ein ß-Kupferphthalocyaninpigment enthält,
- eine rote oder magentafarbige UV-härtbare Tintenstrahltinte, enthaltend ein Pigment, das aus der Gruppe bestehend aus C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272, C.I. Pigment Violet 19 und Mischkristallen derselben,
- eine gelbe UV-härtbare Tintenstrahltinte, enthaltend ein Pigment, das aus C.I. Pigment Yellow 74, C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 und Mischkristallen derselben ausgewählt wird, und
- eine schwarze UV-härtbare Tintenstrahltinte, enthaltend ein Rußpigment, gegebenenfalls ergänzt um eine weiße UV-härtbare Tintenstrahltinte und/oder eine farblose UV-härtbare Tintenstrahltinte.

**14.** Ein gehärtetes Produkt, wobei das gehärtete Produkt durch UV-LED-Härtung einer oder mehrerer UV-härtbarer Tintenstrahltinten nach einem der Ansprüche 1 bis 13 gebildet wird.

**15.** Ein Tintenstrahldruckverfahren, das die folgenden Schritte umfasst:

a) Aufsprühen eines Bildes auf ein Substrat unter Verwendung einer oder mehrerer UV-härtbarer Tintenstrahltinten nach einem der Ansprüche 1 bis 13, und
b) Härtung des aufgesprühten Bildes mittels UV-Licht mit einer Emissionswellenlänge von mindestens 360 nm emittierender Dioden.

## Revendications

**1.** Encre pour jet d'encre durcissable par rayonnement UV contenant un composé polymérisable par radicaux libres et un photoinitiateur contenant 2 à 6 groupements d'oxyde de monoacylphosphine, **caractérisée en ce que** les groupements d'oxyde de monoacylphosphine sont liés entre eux par leur groupe acyle et qu'au moins 2 groupements d'oxyde de monoacylphosphine ont une structure chimique différente dans la partie d'oxyde de phosphine.

**2.** Encre pour jet d'encre durcissable par rayonnement UV selon la revendication 1, **caractérisée en ce que** le photoinitiateur contient 2 ou 3 groupements d'oxyde de monoacylphosphine.

**3.** Encre pour jet d'encre durcissable par rayonnement UV selon la revendication 1 ou 2, **caractérisée en ce que** le groupe de liaison entre les groupements d'oxyde de monoacylphosphine comprend un groupe polymérisable par radicaux libres.

**4.** Encre pour jet d'encre durcissable par rayonnement UV selon l'une quelconque des revendications 1 à 3, **caractérisée en ce que** le photoinitiateur a une structure répondant à la Formule (1):

$$[A]_y\text{-L - }[B]_x \qquad \text{Formule (1),}$$

où

x et y représentent, indépendamment l'un de l'autre, un nombre entier de 1 à 3,
L représente un groupe de liaison (x+y)-valent comprenant un maximum de 25 atomes de carbone,

A représente un oxyde d'acylphosphine répondant à la Formule (1-1) :

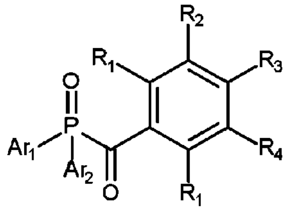

Formule (1-1),

où

$Ar_1$ et $Ar_2$ représentent, indépendamment l'un de l'autre, un groupe aryle ou hétéroaryle substitué ou non substitué,
$R_1$ est choisi parmi le groupe composé d'un groupe alkyle substitué ou non substitué, d'un groupe aryle substitué ou non substitué et d'un groupe alcoxy substitué ou non substitué, et
$R_2$, $R_3$ et $R_4$ sont choisis, indépendamment l'un de l'autre, parmi le groupe composé du site de liaison à L ou d'un substituant choisi parmi le groupe composé d'hydrogène, d'un groupe alkyle substitué ou non substitué, d'un groupe alcényle substitué ou non substitué, d'un groupe alcynyle substitué ou non substitué, d'un groupe alcoxy substitué ou non substitué et d'un groupe aryle ou hétéroaryle substitué ou non substitué,
B représente un groupement d'oxyde d'acylphosphine répondant à la Formule (1-2):

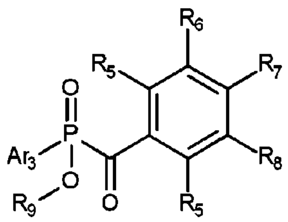

Formule (1-2),

où

$Ar_3$ représente un groupe aryle ou hétéroaryle substitué ou non substitué,
$R_5$ est choisi parmi le groupe composé d'un groupe alkyle substitué ou non substitué, d'un groupe aryle substitué ou non substitué et d'un groupe alcoxy substitué ou non substitué, $R_6$, $R_7$ et $R_8$ sont choisis, indépendamment l'un de l'autre, parmi le groupe composé du site de liaison à L ou d'un substituant choisi parmi le groupe composé d'hydrogène, d'un groupe alkyle substitué ou non substitué, d'un groupe alcényle substitué ou non substitué, d'un groupe alcynyle substitué ou non substitué, d'un groupe alcoxy substitué ou non substitué et d'un groupe aryle ou hétéroaryle substitué ou non substitué, et
$R_9$ représente un groupe alkyle substitué ou non substitué, un groupe alcényle substitué ou non substitué, un groupe alcynyle substitué ou non substitué et un groupe aryle ou hétéroaryle substitué ou non substitué.

**5.** Encre pour jet d'encre durcissable par rayonnement UV selon la revendication 4, **caractérisée en ce que** le rapport de poids moléculaire entre, d'une part, A et B et, d'autre part, L satisfait l'équation suivante: $(x * Mw(A) + y * Mw(B))/Mw(L) \geq 1,5$.

**6.** Encre pour jet d'encre durcissable par rayonnement UV selon l'une quelconque des revendications 1 à 3, **caractérisée en ce que** le photoinitiateur a une structure répondant à la Formule (2):

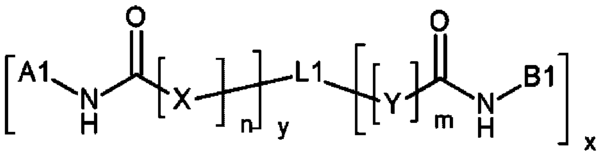

Formule (2),

où

n et m représentent, indépendamment l'un de l'autre, 0 ou 1,
x et y représentent, indépendamment l'un de l'autre, un nombre entier de 1 à 3,
L1 représente un groupe de liaison (x+y)-valent comprenant un maximum de 25 atomes de carbone,
X et Y représentent, indépendamment l'un de l'autre, O ou NH, A1 représente un groupement d'oxyde d'acylphosphine répondant à la Formule (2-1):

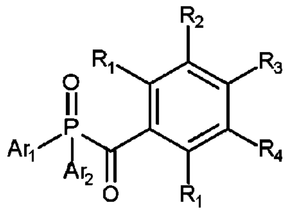

Formule (2-1),

où $Ar_1$ et $Ar_2$ représentent, indépendamment l'un de l'autre, un groupe aryle ou hétéroaryle substitué ou non substitué, $R_1$ est choisi parmi le groupe composé d'un groupe alkyle substitué ou non substitué, d'un groupe aryle substitué ou non substitué et d'un groupe alcoxy substitué ou non substitué, $R_2$, $R_3$ et $R_4$ sont choisis, indépendamment l'un de l'autre, parmi le groupe composé du site de liaison à N ou d'un substituant choisi parmi le groupe composé d'hydrogène, d'un groupe alkyle substitué ou non substitué, d'un groupe alcényle substitué ou non substitué, d'un groupe alcynyle substitué ou non substitué, d'un groupe alcoxy substitué ou non substitué et d'un groupe aryle ou hétéroaryle substitué ou non substitué,
B1 représente un groupement d'oxyde d'acylphosphine répondant à la Formule (2-2):

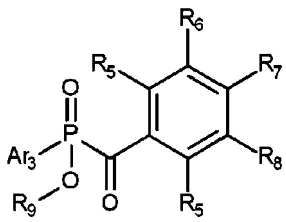

Formule (2-2),

où $Ar_3$ représente un groupe aryle ou hétéroaryle substitué ou non substitué, $R_5$ est choisi parmi le groupe composé d'un groupe alkyle substitué ou non substitué, d'un groupe aryle substitué ou non substitué et d'un groupe alcoxy substitué ou non substitué, $R_6$, $R_7$ et $R_8$ sont choisis, indépendamment l'un de l'autre, parmi le groupe composé du site de liaison à N ou d'un substituant choisi parmi le groupe composé d'hydrogène, d'un groupe alkyle substitué ou non substitué, d'un groupe alcényle substitué ou non substitué, d'un groupe alcynyle substitué ou non substitué, d'un groupe alcoxy substitué ou non substitué et d'un groupe aryle ou hétéroaryle substitué ou non substitué, $R_9$ représente un groupe alkyle substitué ou non substitué, un groupe alcényle substitué ou non substitué, un groupe alcynyle substitué ou non substitué et un groupe aryle ou hétéroaryle substitué ou non substitué.

7. Encre pour jet d'encre durcissable par rayonnement UV selon l'une quelconque des revendications 4 a 6, **caractérisée en ce que** le groupe de liaison L ou L1 comprend au moins une fonction éther ou un groupe amine tertiaire.

8. Encre pour jet d'encre durcissable par rayonnement UV selon la revendication 1, **caractérisée en ce que** le photoinitiateur est choisi parmi le groupe composé de:

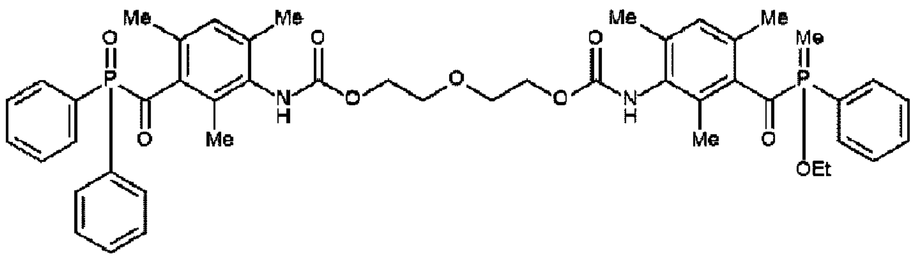

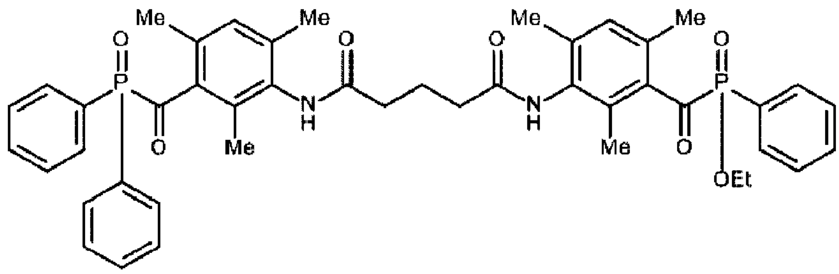

,

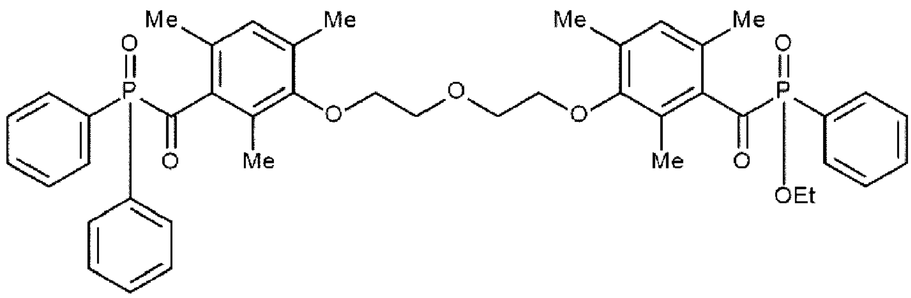

,

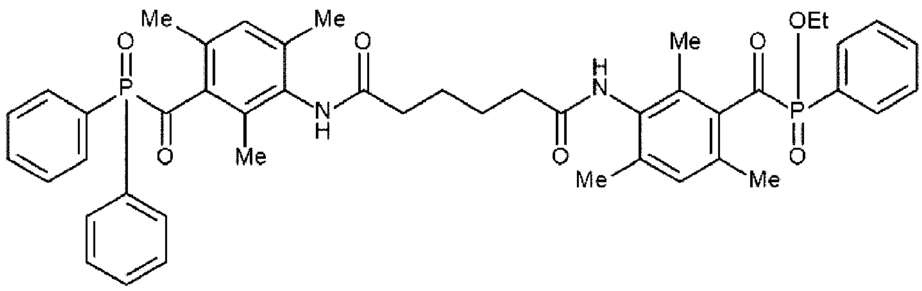

,

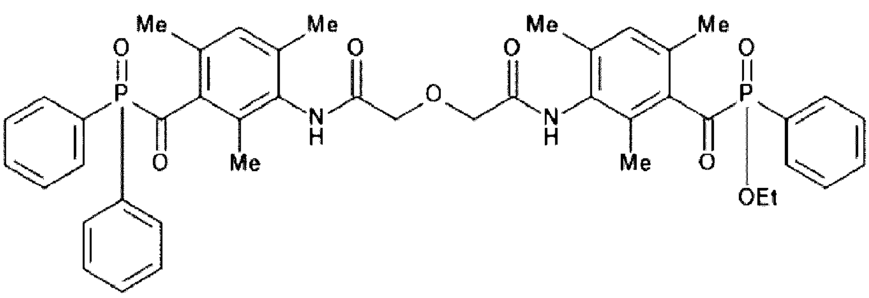

,

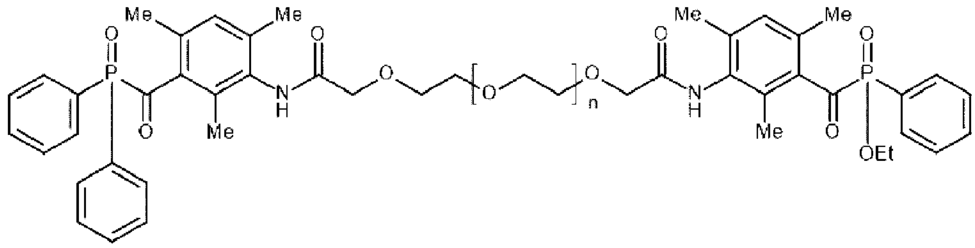

n = 2 en moyenne,

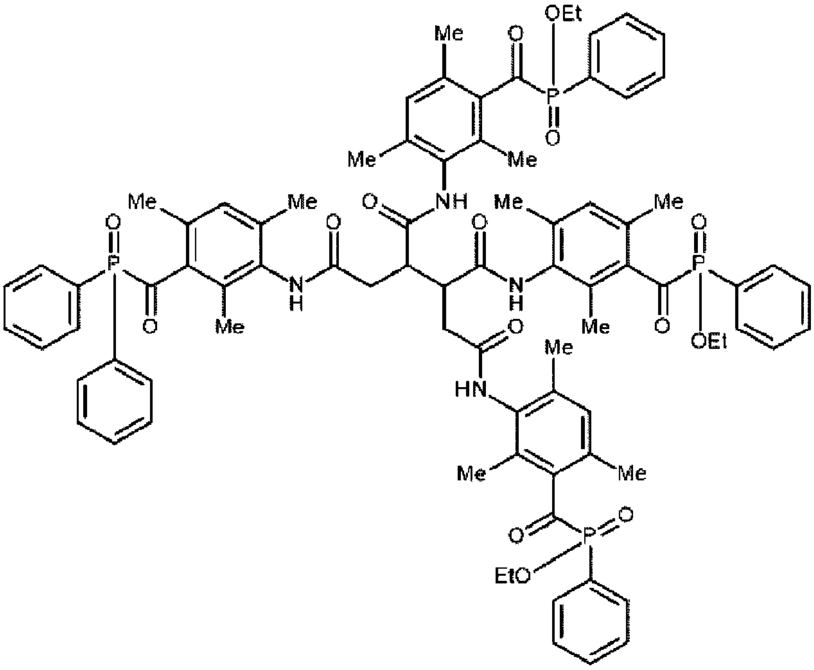

,

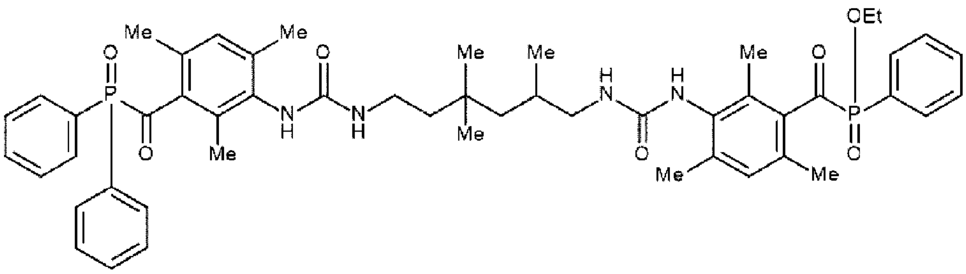

,

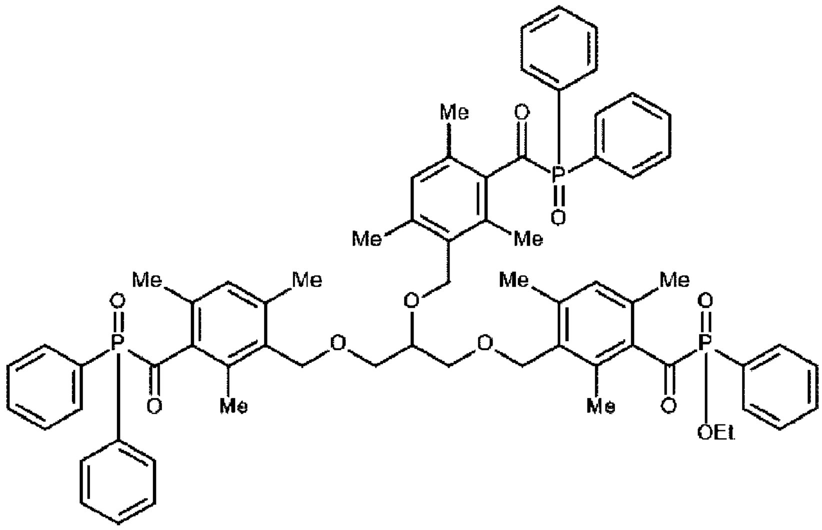

,

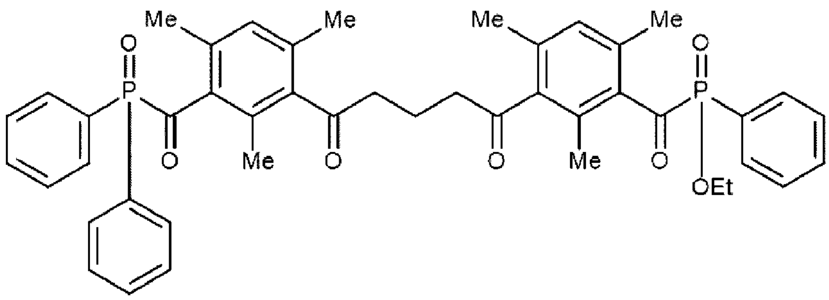

,

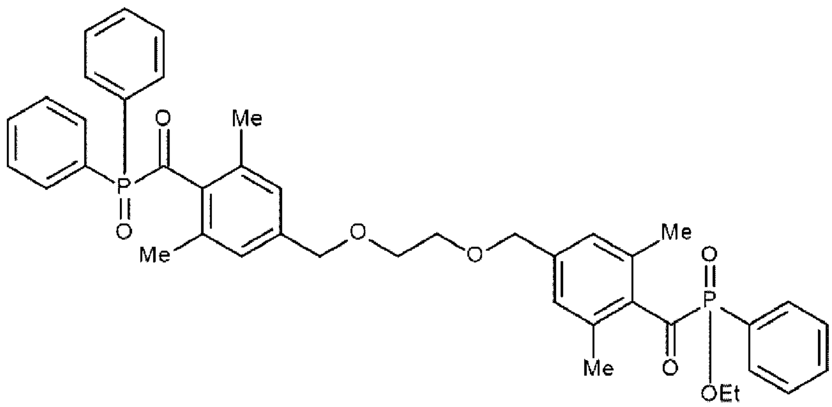

,

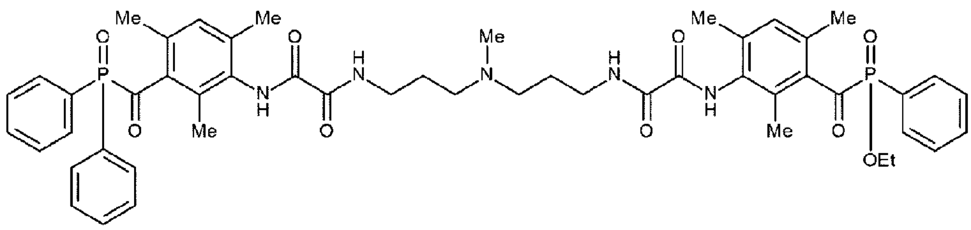

,

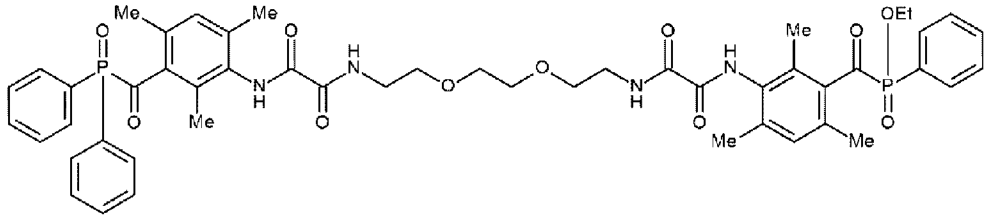

,

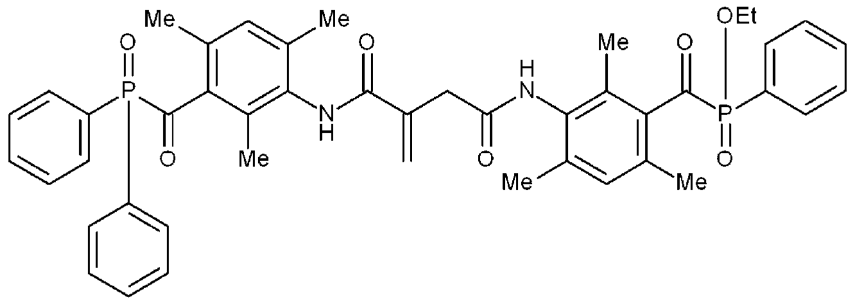

,

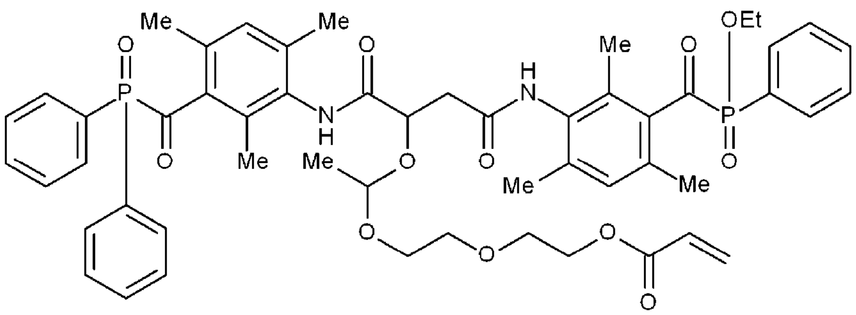

,

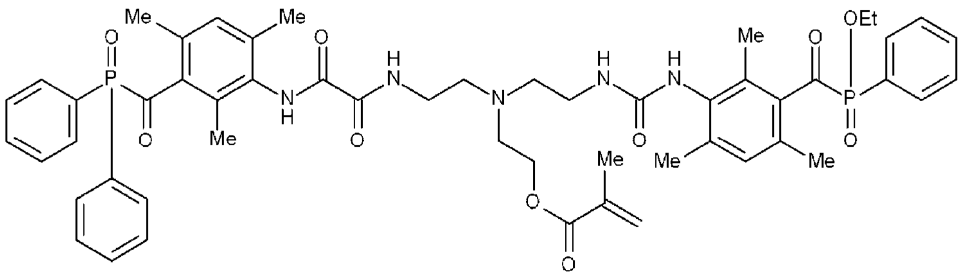

,

et

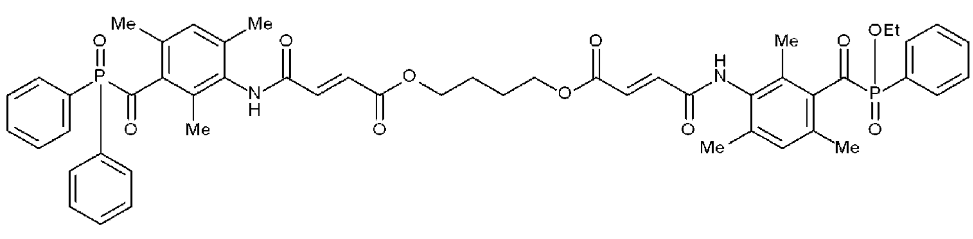

.

9. Encre pour jet d'encre durcissable par rayonnement UV selon la revendication 4 ou 6, **caractérisée en ce que** le photoinitiateur répondant à la Formule (1), où x et y représentent le nombre entier, fait partie du mélange contenant les photoinitiateurs répondant à la Formule (1-a), la Formule (1-b) et la Formule (1-c), où les groupes A, B et L sont tels que définis pour le photoinitiateur répondant à la Formule (1), où la Formule (1-a) représente A-L-B, la Formule (1-b)

représente A-L-A et la Formule (1-c) représente B-L-B, et **caractérisée en ce que** le mélange contient entre 20 moles % et 80 moles % du photoinitiateur répondant à la Formule (1-a), ou **caractérisée en ce que** le photoinitiateur répondant à la Formule (2), où x et y représentent le nombre entier 1, fait partie d'un mélange de photoinitiateurs contenant les photoinitiateurs répondant à la Formule (2a), la Formule (2-b) et la Formule (2-c), où les groupes A' représentent A-NH-C(=O)-$(X)_n$-, les groupes B' représentent B-NH-C(=O)-$(Y)_m$- et L1 est tel que défini pour le photoinitiateur répondant à la Formule (2), où la Formule (2-a) représente A'-L1-B', la Formule (2-b) représente A'-L1-A' et la Formule (2-c) représente B'-L1-B', et **caractérisée en ce que** le mélange contient entre 20 moles % et 80 moles % du photoinitiateur répondant à la Formule (2-a).

**10.** Encre pour jet d'encre durcissable par rayonnement UV selon l'une quelconque des revendications 1 à 9, **caractérisée en ce que** la composition polymérisable de l'encre pour jet d'encre durcissable par rayonnement UV contient:

a) entre 25% en poids et 100% en poids d'un ou de plusieurs composés polymérisables A contenant au moins un groupe acrylate et au moins un deuxième groupe polymérisable choisi parmi le groupe composé d'un groupe éther vinylique, d'un groupe éther allylique er d'un groupe ester allylique,
b) entre 0% en poids et 55% en poids d'un ou de plusieurs composés polymérisables B choisis parmi le groupe composé d'acrylates monofonctionnels et d'acrylates difonctionnels, et
c) entre 0% en poids et 55% en poids d'un ou de plusieurs composés polymérisables C choisis parmi le groupe composé d'acrylates trifonctionnels, d'acrylates tétrafonctionnels, d'acrylates pentafonctionnels et d'acrylates hexafonctionnels, à condition que, si le pourcentage en poids des composés B > 24% en poids, le pourcentage en poids des composés C > 1%, et où tous les pourcentages en poids des composés A, B et C sont exprimés par rapport au poids total de la composition polymérisable de l'encre pour jet d'encre durcissable par rayonnement UV.

**11.** Encre pour jet d'encre durcissable par rayonnement UV selon l'une quelconque des revendications 1 à 10 contenant en outre un pigment.

**12.** Ensemble d'encres pour jet d'encre durcissables par rayonnement UV contenant une ou plusieurs encres pour jet d'encre durcissables par rayonnement UV selon l'une quelconque des revendications 1 à 10.

**13.** Ensemble d'encres pour jet d'encre durcissables par rayonnement UV selon la revendication 12 contenant:

- une encre pour jet d'encre durcissable par rayonnement UV de couleur cyan contenant un pigment de β-phtalocyanine de cuivre,
- une encre pour jet d'encre durcissable par rayonnement UV de couleur rouge ou magenta contenant un pigment choisi parmi le groupe composé de C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272, C.I. Pigment Violet 19 et de cristaux mixtes de ceux-ci,
- une encre pour jet d'encre durcissable par rayonnement UV de couleur jaune contenant un pigment choisi parmi C.I. Pigment Yellow 74, C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 et des cristaux mixtes de ceux-ci, et
- une encre pour jet d'encre durcissable par rayonnement UV de couleur noire contenant un pigment de noir de carbone, complété éventuellement par une encre pour jet d'encre durcissable par rayonnement UV de couleur blanche et/ou une encre pour jet d'encre durcissable par rayonnement UV incolore.

**14.** Produit durci, **caractérisé en ce que** le produit durci est formé en effectuant un durcissement par diodes LED UV d'une ou de plusieurs encres pour jet d'encre durcissables par rayonnement UV selon l'une quelconque des revendications 1 à 13.

**15.** Procédé d'impression à jet d'encre comprenant les étapes consistant à:

a) projeter une image sur un substrat en utilisant une ou plusieurs d'encres pour jet d'encre durcissables par rayonnement UV selon l'une quelconque des revendications 1 à 13, et
b) durcir l'image projetée au moyen de diodes émettant de la lumière UV ayant une longueur d'onde d'émission

d’au moins 360 nm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014051026 A
- WO 2014129213 A
- WO 2019243039 A
- WO 2022106099 A
- US 6310115 B
- US 67679890 B
- WO 0100634 A
- EP 1790698 A
- EP 1790696 A
- WO 2007060255 A
- EP 1790695 A
- EP 2851402 A
- WO 2017191043 A
- WO 2022106100 A


### Non-patent literature cited in the description


- Polymer Handbook. Wiley-Interscience, 1999, vol. 1,2
- **HURD, CHARLES D.** Vinylation and the Formation of Acylals.. *Journal Am. Chem.Soc.*, 1956, vol. 78 (1), 104-106
- **LOBELL, M. et al.** Synthesis of hydroxycarboxylic acid vinyl esters.. *MP Synthesis.*, 1994, vol. 4, 375-377
- **LEE, T. Y. et al.** Synthesis, Initiation, and Polymerization of Photoinitiating Monomer.. *Macromolecules.*, 2005, vol. 38 (18), 7529-7531
- **ATTA, A.M. et al.** New vinyl ester resins based on rosin for coating applications.. *React. Funct. Polym..*, 2006, vol. 66, 1596-1608
- **ROHR, MARKUS et al.** Solvent-free ruthenium-catalysed vinylcarbamate synthesis from phenylacetylene and diethylamine in 'supercritical' carbon dioxide.. *Green Chemistry.*, 2001, vol. 3, 123-125
- **CRIVELLO, J.V. et al.** Photoinitiators for Free Radical Cationic. John Wiley and Sons Ltd, 1998, vol. III, 287-294
- **HERBST, WILLY et al.** Industrial Organic Pigments, Production, Properties, Applications. Wiley - VCH, 2004
- *CHEMICAL ABSTRACTS*, 75980-60-8
- *CHEMICAL ABSTRACTS*, 2143083-29-6
- *CHEMICAL ABSTRACTS*, RN2771298-79-2
- *CHEMICAL ABSTRACTS*, 2771298-80-5
- *CHEMICAL ABSTRACTS*, 2404565-44-0
- *CHEMICAL ABSTRACTS*, 84434-11-7
- *CHEMICAL ABSTRACTS*, 128-30-0